# EUROPEAN PATENT SPECIFICATION

(11) **EP 4 432 775 B1**
(45) Date of publication and mention of the grant of the patent: **28.01.2026**
(21) Application number: 21965225.2
(22) Date of filing: 26.11.2021
(51) Int. Cl.: H04W 92/10, H04W 92/20, H04B 7/024

(54) **WIRELESS COMMUNICATION METHOD AND DEVICE**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 18.09.2024
(73) Proprietor: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); HUANG, Lei, Singapore 049483 (SG); LUO, Chaoming, Dongguan, Guangdong 523860 (CN)
(74) Representative: Grassi, Stefano
(86) International application number: PCT/CN2021/133669
(87) International publication number: WO 2023/092492

(56) References cited:
- EP-A1- 4 072 206
- WO-A1-2016/056685
- WO-A1-2020/149717
- WO-A1-2020/185586
- WO-A1-2021/147787
- CN-A- 107 623 931
- CN-A- 109 922 506
- CN-A- 112 512 041
- US-A1- 2014 337 950
- US-A1- 2020 314 754
- US-A1- 2021 084 493
- US-A1- 2021 120 602
- US-A1- 2021 320 831

## Description

### TECHNICAL FIELD

Embodiments of the disclosure relate to the field of communication, and more particularly, to a method and device for wireless communication.

### BACKGROUND

In order to improve capability of an access point (AP), multi-AP coordination is introduced to improve transmission capability. A multi-AP candidate set is to be set up in multi-AP coordination. However, how a station (STA) discovers the multi-AP candidate set and how the STA associates with the multi-AP candidate set are problems urgently to be solved. Related technologies can be found in patent documents WO 2020/185586 A1 and US 2021/120602A1. Patent document WO 2020/185586 A1 provides a method for multiple access point (AP) transmission, which includes receiving a repetition beacon from each of a plurality of APs, each received repetition beacon comprising a common information part and an AP-specific information part; decoding at least a subset of the received common information parts to obtain a first parameter; decoding the received AP-specific information parts to obtain second parameter for each of the plurality of APs; performing a calculation based on the first parameter the obtained second parameters and a number of the plurality of APs to obtain a calculation result; and transmitting a feedback based on the calculation result to the plurality of AP. Patent document US 2021/120602A1 relates to Multi-link device (MLD) devices and transitions. The MAC addresses of the AP MLD and non-AP MLD are used to generate keys for different fast transitions (FT) between a non-AP MLD and an AP MLD. In an FT initial mobility domain operation, the AP MLD MAC address is used as the R1KH-ID and the non-AP MLD MAC address is used as the SOKH-ID and SIKH-ID. The MAC addresses are exchanged in Authentication Request/Response or Association Request Response messages and the GTK/IGTK/BIGTK are delivered in a single FT 4-way handshake.

### SUMMARY

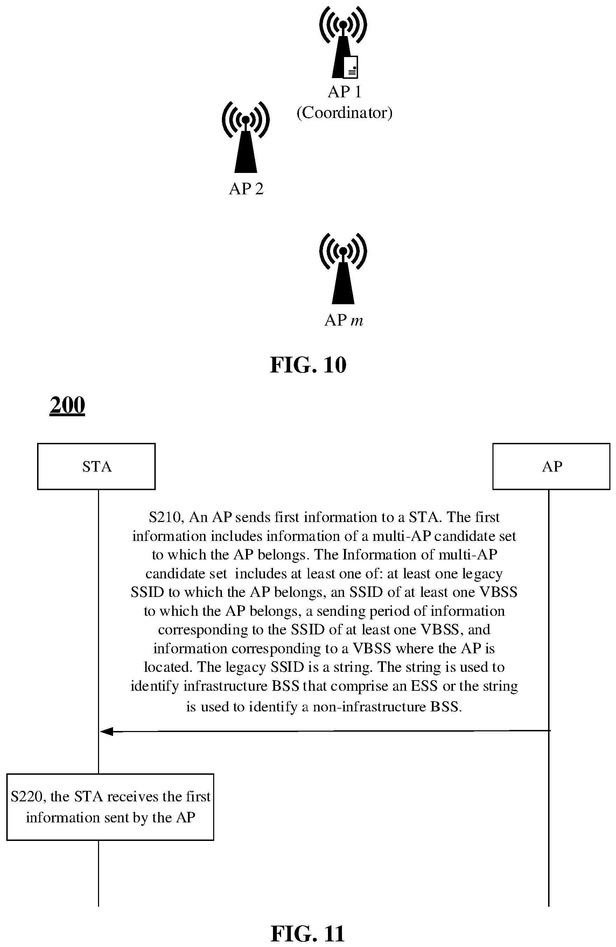

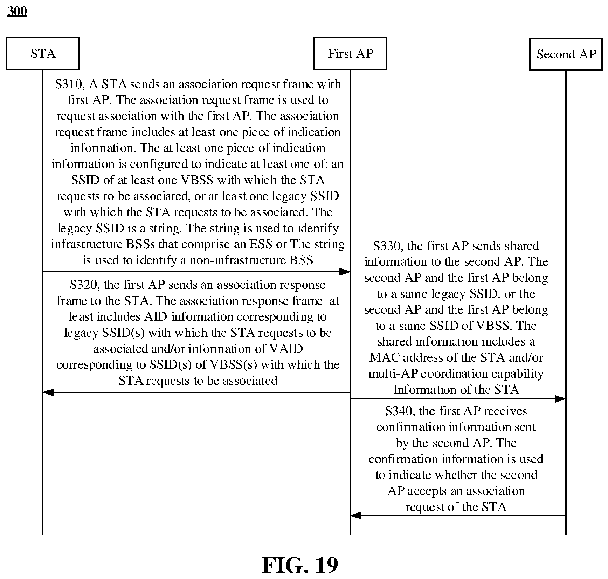

Embodiments of the disclosure provide a method and device for wireless communication, devising a solution for discovering a multi-AP candidate set by a STA and for associating the STA with the multi-AP candidate set, thereby implementing multi-AP coordinated transmission. The invention is set out in the claims. In the following, the invention is best understood in view of figures 11 and 19. The remaining embodiments, aspects and examples disclosed below are included for illustrative purposes and for facilitating the understanding of the invention.

### BRIEF DESCRIPTION OF THE DRAWINGS

FIG. 1 is a schematic diagram of a communication system architecture to which an embodiment of the disclosure is applied, which is not covered by the claims.
FIG. 2 is a schematic diagram of a multi-AP coordination capability of scanning neighboring APs by an AP provided in the disclosure.
FIG. 3 is a schematic diagram of setting up a multi-AP candidate set provided in the disclosure.
FIG. 4 is a schematic diagram of active scanning of a basic service set (BSS) by a STA provided in the disclosure.
FIG. 5 is a schematic diagram of a service set identifier (SSID) element provided in the disclosure.
FIG. 6 is a schematic diagram of an SSID list element provided in the disclosure.
FIG. 7 is a schematic diagram of passive scanning of a BSS by a STA provided in the disclosure.
FIG. 8 is a schematic diagram of requesting to be associated with a BSS by a STA provided in the disclosure.
FIG. 9 is a schematic diagram of architecture of wired multi-AP coordination provided in embodiments of the disclosure.
FIG. 10 is a schematic diagram of architecture of wireless multi-AP coordination according to embodiments of the disclosure.
FIG. 11 is a schematic flowchart of a method for wireless communication according to embodiments of the disclosure.
FIG. 12 is a schematic flowchart of active scanning of a multi-AP candidate set by a STA according to embodiments of the disclosure.
FIG. 13 is a schematic flowchart of passive scanning of a multi-AP candidate set by a STA according to embodiments of the disclosure.
FIG. 14 is a schematic diagram of a probe request frame according to embodiments of the disclosure.
FIG. 15 is a schematic diagram of another probe request frame according to embodiments of the disclosure.
FIG. 16 is a schematic diagram of a beacon frame or a probe response frame according to embodiments of the disclosure.
FIG. 17 is a schematic diagram of another beacon frame or probe response frame according to embodiments of the disclosure.
FIG. 18 is a schematic diagram of yet another beacon frame or probe response frame according to embodiments of the disclosure.
FIG. 19 is a schematic flowchart of another method for wireless communication according to embodiments of the disclosure.
Each of FIG. 20 to FIG. 27 is a schematic flowchart of requesting to be associated with a multi-AP candidate set by a STA according to embodiments of the disclosure.
FIG. 28 is a schematic diagram of an association request frame according to embodiments of the disclosure.
FIG. 29 is a schematic diagram of another association request frame according to embodiments of the disclosure.
FIG. 30 is a schematic diagram of yet another association request frame according to embodiments of the disclosure.
FIG. 31 is a schematic diagram of yet another association request frame according to embodiments of the disclosure.
FIG. 32 is a schematic diagram of an association response frame according to embodiments of the disclosure.
FIG. 33 is a schematic diagram of another association response frame according to embodiments of the disclosure.
FIG. 34 is a schematic diagram of yet another association response frame according to embodiments of the disclosure.
FIG. 35 is a schematic diagram of yet another association response frame according to embodiments of the disclosure.
FIG. 36 is a schematic diagram of an association info share frame according to embodiments of the disclosure.
FIG. 37 is a schematic diagram of an association confirm frame according to embodiments of the disclosure.
FIG. 38 is a schematic block diagram of a STA according to embodiments of the disclosure.
FIG. 39 is a schematic block diagram of an AP according to embodiments of the disclosure.
FIG. 40 is a schematic block diagram of another AP according to embodiments of the disclosure.
FIG. 41 is a schematic block diagram of another STA according to embodiments of the disclosure.
FIG. 42 is a schematic block diagram of yet another AP according to embodiments of the disclosure.
FIG. 43 is a schematic block diagram of a communication device according to embodiments of the disclosure.
FIG. 44 is a schematic block diagram of an apparatus according to embodiments of the disclosure.
FIG. 45 is a schematic block diagram of a communication system according to embodiments of the disclosure.

### DETAILED DESCRIPTION

The technical solutions in the embodiments of the disclosure will be described below with reference to the drawings in the embodiments of the disclosure. It is apparent that the described embodiments are part of the embodiments of the disclosure, rather than all of the embodiments. With respect to the embodiments of the disclosure, all other embodiments obtained by those of ordinary skill in the art without paying any creative work belong to the scope of protection of the disclosure.

The technical solutions of the embodiments of the disclosure may be applied to various communication systems, such as a Wireless Local Area Network (WLAN), Wireless Fidelity (Wi-Fi), or other communication systems, etc.

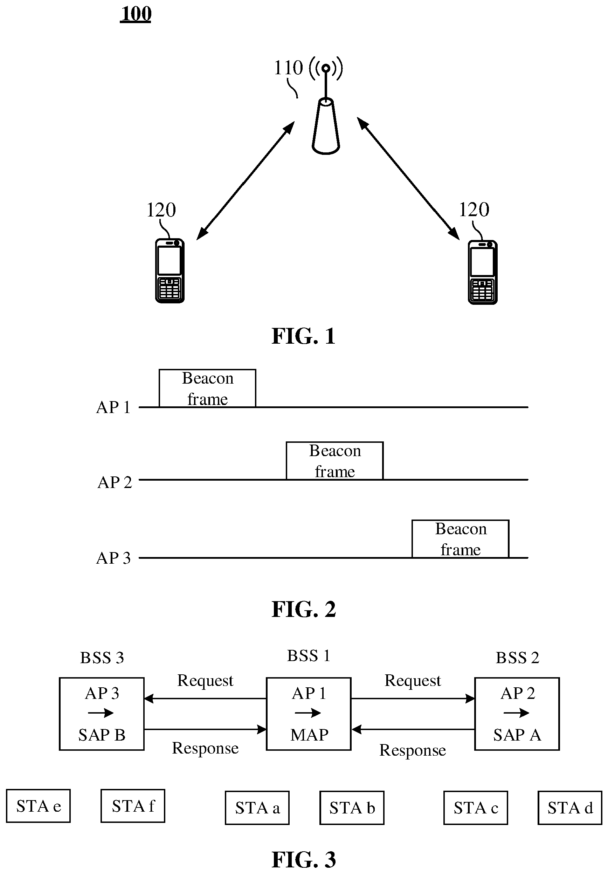

Exemplarily, a communication system 100 to which the embodiments of the disclosure are applied is shown in FIG. 1. The communication system 100 may include an Access Point (AP) 110 and a station (STA) 120 accessing a network through the AP 110.

In some scenarios, the AP may also be referred to as an AP STA, that is, the AP is also a kind of STA in a certain sense. In some scenarios, the STA is also referred to as a non-AP STA.

In some embodiments, STA may include the AP STA and the non-AP STA.

Communication in the communication system 100 may be communication between the AP and the STA, or communication between STAs, or communication between the STA and another STA (peer STA), the peer STA may refer to a device which communicates with a peer side of the STA, for example, the peer STA may be an AP or a non-AP STA.

The AP is equivalent to a bridge connecting a wired network to a wireless network, and has a main function of connecting various wireless network clients together, and then connecting the wireless network to Ethernet. An AP device may be a terminal device (such as a mobile phone) or a network device (such as a router) with a Wi-Fi chip.

It should be understood that roles of the STA in the communication system is not absolute. For example, in some scenarios, when the mobile phone is connected to the router, the mobile phone is an STA, and in case that the mobile phone is used as a hotspot for other mobile phones, the mobile phone acts as AP.

The AP and the STA may be devices applied to vehicle to everything (V2X); Internet of Things (IoT) nodes, sensors, or the like in IoT; smart cameras, smart remote controls, smart water meters, or the like in a smart home; and sensors in a smart city, etc.

In some embodiments, the STA may support the 802.11be standard. The STA may also support multiple current and future WLAN standards of the 802.11 family, such as 802.11ax, 802.11ac, 802.11n, 802.11g, 802.11b, and 802.11a, etc.

In some embodiments, the AP may be a device supporting the 802.11be standard. The AP may also be a device supporting multiple current and future WLAN standards of the 802.11 family, such as 802.11ax, 802.11ac, 802.11n, 802.11g, 802.11b, and 802.11a, etc.

In some embodiments, the AP 110 and/or the STA 120 may be deployed on the land, including indoor or outdoor, handheld, worn or vehicle-mounted deployment; or, may be deployed in the water (such as a ship); or, may be deployed in the air (such as an aircraft, a balloon, a satellite, etc.).

In the embodiments of the disclosure, the STA 120 may be a mobile phone and a pad supporting WLAN/Wi-Fi technologies, a computer with a wireless transceiver function, a Virtual Reality (VR) device, an Augmented Reality (AR) device, a wireless device in industrial control, a set-top box, a wireless device in self driving, a vehicle-mounted communication device, a wireless device in remote medical, a wireless device in a smart grid, a wireless device in transportation safety, a wireless device in a smart city, or a wireless device in a smart home, a vehicle-mounted communication device, a wireless communication chip/Application Specific Integrated Circuit (ASIC)/System on Chip (SoC), etc.

As an example rather than limitation, in the embodiments of the disclosure, the STA 120 may also be a wearable device. The wearable device may also be referred to as a wearable smart device, which is a general term for wearable devices developed by applying wearable technologies to intelligently design daily wears, such as glasses, gloves, watches, clothing, shoes, etc. The wearable device is a portable device which is directly worn on the body or integrated into a user's clothing or accessory. The wearable device is not only a hardware device, but also achieves powerful functions through software support, data interaction and cloud-based interaction. Generalized wearable smart devices include devices with full functions, large sizes, implementing complete or partial functions without relying on smart phones, such as smart watches or smart glasses or the like, and devices focusing on only a certain type of application functions and requiring cooperation with other devices such as smart phones in use, such as various smart bracelets and smart jewelry for monitoring physical signs, etc.

Bands supported by the WLAN technology may include, but is not limited to low bands (2.4 GHz, 5 GHz, 6 GHz) and high bands (60 GHz).

FIG. 1 exemplarily shows one AP and two STAs. In some embodiments, the communication system 100 may include multiple APs and other numbers of STAs, which are not limited in the embodiments of the disclosure.

It should be understood that in the embodiments of the disclosure, a device with a communication function in a network/system may be referred to as a communication device. Taking the communication system 100 shown in FIG. 1 as an example, the communication device may include an AP 110 and a STA 120 with communication functions, and the AP 110 and the STA 120 may be the above specific devices respectively, which are not elaborated here. The communication device may further include other devices in the communication system 100, such as a network controller, gateway and other network entities, which are not limited in the embodiments of the disclosure.

It should be understood that in the disclosure, terms "system" and "network" are often interchangeably used here. In the disclosure, a term "and/or" is only an association relationship describing associated objects, and indicates that there may be three relationships. For example, A and/or B may indicate three situations, i.e., A exists alone, A and B exist simultaneously, and B exists alone. Furthermore, in the disclosure, a character "/" generally indicates that anterior and posterior associated objects are in a "or" relationship.

It should be understood that "indication" mentioned in the embodiments of the disclosure may be a direct indication, or may be an indirect indication, or may indicate that there is an association relationship. For example, A indicates B, which may mean that A directly indicates B, for example, B may be obtained through A; or, may mean that A indirectly indicates B, for example, A indicates C, and B may be obtained through C; or, may mean that there is an association relationship between A and B.

Terms used in sections of the embodiments of the disclosure are only intended to explain specific embodiments of the disclosure, and are not intended to limit the disclosure. Terms "first", "second", "third", "fourth" or the like in the description, claims and the drawings of the disclosure are intended to distinguish different objects, and are not intended to describe a specific order. Furthermore, terms "include", "have" as well as any variants thereof, are intended to cover a non-exclusive inclusion.

In descriptions of the embodiments of the disclosure, a term "corresponding" may indicate that there are direct or indirect correspondences between two items; or, may indicate that there is an association relationship between two items; or, may be a relationship such as indicating and indicated, configuring and configured, etc.

In the embodiments of the disclosure, "predefined" or "preconfigured" may be implemented by pre-saving corresponding codes, tables in a device (for example, including a STA and a network device) or other manners which may be used to indicate related information, specific implementations thereof are not limited in the disclosure. For example, "predefined" may refer to "defined in a protocol".

In the embodiments of the disclosure, "protocol" may refer to a standard protocol in the communication field, for example, it may include a Wi-Fi protocol and related protocols applied to future Wi-Fi communication systems, which are not limited in the disclosure.

In order to facilitate understanding the technical solutions of the embodiments of the disclosure, the technical solutions of the disclosure will be described in detail below through specific embodiments. The following relevant technologies, as optional solutions, may be arbitrarily combined with the technical solutions of the embodiments of the disclosure, all of which fall within a scope of protection of the embodiments of the disclosure. The embodiments of the disclosure include at least a part of the following contents.

A wireless device supports multi-band communications, for example, communicating on 2.4 GHz, 5 GHz, 6 GHz and 60 GHz bands simultaneously, or communicating on different channels of the same band (or different bands) simultaneously, to improve communication throughput and/or reliability between devices. Such device is usually referred to as a multi-band device or a Multi-Link Device (MLD), and sometimes, is also referred to as a multi-link entity or a multi-band entity. The MLD may be an AP device or a STA device. If the MLD is an AP device, the MLD includes one or more APs; if the MLD is a STA device, the MLD includes one or more non-AP STAs.

A MLD including one or more APs is also referred to as an AP MLD, a MLD including one or more non-AP STAs is also referred to as a Non-AP MLD, and in the embodiments of the disclosure, the Non-AP MLD may be referred to as a STA MLD.

In the embodiments of the disclosure, the AP MLD may include multiple APs, the Non-AP MLD may include multiple STAs, multiple links may be formed between APs in the AP MLD and STAs in the Non-AP MLD, and data communication may be performed between APs in the AP MLD and corresponding STAs in the Non-AP MLD through corresponding links.

In order to facilitate understanding the technical solutions of the embodiments of the disclosure, setup of a multi-AP candidate set related to the disclosure will be described below.

Setup of the multi-AP candidate set is divided into the following two phases: a multi-AP coordination capability discovery phase and a multi-AP candidate set setup phase.

In the multi-AP coordination capability discovery phase, an AP may discover mutual multi-AP coordination capabilities by receiving beacon frames or other management frames sent by neighboring APs, as shown in FIG. 2.

In the multi-AP candidate set setup phase, as shown in FIG. 3, an AP initiating multi-AP coordination is referred to as a Master AP (MAP), and the MAP selects Slave APs (SAPs) (one or more SAPs) around it to participate in multi-AP coordination. In this process, some information for configuring the multi-AP candidate set may be interacted between the MAP and the SAPs, specific steps and interactive information are as follows.

1) The MAP sends a request frame to the SAPs, the request frame mainly includes the following information: assigning identity (ID) of the SAP during multi-AP coordination, and assigning ID of a multi-AP set;

2) The SAP replies a response frame to the MAP. The response frame mainly includes the following information: information of a STA associated with the SAP, which includes ID of the STA and capability information of participating in multi-AP coordination; and a priority of the STA participating in multi-AP coordination.

To facilitate understanding a technical solution according to embodiments of the disclosure, a method for active/passive scanning of a basic service set (BSS) by a STA according to the disclosure is illustrated hereinafter.

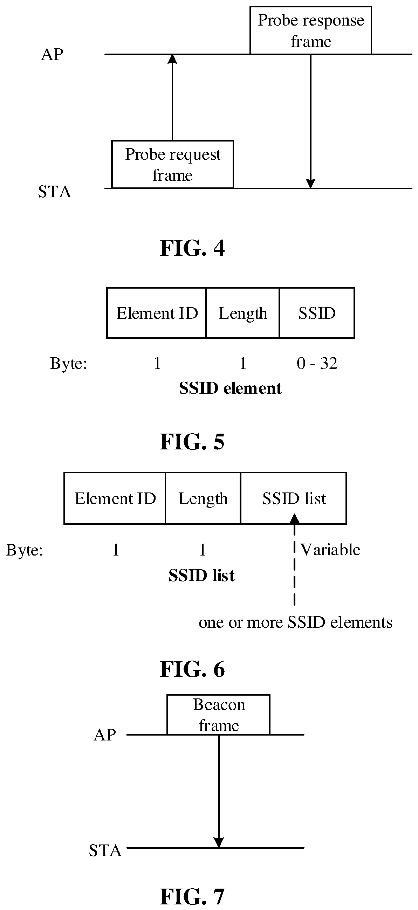

As shown in FIG. 4, in active scanning, the STA sends a probe request frame including a service set identifier (SSID) element or a SSID list element to actively discover/scan a BSS corresponding to a related SSID. Formats of the SSID element and the SSID list element are as shown in FIG. 5 and FIG. 6, respectively.

Since one SSID or multiple SSIDs may be added to an SSID list field of the SSID list element, the STA may the request one SSID or multiple SSIDs when it is the SSID list element that is included in the probe request frame.

Note that if a length of an SSID field is not 0 (length of SSID field = non-zero), it means that one specific SSID is requested. If the length of the SSID field is 0 (length of SSID field = 0), it means that the STA has requested all SSIDs (wildcard SSID). That is, the STA requests the AP to return all supported SSIDs (including any hidden SSIDs).

In passive scanning, an AP sends a beacon frame or another management frame, which includes one SSID element or multiple SSID elements to actively broadcast the SSID(s) supported by the AP. The STA receives the beacon frame, and may discover a BSS corresponding to a related SSID through the SSID element(s), as shown in FIG. 7.

To facilitate understanding a technical solution according to embodiments of the disclosure, a method for associating a STA with a BSS according to the disclosure is illustrated hereinafter.

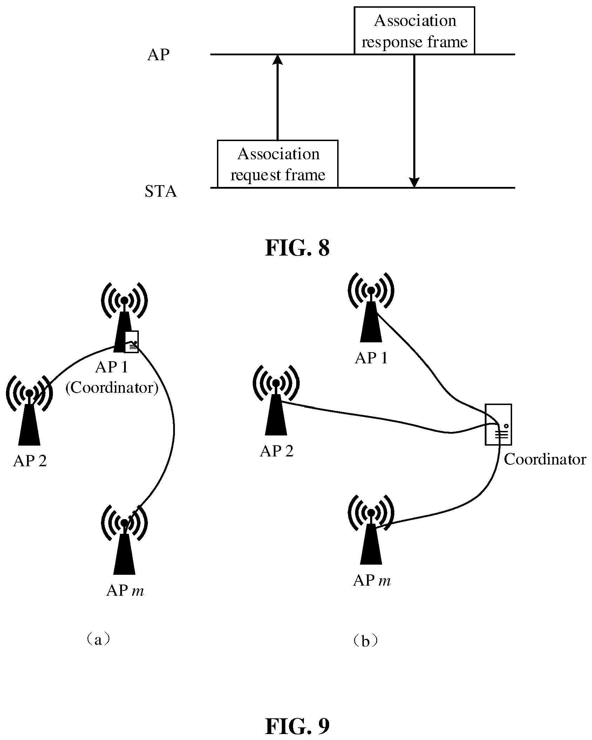

The STA sends an association request frame to an AP. An SSID with which the STA wants to be associated is included in an SSID element. The AP sends a result of associating the STA through an association response frame to the STA. If a status code in an association response frame indicates success, it means that the STA is associated successfully. Then, the AP may allocate one association ID, such as an association identifier (AID), to the STA, as shown in FIG. 8.

To facilitate understanding a technical solution according to embodiments of the disclosure, a method for associating a STA with a virtual BSS (VBSS) according to the disclosure is illustrated hereinafter.

Two methods that the STA may be associated with the VBSS are described below.

Method 1 is based on temporal key generation with VBSS coordinator. Specifically, pairwise master key (PMK) (or group master key, GMK) and pairwise transient key (PTK) (or group temporal key, GTK) are generated between the STA and a coordinator. The coordinator is responsible for frame encryption and decryption. Frame(s) of remaining AP(s) is relayed to the coordinator for processing.

Method 2 is based on temporal key generation with individual APs. Specifically, PMK (or GMK) and PTK (or GTK) are generated between the STA and the coordinator. The remaining AP(s) derives PMK (or GMK) of the AP(s) from the PMK (or GMK) of the coordinator. Finally, PTK (or GTK) is generated between the STA and other AP(s). Then, the STA may communicate directly with individual APs.

To facilitate understanding technical solutions according to embodiments of the disclosure, technical problems solved by the disclosure will be illustrated hereinafter.
1) In a foregoing solution for setting-up the multi-AP candidate set, although a basic process of multi-AP capability discovery and related parameter required for setup of the multi-AP candidate set are devised, multi-AP capability information is not clarified, and various pieces of multi-AP capability information required to be indicated by an AP are not considered. In addition, parameters required to be allocated for the multi-AP candidate set in order to set up the multi-AP candidate set are not specific enough, either.
2) The foregoing solution of active/passive scanning of the BSS by the STA relates just to legacy BSS discovery by the STA through the SSID element/SSID List element, but not to how the STA discovers a multi-AP candidate set (VBSS). Moreover, it is not supported for the STA to request all legacy SSIDs and VBSS SSIDs as needed when the STA requests all SSID(s) through the wildcard SSID.
3) The foregoing solution of associating the STA with the BSS supports just associating the STA with a legacy BSS, and does not involve an operation of the STA requesting to be associated with the multi-AP candidate set after discovery of the multi-AP set.
4) In a foregoing solution for associating the STA with the VBSS, although the two methods for associating the STA with the VBSS (the multi-AP candidate set) are devised, specific flow, specific frame structure, etc., of associating the STA with the VBSS is not devised for different network architectures. Nor is the information exchanged between the coordinator and other AP(s) specified.

In view of the above, the disclosure proposes a solution for multi-AP coordination; and devises how a STA discovers a multi-AP candidate set and a frame structure used, as well as how the STA associates with the multi-AP candidate set and a frame structure used, thereby implementing multi-AP coordinated transmission.

Note that in embodiments of the disclosure, the multi-AP candidate set and the VBSS are the same concept, and sometimes, the two terms are mixed-used in the context, however representing the same concept.

In some embodiments, the disclosure may be applied to the architecture of wired multi-AP coordination as shown in FIG. 9, or to the architecture of wireless multi-AP coordination as shown in FIG. 10.

Specifically, in the architecture of wired multi-AP coordination, as shown in (a) of FIG. 9, a coordinator in a network is located in a certain AP, and controls other APs through wired connection. As shown in (b) of FIG. 9, there is a standalone coordinator in the network. The standalone coordinator controls other APs through wired connection. For the architecture of wired multi-AP coordination, setup of multi-AP candidate set is directly set by a network operator directly at a controller. For example, the controller acquires multi-AP coordination capability information of the individual APs through wired connection, and allocates the multi-AP candidate set(s).

Specifically, in the architecture of wireless multi-AP coordination, a coordinator in a network is located in a certain AP (referred to as the MAP) and controls other APs (referred to as SAPs) wirelessly. Before setup of multi-AP candidate set, each AP needs to learn the multi-AP coordination capability information and the like of other AP(s). Then, the MAP decides to set up, with which SAP(s), the multi-AP candidate set(s) supporting which multi-AP coordination mode(s).

A technical solution of the disclosure is elaborated hereinafter with specific embodiments.

FIG. 11 is a schematic flowchart of a method for wireless communication 200 according to embodiments of the disclosure. As shown in FIG. 11, the method for wireless communication 200 may include at least some contents as follows.

In S210, an access point (AP) sends first information to a station (STA). The first information includes information of a multi-AP candidate set to which the AP belongs. The information of multi-AP candidate set includes at least one of: at least one legacy SSID to which the AP belongs, an SSID of at least one virtual basic service set (VBSS) to which the AP belongs, a sending period of information corresponding to the SSID of at least one VBSS, and information corresponding to a VBSS where the AP is located. The legacy SSID is a string. The string is used to identify infrastructure basic service sets (BSSs) that comprise an extended service set (ESS) or the string is used to identify a non-infrastructure BSS.

In S220, the STA receives the first information sent by the AP.

In an embodiment of the disclosure, one AP may belong to one or more multi-AP candidate sets.

In an embodiment of the disclosure, each multi-AP candidate set may have just one MAP, and remaining AP(s) are SAP(s).

In an embodiment of the disclosure, each multi-AP candidate set may support one or more multi-AP coordination modes.

In an embodiment of the disclosure, a legacy SSID is a string used to identify the infrastructure basic service sets (BSSs) that comprise an extended service set (ESS), or a string used to identify a non-infrastructure BSS.

In an embodiment of the disclosure, an SSID of VBSS is a string used to identify the multi-AP candidate set (or VBSS).

In some embodiments, the first information is sent through a first frame. The first frame may be a probe response frame, a beacon frame, or another management frame.

In some embodiments, before receiving the first information, the STA sends second information to the AP. The second information is used to request multi-AP candidate set information.

In some embodiments, the second information is sent through a probe request frame. In this case, the first frame is a probe response frame.

In the embodiment, the STA discovers the multi-AP candidate set in two modes. i.e., active scanning and passive scanning.

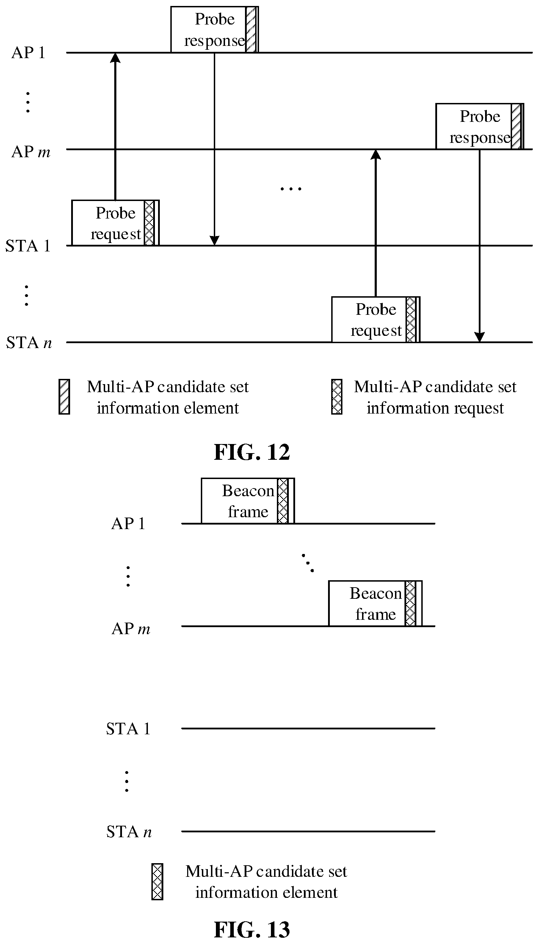

Specifically, a flow of active scanning of the multi-AP candidate set by the STA is as shown in FIG. 12. The STA sends a probe request frame carrying "multi-AP candidate set Info request field or multi-AP candidate set info request element" and/or an "SSID element (or SSID field) or SSID list element (or SSID list field)", to actively request the multi-AP candidate set information from the AP. Then, the AP informs the STA of the information of the multi-AP candidate set to which the AP belongs by carrying, in the probe response frame, "multi-AP candidate set Info element or multi-AP candidate set Info field" and/or an "SSID element or SSID field".

Specifically, a flow of passive scanning of the multi-AP candidate set by the STA is as shown in FIG. 13. Each AP (or only the MAP) broadcasts the information of the multi-AP candidate set to which the AP belongs by carrying, in the beacon frame (or another management frame), a "multi-AP candidate set Info element or multi-AP candidate set Info field" and/or an "SSID element or SSID field". The STA may learn the information of the multi-AP candidate set by receiving the beacon frame (or another management frame).

In some embodiments, the second information is sent through a probe request frame.

The probe request frame may include at least one of an SSID field and an SSID list field.

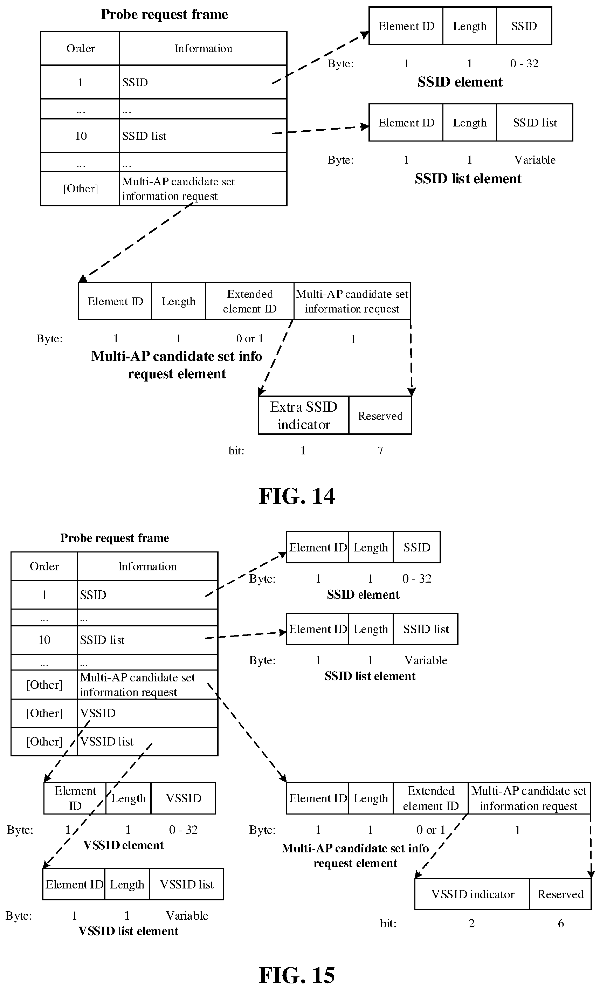

Specifically, a first value of a length field corresponding to the SSID field is used to request a first SSID. The first SSID may be the legacy SSID or the first SSID may be an SSID of VBSS. A second value of the length field corresponding to the SSID field may be used to request multiple SSIDs. The multiple SSIDs may be all legacy SSIDs where the AP is located, or SSIDs of all VBSSs where the AP is located. For example, the probe request frame is as shown in FIG. 14. The SSID element is located at order 1 in the probe request frame. The SSID element may include an element ID field (occupying 1 byte), a length field (occupying 1 byte), and an SSID field (occupying 0-32 bytes).

In some embodiments, the first value corresponding to the length field corresponding to the SSID field is non-zero, and the second value corresponding to the length field corresponding to the SSID field is zero.

For example, the length of the SSID field (length of SSID field) is non-zero indicates the requested SSID (desired SSID), meaning that the STA requests the first SSID; and the length of the SSID field (length of SSID field) is zero indicates the wildcard SSID, meaning that the STA requests all SSID(s).

In some embodiments, the STA requests the first SSID in case that a value of the length field corresponding to the SSID field is non-zero, and/or, the STA requests all SSID(s) (wildcard SSID) in case that a value of the length field corresponding to the SSID field is zero.

Specifically, the SSID list field is used to request at least one SSID. The at least one SSID include legacy SSID and/or SSID of VBSS. For example, as shown in FIG. 14, the SSID list element is located at order 10 in the probe request frame. The SSID list element may include an element ID field (occupying 1 byte), a length field (occupying 1 byte), and an SSID list field (occupying a variable number of bytes).

In some embodiments, in case that the probe request frame does not include a multi-AP candidate set info request field, and that the length field corresponding to the SSID field takes on the second value, the multiple SSIDs are all legacy SSIDs where the AP is located. The multi-AP candidate set info request field is used to request the multi-AP candidate set information.

In some embodiments, the probe request frame further includes a multi-AP candidate set info request field. The multi-AP candidate set info request field includes an extra SSID indicator field. The extra SSID indicator field is used to request the AP to return, to the STA, all SSIDs of VBSSs and legacy SSIDs where the AP is located. Alternatively, the extra SSID indicator field may be configured to request the AP to return, to the STA, the SSIDs of all VBSSs where the AP is located, and to not return, to the STA, any legacy SSID.

In some embodiments, a value of 0 of the extra SSID indicator field is configured to request the AP to return, to the STA, SSIDs of the all VBSSs and all legacy SSIDs where the AP is located. A value of 1 of the extra SSID indicator field is configured to request the AP to return, to the STA, SSIDs of all VBSSs where the AP is located, and to not return, to the STA, the any legacy SSID.

Specifically, for example, as shown in FIG. 14, the multi-AP candidate set info request element is located at the other order in the probe request frame. The multi-AP candidate set info request element may include an element ID field (occupying 1 byte), a length field (occupying 1 byte), an extended element ID field (occupying 0 or 1 byte), and a multi-AP candidate set info request field (occupying 1 byte). The multi-AP candidate set info request field may include the extra SSID indicator field (occupying 1 bit).

For example, the value of extra SSID indicator field equals to 0 indicates that the AP is to return SSIDs of all VBSSs and all legacy SSIDs where the AP is located to the STA, while the value of extra SSID indicator field equals to 1 indicates that the AP is to return SSIDs of all VBSSs where the AP is located to the STA, and not to return any legacy SSID to the STA.

As another example, the value of extra SSID indicator field equals to 1 indicates that the AP is to return SSIDs of all VBSSs and all legacy SSIDs where the AP is located to the STA, while the value of extra SSID indicator field equals to 0 indicates that the AP is to return the SSIDs of all VBSSs where the AP is located to the STA, and not to return any legacy SSID to the STA.

In some embodiments, in case the probe request frame does not include the multi-AP candidate set info request field, the SSID field in the probe request frame takes on the second value, and the multiple SSIDs are SSIDs of all VBSSs where the AP is located.

In some embodiments, in case the probe request frame includes the multi-AP candidate set info request field and the multi-AP candidate set info request field does not include the extra SSID indicator field, the SSID field in the probe request frame takes on the second value, and the multiple SSIDs are the SIDs of all VBSSs where the AP is located.

In some embodiments, the second information is sent through a probe request frame.

The probe request frame may include at least one of an SSID field, an SSID list field, a virtual SSID (VSSID) field, and a VSSID list field.

Specifically, a first value of a length field corresponding to the SSID field is used to request a first SSID. The first SSID may be a legacy SSID or an SSID of VBSS. A second value of the length field corresponding to the SSID field may be used to request P SSIDs. The P SSIDs may be all legacy SSIDs where the AP is located, or SSIDs of all VBSSs where the AP is located. P may be a positive integer. For example, as shown in FIG. 15, the SSID element is located at order 1 in the probe request frame. The SSID element may include an element ID field (occupying 1 byte), a length field (occupying 1 byte), and an SSID field (occupying 0-32 bytes).

In some embodiments, the first value corresponding to the length field corresponding to the SSID field is non-zero, and the second value corresponding to the length field corresponding to the SSID field is zero.

For example, the length of the SSID field (length of SSID field) is non-zero indicates the requested SSID (desired SSID), meaning that the STA requests the first SSID; and the length of the SSID field (length of SSID field) is zero indicates the wildcard SSID, meaning that the STA requests P SSIDs.

In some embodiments, the STA requests the first SSID in case that a value of the length field corresponding to the SSID field is non-zero, and/or, the STA requests all SSID(s) (wildcard SSID) (i.e., the STA requests P SSIDs) in case that a value of the length field corresponding to the SSID field is zero,.

Specifically, the SSID list field is used to request K SSIDs. The K SSIDs may include legacy SSID(s) and/or SSID(s) of VBSS(s). K may be a positive integer. For example, as shown in FIG. 15, the SSID list element is located at order 10 in the probe request frame. The SSID list element may include an element ID field (occupying 1 byte), a length field (occupying 1 byte), and an SSID list field (occupying a variable number of bytes).

Specifically, the first value of a length field corresponding to the VSSID field is used to request a second SSID. The second SSID may be a legacy SSID or an SSID of VBSS. The second value of the length field corresponding to the VSSID field may be used to request Q SSIDs. The Q SSIDs may be all legacy SSIDs where the AP is located, or SSIDs of all VBSSs where the AP is located. Q may be a positive integer. For example, as shown in FIG. 15, the VSSID element in the probe request frame includes an element ID field (occupying 1 byte), a length field (occupying 1 byte), and a VSSID field (occupying 0-32 bytes).

Specifically, the VSSID list field requests T SSIDs. The T SSIDs may include legacy SSID(s) and/or SSID(s) of VBSS(s). T may be a positive integer. For example, as shown in FIG. 15, the VSSID list element in the probe request frame includes an element ID field (occupying 1 byte), a length field (occupying 1 byte), and a VSSID list field (occupying a variable number of bytes).

In some embodiments, in case that a value of 0 of the length field corresponding to the SSID field, the STA requests all SSIDs and the length field corresponding to the SSID field takes on the second value.

In some embodiments, the probe request frame further includes a multi-AP candidate set info request field. The multi-AP candidate set info request field may include a VSSID indicator field. The VSSID indicator field may be configured to indicate that the multi-AP candidate set information is not requested, and that the probe request frame does not include the VSSID field and the VSSID list field. Alternatively, the VSSID indicator field may be configured to indicate that the multi-AP candidate set information is requested, and that the STA requests SSID of VBSS through the SSID field or the SSID list field. Alternatively, the VSSID indicator field may be configured to indicate that the multi-AP candidate set information is requested, and that the STA requests SSID of VBSS through the VSSID field or the VSSID list field. Alternatively, the VSSID indicator field may be configured to indicate that the multi-AP candidate set information is requested, and that the STA requests SSID of VBSS and/or legacy SSID through the VSSID field or the VSSID list field.

Specifically, for example, as shown in FIG. 15, the multi-AP candidate set info request element is located at the other order in the probe request frame. The multi-AP candidate set info request element may include an element ID field (occupying 1 byte), a length field (occupying 1 byte), an extended element ID field (occupying 0 or 1 byte), and a multi-AP candidate set info request field (occupying 1 byte). The multi-AP candidate set info request field may include the VSSID indicator field (occupying 2 bits).

Specifically, for example, the two bits of VSSID indicator field setting to 00 indicates that the multi-AP candidate set information is not requested, and that the probe request frame does not include the VSSID field and the VSSID list field; in this case, a beacon/probe response frame sent by the AP returns only the SSID. The two bits of VSSID indicator field setting to 01 indicates that the multi-AP candidate set information is requested, and that the STA requests SSID of VBSS through the SSID field or the SSID list field; in this case, the beacon/probe response frame sent by the AP returns only the VSSID. The two bits of VSSID indicator field setting to 10 indicates that the multi-AP candidate set information is requested, and that the STA requests SSID of VBSS through the VSSID field or the VSSID list field; in this case, the beacon/probe response frame sent by the AP returns only the VSSID. The two bits of VSSID indicator field setting to 11 indicates that the multi-AP candidate set information is requested, and that the STA requests SSID of VBSS and/or legacy SSID through the VSSID field or the VSSID list field; in this case, the beacon/probe response frame sent by the AP returns both the SSID and the VSSID.

In some embodiments, the multi-AP candidate set info request field may also be implemented through a reserved bit of the probe request frame, which is not limited thereto in the disclosure.

In some embodiments, the first information is sent through a first frame. The first frame may include at least one of a first SSID field, W SSID fields, a VBSS SSID interval field, and a multi-AP candidate set information field.

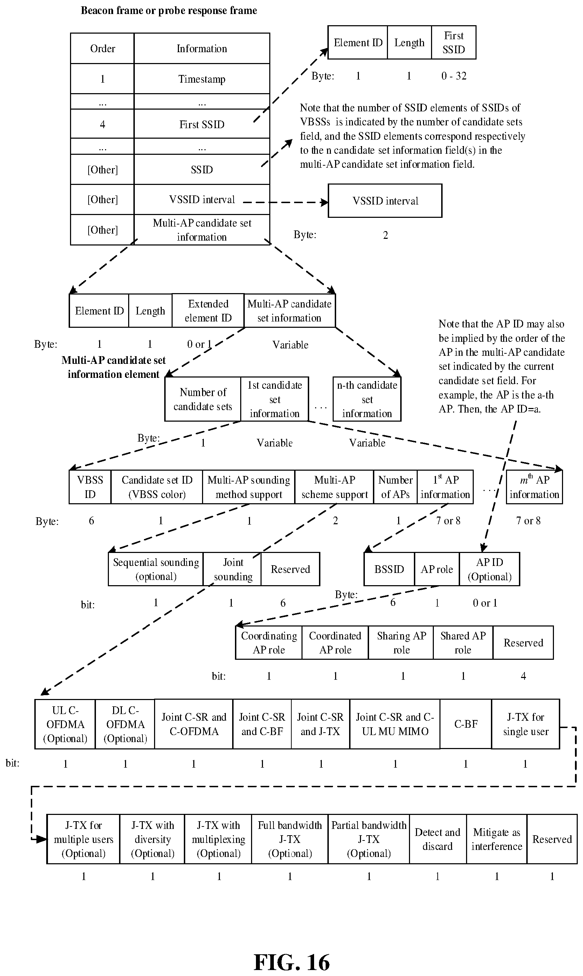

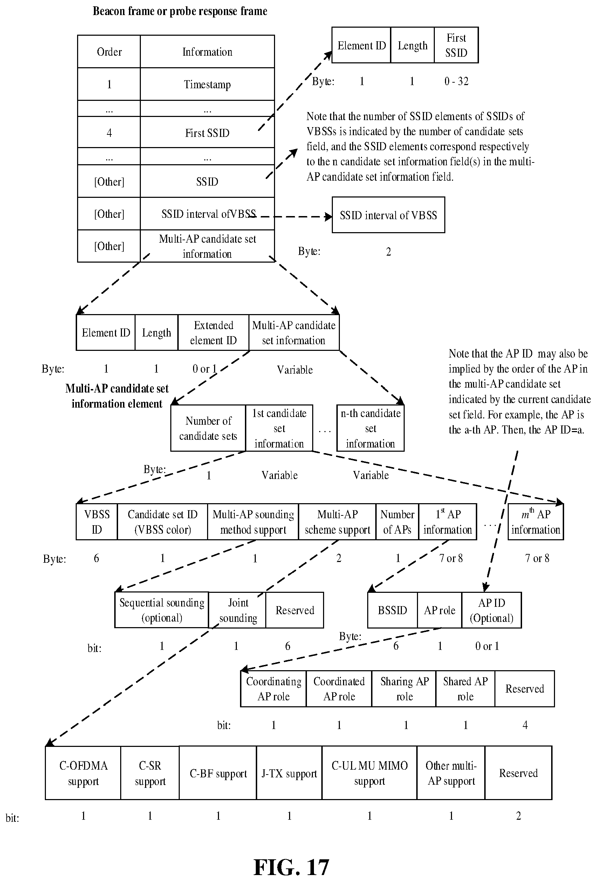

Specifically, in the first frame, the first SSID field indicates at least one legacy SSID to which the AP belongs. For example, the first frame is a probe response frame or a beacon frame. As shown in FIG. 16 and FIG. 17, at an order 4 in the beacon frame or the probe response frame is a first SSID element. The first SSID element may include an element ID field (occupying 1 byte), a length field (occupying 1 byte), and a first SSID field (occupying 0-32 bytes).

Specifically, the W SSID fields respectively indicate SSIDs of W VBSSs to which the AP belongs. W is a positive integer. As shown in FIG. 16 and FIG. 17, the beacon frame or the probe response frame includes W SSID elements. Each SSID element of the W SSID elements may include one SSID field. Note that in FIG. 16 and FIG. 17, the number of SSID elements of SSIDs of VBSSs (i.e., the value of W) is indicated by the number of candidate sets field, and are in one-to-one correspondence with n candidate set information fields in the multi-AP candidate set information field (i.e., W=n).

Specifically, the SSID of VBSS interval field indicates the sending period of the information corresponding to the SSID of at least one VBSS. As shown in FIG. 16 and FIG. 17, the beacon frame or the probe response frame includes a SSID of VBSS interval element. The SSID of VBSS interval element may include the SSID of VBSS interval field (occupying 2 bytes).

Specifically, the multi-AP candidate set information field indicates the information corresponding to the VBSS where the AP is located. As shown in FIG. 16 and FIG. 17, the beacon frame or the probe response frame includes a multi-AP candidate set information element. The multi-AP candidate set information element may include an element ID field (occupying 1 byte), a length field (occupying 1 byte), an extended element ID field (occupying 0 or 1 byte), and the multi-AP candidate set information field (occupying a variable number of bytes).

In some embodiments, the first information is sent through a first frame. The first frame may include at least one of a first SSID field, W virtual SSID (VSSID) fields, a VSSID interval field, and a multi-AP candidate set information field.

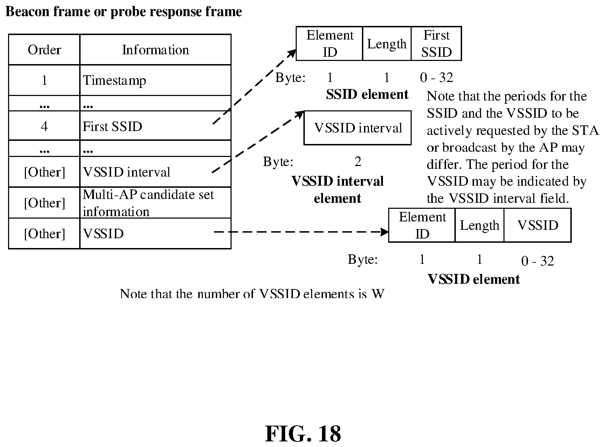

Specifically, in the first frame, the first SSID field indicates at least one legacy SSID to which the AP belongs. For example, the first frame is a beacon frame or a probe response frame. As shown in FIG. 18, at an order 4 in the beacon frame or the probe response frame is a first SSID element. The first SSID element may include an element ID field (occupying 1 byte), a length field (occupying 1 byte), and a first SSID field (occupying 0-32 bytes).

Specifically, the W VSSID fields respectively indicate SSIDs of W VBSSs to which the AP belongs. W is a positive integer. As shown in FIG. 18, the beacon frame or the probe response frame includes W VSSID elements. A VSSID element of the W VSSID elements may include an element ID field (occupying 1 byte), a length field (occupying 1 byte), and a VSSID field (occupying 0-32 bytes). Note that in FIG. 18, the number of VSSID elements of SSIDs of VBSS (i.e., the value of W) is indicated by the number of candidate sets field, and are in one-to-one correspondence with the n candidate set information fields in the multi-AP candidate set information field (i.e., W equals to n).

Specifically, the VSSID interval field indicates the sending period of the information corresponding to the SSID of at least one VBSS. As shown in FIG. 18, the beacon frame or the probe response frame includes a VSSID interval element. The VSSID interval element may include the VSSID interval field (occupying 2 bytes).

Specifically, the multi-AP candidate set information field indicates the information corresponding to the VBSS where the AP is located. As shown in FIG. 18, the beacon frame or the probe response frame includes a multi-AP candidate set information element. The multi-AP candidate set information element may include an element ID field (occupying 1 byte), a length field (occupying 1 byte), an extended element ID field (occupying 0 or 1 byte), and the multi-AP candidate set information field (occupying a variable number of bytes).

In some embodiments, the multi-AP candidate set information field includes at least one candidate set information field and number of candidate sets field. The number of candidate sets field may be configured to indicate the number of multi-AP candidate sets where the AP is located, and indicate a value of W. An n-th candidate set information field of the at least one candidate set information field may be configured to indicate related information of an n-th multi-AP candidate set where the AP is located. n is a positive integer.

In some embodiments, candidate set information field(s) of the at least one candidate set information field includes at least one of a VBSS identifier (ID) field, a candidate set ID field, a multi-AP sounding method support field, a multi-AP scheme support field, a number of APs field, and multiple AP information fields.

In some embodiments, candidate set information field(s) of the at least one candidate set information field includes at least one of the VBSS ID field, the candidate set ID field, a multi-AP joint sounding support field, the multi-AP scheme support field, the number of APs field, and the multiple AP information fields.

Specifically, in the first frame, the VBSS ID field is configured to indicate a VBSS ID of a multi-AP candidate set corresponding to the current candidate set information field. For example, the VBSS ID field is as shown in FIG. 16 or FIG. 17 (occupying 6 bytes).

Specifically, in the first frame, the candidate set ID field is configured to indicate an ID of the multi-AP candidate set corresponding to the current candidate set information field.

In some embodiments, in the first frame, the candidate set ID field may also be replaced with a VBSS color field. The VBSS color field may be configured to indicate the multi-AP candidate set corresponding to the candidate set information field.

For example, the candidate set ID field or the VBSS color field is as shown in FIG. 16 or FIG. 17 (occupying 0 or 1 byte).

Specifically, in the first frame, the multi-AP sounding method support field is configured to indicate a channel sounding method supported by the multi-AP candidate set corresponding to the current candidate set information field. For example, the multi-AP sounding method support field is as shown in FIG. 16 or FIG. 17 (occupying 1 byte).

Specifically, in the first frame, the multi-AP scheme support field is configured to indicate a multi-AP coordination mode supported by the multi-AP candidate set corresponding to the current candidate set information field. For example, the multi-AP scheme support field is as shown in FIG. 16 or FIG. 17 (occupying 1 byte).

Specifically, in the first frame, the number of APs field is configured to indicate the number of member APs included in the multi-AP candidate set corresponding to the current candidate set information field. For example, the number of APs field is as shown in FIG. 16 or FIG. 17 (occupying 1 byte).

Specifically, in the first frame, an m-th AP information field of the multiple AP information fields is configured to indicate related information of an m-th member AP of the multi-AP candidate set corresponding to the current candidate set information field. m is a positive integer. For example, an AP information field of the multiple AP information fields is as shown in FIG. 16 or FIG. 17 (occupying 7 or 8 bytes).

Specifically, in the first frame, the multi-AP joint sounding support field is configured to indicate whether the multi-AP candidate set corresponding to the current candidate set information field supports multiple APs to perform channel sounding simultaneously and synchronously.

In some embodiments, in the first frame, in case candidate set information field(s) of the at least one candidate set information field includes the multi-AP joint sounding support field, the multi-AP candidate set corresponding to the current candidate set information field supports the multiple Aps to perform channel sounding sequentially by default.

Specifically, for example, in case candidate set information field(s) of the n candidate set information fields includes the multi-AP joint sounding support field, the multi-AP candidate set corresponding to the current candidate set information field supports the multiple APs to perform channel sounding sequentially by default.

In some embodiments, in the first frame, the multi-AP sounding method support field includes at least one of a sequential sounding field and a joint sounding field.

In some embodiments, in the first frame, the multi-AP sounding method support field includes only the joint sounding field.

Specifically, in the first frame, the sequential sounding field is configured to indicate whether the multi-AP candidate set corresponding to the current candidate set information field supports the multiple APs to perform channel sounding sequentially.

Specifically, in the first frame, the joint sounding field is configured to indicate whether the multi-AP candidate set corresponding to the current candidate set information field supports the multiple APs to perform channel sounding simultaneously and synchronously.

In some embodiments, in the first frame, in case the multi-AP sounding method support field does not include the sequential sounding field, by default the multi-AP candidate set corresponding to the current candidate set information field supports the multiple APs to perform channel sounding sequentially, by default.

In some embodiments, in the first frame, the multi-AP scheme support field includes at least one of following: an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

In some embodiments, in the first frame, the multi-AP scheme support field includes at least one of following: the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

Specifically, in the first frame, the UL C-OFDMA field is configured to indicate whether the multi-AP candidate set corresponding to the current candidate set information field supports UL C-OFDMA. For example, as shown in FIG. 16, the UL C-OFDMA field is an optional field, and may occupy 1 bit when it is present.

For example, in the first frame, the value of the UL C-OFDMA field equals to 1 means that the multi-AP candidate set corresponding to the current candidate set information field supports UL C-OFDMA; and the value of the UL C-OFDMA field equals to 0 means that the multi-AP candidate set corresponding to the current candidate set information field does not support UL C-OFDMA.

For another example, in the first frame, the value of the UL C-OFDMA field equals to 0 means that the multi-AP candidate set corresponding to the current candidate set information field supports UL C-OFDMA; and the value of the UL C-OFDMA field equals to 1 means that the multi-AP candidate set corresponding to the current candidate set information field does not support UL C-OFDMA.

Specifically, in the first frame, the DL C-OFDMA field is configured to indicate whether the multi-AP candidate set corresponding to the current candidate set information field supports DL C-OFDMA. For example, as shown in FIG. 16, the DL C-OFDMA field is an optional field, and may occupy 1 bit when it is present.

For example, in the first frame, the value of the DL C-OFDMA field equals to 1 means that the multi-AP candidate set corresponding to the current candidate set information field supports DL C-OFDMA; and the value of the DL C-OFDMA field equals to 0 means that the multi-AP candidate set corresponding to the current candidate set information field does not support DL C-OFDMA.

For another example, in the first frame, the value of the DL C-OFDMA field equals to 0 means that the multi-AP candidate set corresponding to the current candidate set information field supports DL C-OFDMA; and the value of the DL C-OFDMA field equals to 1 means that the multi-AP candidate set corresponding to the current candidate set information field does not support DL C-OFDMA.

Specifically, in the first frame, the joint C-SR and C-OFDMA field (Joint C-SR and C-OFDMA) is configured to indicate whether the multi-AP candidate set corresponding to the current candidate set information field supports simultaneous and joint use of C-SR and C-OFDMA. For example, as shown in FIG. 16, the joint C-SR and C-OFDMA field may occupy 1 bit.

For example, in the first frame, the value of the joint C-SR and C-OFDMA field equals to 1 means that the multi-AP candidate set corresponding to the current candidate set information field supports simultaneous and joint use of C-SR and C-OFDMA; and the value of the joint C-SR and C-OFDMA field equals to 0 means that the multi-AP candidate set corresponding to the current candidate set information field does not support simultaneous and joint use of C-SR and C-OFDMA.

For another example, in the first frame, the value of the joint C-SR and C-OFDMA field equals to 0 means that the multi-AP candidate set corresponding to the current candidate set information field supports simultaneous and joint use of C-SR and C-OFDMA; and the value of the joint C-SR and C-OFDMA field equals to 1 means that the multi-AP candidate set corresponding to the current candidate set information field does not support simultaneous and joint use of C-SR and C-OFDMA.

Specifically, in the first frame, the joint C-SR and C-BF field (Joint C-SR and C-BF) is configured to indicate whether the multi-AP candidate set corresponding to the current candidate set information field supports simultaneous and joint use of C-SR and C-BF. For example, as shown in FIG. 16, the joint C-SR and C-BF field may occupy 1 bit.

For example, in the first frame, the value of the joint C-SR and C-BF field equals to 1 means that the multi-AP candidate set corresponding to the current candidate set information field supports simultaneous and joint use of C-SR and C-BF; and the value of the joint C-SR and C-BF field equals to 0 means that the multi-AP candidate set corresponding to the current candidate set information field does not support simultaneous and joint use of C-SR and C-BF.

For another example, in the first frame, the value of the joint C-SR and C-BF field equals to 0 means that the multi-AP candidate set corresponding to the current candidate set information field supports simultaneous and joint use of C-SR and C-BF; and the value of the joint C-SR and C-BF field equals to 1 means that the multi-AP candidate set corresponding to the current candidate set information field does not support simultaneous and joint use of C-SR and C-BF.

Specifically, in the first frame, the joint C-SR and J-TX field (Joint C-SR and J-TX) is configured to indicate whether the multi-AP candidate set corresponding to the current candidate set information field supports simultaneous and joint use of C-SR and J-TX. For example, as shown in FIG. 16, the joint C-SR and J-TX field may occupy 1 bit.

For example, in the first frame, the value of the joint C-SR and J-TX field equals to 1 means that the multi-AP candidate set corresponding to the current candidate set information field supports simultaneous and joint use of C-SR and J-TX; and the value of the joint C-SR and J-TX field equals to 0 means that the multi-AP candidate set corresponding to the current candidate set information field does not support simultaneous and joint use of C-SR and J-TX.

For another example, in the first frame, the value of the joint C-SR and J-TX field equals to 0 means that the multi-AP candidate set corresponding to the current candidate set information field supports simultaneous and joint use of C-SR and J-TX; and the value of the joint C-SR and J-TX field equals to 1 means that the multi-AP candidate set corresponding to the current candidate set information field does not support simultaneous and joint use of C-SR and J-TX.

Specifically, in the first frame, the joint C-SR and C-UL MU MIMO field (Joint C-SR and C-UL MU MIMO) is configured to indicate whether the multi-AP candidate set corresponding to the current candidate set information field supports simultaneous and joint use of C-SR and C-UL MU MIMO. For example, as shown in FIG. 16, the joint C-SR and C-UL MU MIMO field may occupy 1 bit.

For example, in the first frame, the value of the joint C-SR and C-UL MU MIMO field equals to 1 means that the multi-AP candidate set corresponding to the current candidate set information field supports simultaneous and joint use of C-SR and C-UL MU MIMO; and the value of the joint C-SR and C-UL MU MIMO field equals to 0 means that the multi-AP candidate set corresponding to the current candidate set information field does not support simultaneous and joint use of C-SR and C-UL MU MIMO.

For another example, in the first frame, the value of the joint C-SR and C-UL MU MIMO field equals to 0 means that the multi-AP candidate set corresponding to the current candidate set information field supports simultaneous and joint use of C-SR and C-UL MU MIMO; and the value of the joint C-SR and C-UL MU MIMO field equals to 1 means that the multi-AP candidate set corresponding to the current candidate set information field does not support simultaneous and joint use of C-SR and C-UL MU MIMO.

Specifically, in the first frame, the C-BF field is configured to indicate whether the multi-AP candidate set corresponding to the current candidate set information field supports C-BF. For example, as shown in FIG. 16, the C-BF field may occupy 1 bit.

For example, in the first frame, the value of the C-BF field equals to 1 means that the multi-AP candidate set corresponding to the current candidate set information field supports C-BF; and the value of the C-BF field equals to 0 means that the multi-AP candidate set corresponding to the current candidate set information field does not support C-BF.

For another example, in the first frame, the value of the C-BF field equals to 0 means that the multi-AP candidate set corresponding to the current candidate set information field supports C-BF; and the value of the C-BF field equals to 1 means that the multi-AP candidate set corresponding to the current candidate set information field does not support C-BF.

Specifically, in the first frame, the J-TX for single user field is configured to indicate whether the multi-AP candidate set corresponding to the current candidate set information field supports performing joint transmission for a same user. For example, as shown in FIG. 16, the J-TX for single user field may occupy 1 bit.

For example, in the first frame, the value of the J-TX for single user field equals to 1 means that the multi-AP candidate set corresponding to the current candidate set information field supports performing joint transmission for the same user; and the value of the J-TX for single user field equals to 0 means that the multi-AP candidate set corresponding to the current candidate set information field does not support performing joint transmission for the same user.

For another example, in the first frame, the value of the J-TX for single user field equals to 0 means that the multi-AP candidate set corresponding to the current candidate set information field supports performing joint transmission for the same user; and the value of the J-TX for single user field equals to 1 means that the multi-AP candidate set corresponding to the current candidate set information field does not support performing joint transmission for the same user.

Specifically, in the first frame, the J-TX for multi-user field is configured to indicate whether the multi-AP candidate set corresponding to the current candidate set information field supports performing joint transmission for multiple users. For example, as shown in FIG. 16, the J-TX for multi-user field is an optional field, and may occupy 1 bit when it is present.

For example, in the first frame, the value of the J-TX for multi-user field equals to 1 means that the multi-AP candidate set corresponding to the current candidate set information field supports performing joint transmission for multiple users; and the value of the J-TX for multi-user field equals to 0 means that the multi-AP candidate set corresponding to the current candidate set information field does not support performing joint transmission for multiple users.

For another example, in the first frame, the value of the J-TX for multi-user field equals to 0 means that the multi-AP candidate set corresponding to the current candidate set information field supports performing joint transmission for multiple users; and the value of the J-TX for multi-user field equals to 1 means that the multi-AP candidate set corresponding to the current candidate set information field does not support performing joint transmission for multiple users.

Specifically, in the first frame, the J-TX with diversity field is configured to indicate whether the multi-AP candidate set corresponding to the current candidate set information field supports joint transmission of diversity type. For example, as shown in FIG. 16, the J-TX with diversity field is an optional field, and may occupy 1 bit when it is present.

For example, in the first frame, the value of the J-TX with diversity field equals to 1 means that the multi-AP candidate set corresponding to the current candidate set information field supports joint transmission of diversity type; and the value of the J-TX with diversity field equals to 0 means that the multi-AP candidate set corresponding to the current candidate set information field does not support joint transmission of diversity type.

For another example, in the first frame, the value of the J-TX with diversity field equals to 0 means that the multi-AP candidate set corresponding to the current candidate set information field supports joint transmission of diversity type; and the value of the J-TX with diversity field equals to 1 means that the multi-AP candidate set corresponding to the current candidate set information field does not support joint transmission of diversity type.

Specifically, in the first frame, the J-TX with multiplexing field is configured to indicate whether the multi-AP candidate set corresponding to the current candidate set information field supports joint transmission of multiplexing type. For example, as shown in FIG. 16, the J-TX with multiplexing field is an optional field, and may occupy 1 bit when it is present.

For example, in the first frame, the value of the J-TX with multiplexing field equals to 1 means that the multi-AP candidate set corresponding to the current candidate set information field supports joint transmission of multiplexing type; and the value of the J-TX with multiplexing field equals to 0 means that the multi-AP candidate set corresponding to the current candidate set information field does not support joint transmission of multiplexing type.

For another example, in the first frame, the value of the J-TX with multiplexing field equals to 0 means that the multi-AP candidate set corresponding to the current candidate set information field supports joint transmission of multiplexing type; and the value of the J-TX with multiplexing field equals to 1 means that the multi-AP candidate set corresponding to the current candidate set information field does not support joint transmission of multiplexing type.

Specifically, in the first frame, the full bandwidth J-TX field is configured to indicate whether the multi-AP candidate set corresponding to the current candidate set information field supports joint transmission in full bandwidth. For example, as shown in FIG. 16, the full bandwidth J-TX field is an optional field, and may occupy 1 bit when it is present.

For example, in the first frame, the value of the full bandwidth J-TX field equals to 1 means that the multi-AP candidate set corresponding to the current candidate set information field supports joint transmission in full bandwidth; and the value of the full bandwidth J-TX field equals to 0 means that the multi-AP candidate set corresponding to the current candidate set information field does not support joint transmission in full bandwidth.

For another example, in the first frame, the value of the full bandwidth J-TX field equals to 0 means that the multi-AP candidate set corresponding to the current candidate set information field supports joint transmission in full bandwidth; and the value of the full bandwidth J-TX field equals to 1 means that the multi-AP candidate set corresponding to the current candidate set information field does not support joint transmission in full bandwidth.

Specifically, in the first frame, the partial bandwidth J-TX field is configured to indicate whether the multi-AP candidate set corresponding to the current candidate set information field supports joint transmission in partial bandwidth. For example, as shown in FIG. 16, the partial bandwidth J-TX field is an optional field, and may occupy 1 bit when it is present.

For example, in the first frame, the value of the partial bandwidth J-TX field equals to 1 means that the multi-AP candidate set corresponding to the current candidate set information field supports joint transmission in partial bandwidth; and the value of the partial bandwidth J-TX field equals to 0 means that the multi-AP candidate set corresponding to the current candidate set information field does not support joint transmission in partial bandwidth.

For another example, in the first frame, the value of the partial bandwidth J-TX field equals to 0 means that the multi-AP candidate set corresponding to the current candidate set information field supports joint transmission in partial bandwidth; and the value of the partial bandwidth J-TX field equals to 1 means that the multi-AP candidate set corresponding to the current candidate set information field does not support joint transmission in partial bandwidth.

Specifically, in the first frame, the detect and discard field is configured to indicate whether the multi-AP candidate set corresponding to the current candidate set information field supports receiving and demodulating other users' data/frames and then discarding in a C-UL-MU MIMO mode, to obtain useful data/frames. For example, as shown in FIG. 16, the detect and discard field may occupy 1 bit.

For example, in the first frame, the value of the detect and discard field equals to 1 means that the multi-AP candidate set corresponding to the current candidate set information field supports receiving and demodulating other users' data/frames and then discarding in the C-UL-MU MIMO mode, to obtain useful data/frames; and the value of the detect and discard field equals to 0 means that the multi-AP candidate set corresponding to the current candidate set information field does not support receiving and demodulating other users' data/frames and then discarding in the C-UL-MU MIMO mode, to obtain useful data/frames.

For another example, in the first frame, the value of the detect and discard field equals to 0 means that the multi-AP candidate set corresponding to the current candidate set information field supports receiving and demodulating other users' data/frames and then discarding in the C-UL-MU MIMO mode, to obtain useful data/frames; and the value of the detect and discard field equals to 1 means that the multi-AP candidate set corresponding to the current candidate set information field does not support receiving and demodulating other users' data/frames and then discarding in the C-UL-MU MIMO mode, to obtain useful data/frames.

Specifically, in the first frame, the mitigate as interference field is configured to indicate whether the multi-AP candidate set corresponding to the current candidate set information field supports treating other users' data as interference directly, and receiving and demodulating a target user's data/frame directly in the C-UL-MU MIMO mode. For example, as shown in FIG. 16, the mitigate as interference field may occupy 1 bit.

For example, in the first frame, the value of the mitigate as interference field equals to 1 means that the multi-AP candidate set corresponding to the current candidate set information field supports treating other users' data as interference directly, and receiving and demodulating the target user's data/frame directly in the C-UL-MU MIMO mode; and the value of the mitigate as interference field equals to 0 means that the multi-AP candidate set corresponding to the current candidate set information field does not support treating other users' data as interference directly, and receiving and demodulating the target user's data/frame directly in the C-UL-MU MIMO mode.

For another example, in the first frame, the value of the mitigate as interference field equals to 0 means that the multi-AP candidate set corresponding to the current candidate set information field supports treating other users' data as interference directly, and receiving and demodulating the target user's data/frame directly in the C-UL-MU MIMO mode; and the value of the mitigate as interference field equals to 1 means that the multi-AP candidate set corresponding to the current candidate set information field does not support treating other users' data as interference directly, and receiving and demodulating the target user's data/frame directly in the C-UL-MU MIMO mode.

In some embodiments, in the first frame, in case that the multi-AP scheme field does not include the UL C-OFDMA field and the DL C-OFDMA field, the multi-AP candidate set corresponding to the current candidate set information field supports UL C-OFDMA and DL C-OFDMA by default.

In some embodiments, in the first frame, in case that value of the J-TX for single user field indicates that the multi-AP candidate set corresponding to the current candidate set information field does not support performing joint transmission for the same user, the multi-AP scheme field does not include the J-TX for multi-user field, or, value of the J-TX for multi-user field indicates that the multi-AP candidate set corresponding to the current candidate set information field does not support performing joint transmission for multiple users.

In some embodiments, in the first frame, in case that value of the J-TX for single user field indicates that the multi-AP candidate set corresponding to the current candidate set information field does not support performing joint transmission for the same user, the multi-AP scheme field does not include the J-TX with diversity field, or, value of the J-TX with diversity field indicates that the multi-AP candidate set corresponding to the current candidate set information field does not support the diversity type of joint transmission.

In some embodiments, in the first frame, in case that value of the J-TX for single user field indicates that the multi-AP candidate set corresponding to the current candidate set information field does not support performing joint transmission for the same user, the multi-AP scheme field does not include the J-TX with multiplexing field, or, value of the J-TX with multiplexing field indicates that the multi-AP candidate set corresponding to the current candidate set information field does not support the multiplexing type of joint transmission.

In some embodiments, in the first frame, in case that value of the J-TX for single user field indicates that the multi-AP candidate set corresponding to the current candidate set information field does not support performing joint transmission for the same user, the multi-AP scheme field does not include the full bandwidth J-TX field, or, value of the full bandwidth J-TX field indicates that the multi-AP candidate set corresponding to the current candidate set information field does not support joint transmission in full bandwidth.

In some embodiments, in the first frame, in case that value of the J-TX for single user field indicates that the multi-AP candidate set corresponding to the current candidate set information field does not support performing joint transmission for the same user, the multi-AP scheme field does not include the partial bandwidth J-TX field, or, value of the partial bandwidth J-TX field indicates that the multi-AP candidate set corresponding to the current candidate set information field does not support joint transmission in partial bandwidth.

In some embodiments, in the first frame, in case that value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, in the first frame, in case that the multi-AP scheme field does not include the J-TX with diversity field, the multi-AP candidate set corresponding to the current candidate set information field supports joint transmission of diversity type by default.

In some embodiments, in the first frame, in case that the multi-AP scheme field does not include the full bandwidth J-TX field, the multi-AP candidate set corresponding to the current candidate set information field supports joint transmission in full bandwidth by default.

In some embodiments, in the first frame, the multi-AP scheme field includes at least one of following: a C-OFDMA support field, a C-SR support field, a C-BF support field, a J-TX support field, and a C-UL MU MIMO support field.

In some embodiments, in the first frame, the multi-AP scheme field includes at least one of following: a C-SR support field, a C-BF support field, a J-TX support field, and a C-UL MU MIMO support field.

Specifically, the C-OFDMA support field (C-OFDMA Support) is configured to indicate whether the multi-AP candidate set corresponding to the current candidate set information field supports C-OFDMA. For example, as shown in FIG. 17, the C-OFDMA support field may occupy 1 bit.

For example, the value of the C-OFDMA support field equals to 1 means that the multi-AP candidate set corresponding to the current candidate set information field supports C-OFDMA; and the value of the C-OFDMA support field equals to 0 means that the multi-AP candidate set corresponding to the current candidate set information field does not support C-OFDMA.

For another example, the value of the C-OFDMA support field equals to 0 means that the multi-AP candidate set corresponding to the current candidate set information field supports C-OFDMA; and the value of the C-OFDMA support field equals to 1 means that the multi-AP candidate set corresponding to the current candidate set information field does not support C-OFDMA.

Specifically, the C-SR support field is configured to indicate whether the multi-AP candidate set corresponding to the current candidate set information field supports C-SR. For example, as shown in FIG. 17, the C-SR support field may occupy 1 bit.

For example, the value of the C-SR support field equals to 1 means that the multi-AP candidate set corresponding to the current candidate set information field supports C-SR; and the value of the C-SR support field equals to 0 means that the multi-AP candidate set corresponding to the current candidate set information field does not support C-SR.

For another example, the value of the C-SR support field equals to 0 means that the multi-AP candidate set corresponding to the current candidate set information field supports C-SR; and the value of the C-SR support field equals to 1 means that the multi-AP candidate set corresponding to the current candidate set information field does not support C-SR.

Specifically, the C-BF support field is configured to indicate whether the multi-AP candidate set corresponding to the current candidate set information field supports C-BF. For example, as shown in FIG. 13, the C-BF support field may occupy 1 bit.

For example, the value of the C-BF support field equals to 1 means that the multi-AP candidate set corresponding to the current candidate set information field supports C-BF; and the value of the C-BF support field equals to 0 means that the multi-AP candidate set corresponding to the current candidate set information field does not support C-BF.

For another example, the value of the C-BF support field equals to 0 means that the multi-AP candidate set corresponding to the current candidate set information field supports C-BF; and the value of the C-BF support field equals to 1 means that the multi-AP candidate set corresponding to the current candidate set information field does not support C-BF.

Specifically, the J-TX support field is configured to indicate whether the multi-AP candidate set corresponding to the current candidate set information field supports J-TX. For example, as shown in FIG. 17, the J-TX support field may occupy 1 bit.

For example, the value of the J-TX support field equals to 1 means that the multi-AP candidate set corresponding to the current candidate set information field supports J-TX; and the value of the J-TX support field equals to 0 means that the multi-AP candidate set corresponding to the current candidate set information field does not support J-TX.

For another example, the value of the J-TX support field equals to 0 means that the multi-AP candidate set corresponding to the current candidate set information field supports J-TX; and the value of the J-TX support field equals to 1 means that the multi-AP candidate set corresponding to the current candidate set information field does not support J-TX.

Specifically, the C-UL MU MIMO support field is configured to indicate whether the multi-AP candidate set corresponding to the current candidate set information field supports C-UL MU MIMO. For example, as shown in FIG. 17, the C-UL MU MIMO support field may occupy 1 bit.

For example, the value of the C-UL MU MIMO support field equals to 1 means that the multi-AP candidate set corresponding to the current candidate set information field supports C-UL MU MIMO; and the value of the C-UL MU MIMO support field equals to 0 means that the multi-AP candidate set corresponding to the current candidate set information field does not support C-UL MU MIMO.

For another example, the value of the C-UL MU MIMO support field equals to 0 means that the multi-AP candidate set corresponding to the current candidate set information field supports C-UL MU MIMO; and the value of the C-UL MU MIMO support field equals to 1 means that the multi-AP candidate set corresponding to the current candidate set information field does not support C-UL MU MIMO.

In some embodiments, in the first frame, in case that the multi-AP scheme support field does not include the C-OFDMA support field, the multi-AP candidate set corresponding to the current candidate set information field supports UL C-OFDMA and DL C-OFDMA by default.

In some embodiments, in the first frame, AP information fields of the multiple AP information fields include at least one of following: a Basic Service Set (BSS) ID field, an AP ID field, and an AP roles field.

The BSS ID field may be configured to indicate a BSS ID of an AP indicated by the AP information field. The AP ID field may be configured to indicate an ID of the AP indicated by the AP information field. The AP role field may be configured to indicate a multi-AP coordination role supported by the AP indicated by the AP information field.

Specifically, in the first frame, the BSS ID field is configured to indicate the BSS ID of the AP indicated by the AP information field. As shown in FIG. 16 and FIG. 17, the BSS ID field occupies 6 bytes.

Specifically, in the first frame, the AP ID field is configured to indicate the ID of the AP indicated by the AP information field. As shown in FIG. 16 and FIG. 17, the AP ID field occupies 1 byte.

Specifically, in the first frame, the AP role field is configured to indicate the multi-AP coordination role supported by the AP indicated by the AP information field. As shown in FIG. 16 and FIG. 17, the AP role field occupies 1 byte.

In some embodiments, in the first frame, the AP ID field is set directly by a master AP (MAP) or a coordinator, or the AP ID field is determined by an order of the AP in the multi-AP candidate set as indicated by the AP information field.

In some embodiments, in the first frame, the AP role field includes at least one of a coordinating AP role field, a coordinated AP role field, a sharing AP role field, and a shared AP role field.

Specifically, in a channel sounding phase, a coordinating AP indicated by the coordinating AP role field initiates channel sounding, and an AP indicated by the coordinated AP role field participates in the channel sounding. In a preparation phase and/or a transmission phase, an AP indicated by the sharing AP role field may share a transmission opportunity (TXOP) resource thereof with an AP indicated by the shared AP role field, to perform coordination transmission.

For example, as shown in FIG. 16 and FIG. 17, the coordinating AP role field may occupy 1 bit, the coordinated AP role field may occupy 1 bit, the sharing AP role field may occupy 1 bit, and the shared AP role field may occupy 1 bit.

Therefore, in an embodiment of the disclosure, a flow of discovering the multi-AP candidate set by the STA is devised, and parameter setting to be performed in discovering the multi-AP candidate set is devised in detail, providing sufficient information for implementing multi-AP coordinated transmission.

FIG. 19 is a flowchart of a method 300 for wireless communication according to embodiments of the disclosure. As shown in FIG. 19, the method 300 for wireless communication may include at least some contents as follows.

In S310, a station (STA) sends an association request frame to a first access point (AP). The association request frame is used to request association with the first AP. The association request frame includes at least one piece of indication formation. The at least one piece of indication information is configured to indicate at least one of: a service set identifier (SSID) of at least one VBSS with which the STA requests to be associated, or at least one legacy SSID with which the STA requests to be associated. The legacy SSID is a string. The string is used to identify infrastructure basic service sets (BSSs) that comprise an extended service set (ESS) or The string is used to identify a non-infrastructure BSS.

In S320, the first AP sends an association response frame to the STA. The association response frame at least includes association identifier (AID) information corresponding to legacy SSID(s) with which the STA requests to be associated and/or information of virtual AID (VAID) corresponding to SSID(s) of VBSS(s) with which the STA requests to be associated.

In S330, the first AP sends shared information to a second AP. The second AP and the first AP belong to a same legacy service set identifier (SSID), or the second AP and the first AP belong to a same SSID of VBSS. The shared information includes a media access control (MAC) address of the STA and/or multi-AP coordination capability information of the STA.

In S340, the first AP receives confirmation information sent by the second AP. The confirmation information is used to indicate whether the second AP accepts an association request of the STA.

Note that foregoing S330 and S340 are optional, and may not be implemented in some cases.

In some embodiments, the first AP sends the shared information to the second AP after receiving the association request frame sent by the STA and before sending the association response frame to the STA. That is, foregoing S330 and S340 may occur between S310 and S320, or at least the foregoing S330 may occur between S310 and S320.

In some embodiments, the first AP sends the shared information to the second AP after sending the association response frame to the STA. That is, foregoing S330 and S340 may occur after S320.

In an embodiment of the disclosure, one AP may belong to one or more multi-AP candidate sets.

In an embodiment of the disclosure, each multi-AP candidate set may have just one MAP, with the remaining AP(s) being SAP(s).

In an embodiment of the disclosure, each multi-AP candidate set may support one or more multi-AP coordination modes.

In an embodiment of the disclosure, the legacy SSID is a string used to identify the infrastructure basic service sets (BSSs) that comprise an extended service set (ESS), or a string used to identify a non-infrastructure BSS.

In an embodiment of the disclosure, an SSID of VBSS is a string used to identify the multi-AP candidate set (or VBSS).

In some embodiments, the STA requests, to the first AP, to be associated with a multi-AP candidate set after the STA has been associated with the first AP. That is, the STA may first associate with a nearby AP (such as an anchor AP or a MAP), and then request, to the AP, to be associated with a corresponding multi-AP candidate set. That is, in the embodiment, the first AP may be an anchor AP or a MAP.

In some embodiments, the STA requests, to the first AP, to be associated with a multi-AP candidate set while the STA is requesting to be associated with the first AP. That is, the STA requests, to a nearby AP (such as an anchor AP or a MAP), to be associated with the AP and a corresponding multi-AP candidate set simultaneously. That is, in the embodiment, the first AP may be an anchor AP or a MAP.

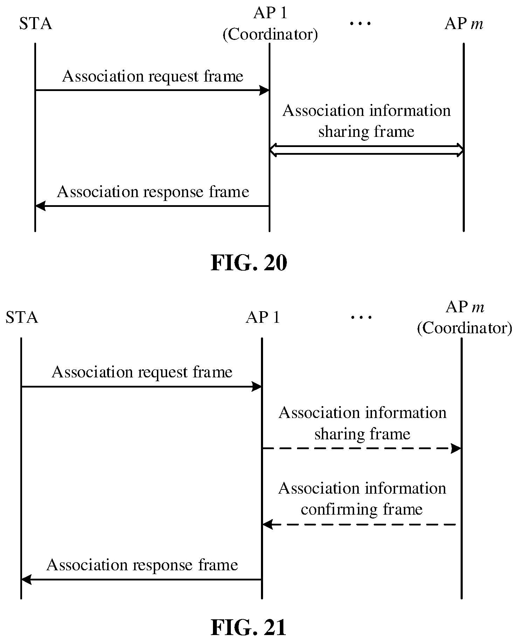

Specifically, for example, FIG. 20 is a basic flow of how a STA requests to be associated with a multi-AP candidate set. For example, in FIG. 20, the STA sends a request for association directly to an AP 1 owning a coordinator, which includes specific operations as follows. 1) The STA sends, to the AP 1, an association request frame requesting to be associated with the AP 1. An SSID element/SSID list element added to the association request frame indicates that the STA is to associate with a corresponding VBSS through the AP 1. 2) The AP 1 with which the STA requests to be associated shares (association) information of the STA with other APs in a VBSS with which the STA requests to be associated. 3) The AP allocates an AID and a virtual AID (VAID) to the STA and informs the STA of a coordinator key holder ID, a key generation method indicator, etc., through the association response frame. The coordinator key holder ID is configured to generate a PMK (or GMK).

Note that if the AP with which the STA requests to be associated is a coordinator and media access control (MAC) layer framing is implemented at the coordinator, then the coordinator does not have to share the (association) information of the STA with the other APs in the VBSS in a foregoing operation 2) in FIG. 20. If a foregoing operation 2) in FIG. 20 is to be implemented, the coordinator may share the (association) information of the STA to the other APs at certain time between the association request frame and the association response frame, or at certain time after association response.

In some embodiments, in case the first AP is a coordinator and that media access control (MAC) layer framing is implemented by the coordinator, the first AP does not have to share related information of the STA with other AP(s) corresponding to a multi-AP candidate set with which the STA requests to be associated.

In some embodiments, the coordinator key holder ID is configured to generate a pairwise transient key (PTK) and/or a group temporal key (GTK), and, a pairwise master key (PMK) and/or a group master key (GMK), between the STA and the coordinator.

In some embodiments, in case the first AP is a coordinator and that media access control (MAC) layer framing is implemented by the coordinator, the first AP directly sets up a pairwise transient key (PTK) and/or a group temporal key (GTK), and, a pairwise master key (PMK) and/or a group master key (GMK), with the STA.

In some embodiments, in case the first AP is a coordinator and that media access control (MAC) layer framing is implemented by the coordinator, the first AP sends a trigger frame to other AP(s) corresponding to the multi-AP candidate set with which the STA requests to be associated. A transmission mode and a resource designated in the trigger frame are configured for a corresponding AP to send data shared by the first AP to the STA.

In some embodiments, a receiving address (RA) field of the association request frame indicates a basic service set identifier (BSSID) of an AP with which the STA requests to be associated, or, the RA field of the association request frame indicates a media access control (MAC) address of the AP with which the STA requests to be associated.

In some embodiments, in case the first AP is a coordinator, the first AP directly shares association information of the STA with other AP(s) corresponding to a multi-AP candidate set with which the STA requests to be associated.

In some embodiments, in case the first AP is a non-coordinator, the first AP shares the association information of the STA with a coordinator corresponding to the multi-AP candidate set with which the STA requests to be associated. Then, the coordinator corresponding to the multi-AP candidate set with which the STA requests to be associated shares the association information of the STA with the other AP(s) corresponding to the multi-AP candidate set with which the STA requests to be associated.

In some embodiments, as shown in FIG. 21, in case the AP 1 (i.e., the first AP in the disclosure) is a non-coordinator, the coordinator is located at the other AP(s) corresponding to the multi-AP candidate set with which the STA requests to be associated. The coordinator (AP) interacts with the any other APs through wireless connection. An association info share (Association Info. Share) frame and an association info confirm (Association Info. Confirm, Ack) frame are to be devised.

Specifically, for example, in FIG. 21, temporal key(s) is generated by a VBSS coordinator (i.e., the coordinator corresponding to the multi-AP candidate set with which the STA requests to be associated), which includes specific operations as follows. The AP 1 shares the MAC address (and information such as multi-AP transmission capability, etc.) of the STA 1 with the coordinator through the association info share frame. The coordinator sends the coordinator key holder ID to the STA 1 through the AP 1. Then, the PTK (or GTK) and the PMK (or GMK) between the STA 1 and the coordinator are generated.

Specifically, as another example, in FIG. 21, temporal key(s) is generated by individual APs (i.e., other APs corresponding to the multi-AP candidate set with which the STA requests to be associated), which includes specific operations as follows. The STA 1 sends, to the AP 1, an association request frame (further including information such as multi-AP capability, etc., of the STA 1) requesting association with the individual APs (including the coordinator) in the VBSS. The AP 1 shares the MAC address (and information such as multi-AP transmission capability, etc.) of the STA 1 with the coordinator through the association info share (Association Info. Share) frame. The coordinator may also send the coordinator key holder ID to other APs in the VBSS through the association info share frame. The other APs in the VBSS derive the PMK (or GMK) of AP from the PMK (or GMK) of the coordinator. The AP 1 sends information such as the coordinator key holder ID, etc., to the STA 1 through the association response frame. Then, the STA 1 may generate the PTKs (or GTKs) with the coordinator and the other APs in the VBSS. The STA 1 may communicate directly with the individual APs.

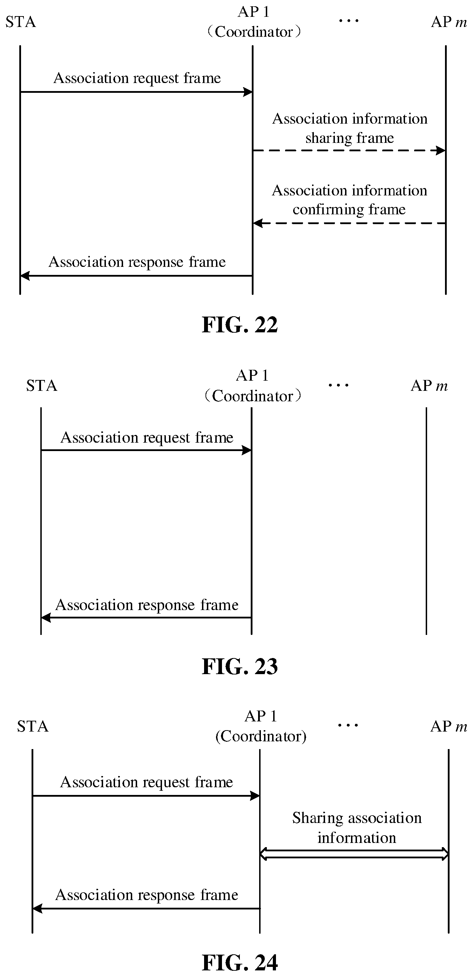

In some embodiments, the coordinator is located at an AP with which the STA is associated (i.e., the first AP in the disclosure). As shown in FIG. 22, the coordinator is located at the AP with which the STA is associated, and the coordinator (AP) needs to perform wireless interaction with other APs.

Specifically, for example, in FIG. 22, a temporal key is generated by a VBSS coordinator (i.e., the coordinator corresponding to the multi-AP candidate set with which the STA requests to be associated), which includes specific operations as follows. The STA 1 sends, to the coordinator, the association request frame (further including information such as multi-AP capability, etc., of the STA 1) requesting association with the coordinator. The coordinator informs other AP(s) of the MAC address (and information such multi-AP transmission capability, etc.) of the STA 1 through the association info share frame. The association response frame sent by the coordinator to the STA 1 includes at least the coordinator key holder ID configured to generate the PMK (or GMK) and the PTK (or GTK) between the STA 1 and the coordinator. The STA 1 may communicate directly with the coordinator. Any frame sent by other AP(s) to the STA 1 or any frame sent by the STA 1 to remaining AP(s) is relayed to the coordinator for processing.

Specifically, for example, in FIG. 22, temporal key(s) are generated by individual APs (i.e., other APs corresponding to the multi-AP candidate set with which the STA requests to be associated), which includes specific operations as follows. The STA 1 sends, to the coordinator, an association request frame (further including information such as multi-AP capability, etc., of the STA 1) requesting association with the individual APs (including the coordinator) in the VBSS. The coordinator shares the coordinator key holder ID and the MAC address (and information such as multi-AP transmission capability, etc.) of the STA 1 with others AP through the association info share frame. The other APs each derives respective PMK (or GMK) of the AP itself through the PMK (or GMK) of the coordinator, and then respectively generate PTK (or GTK) between itself and the STA 1. The association response frame sent by the coordinator to the STA 1 includes at least the coordinator key holder ID configured to generate the PMK (or GMK) and the PTK (or GTK) between the STA 1 and the coordinator. The STA 1 may communicate directly with the individual APs.

In some embodiments, the coordinator is located at an AP with which the STA is associated (i.e., the first AP in the disclosure). As shown in FIG. 23, the coordinator is located at the AP with which the STA is associated, and the coordinator (AP) does not have to interact with other AP(s).

Specifically, for example, in FIG. 23, temporal key(s) is generated by a VBSS coordinator (i.e., the coordinator corresponding to the multi-AP candidate set with which the STA requests to be associated), which includes specific operations as follows. The STA 1 sends, to the coordinator, the association request frame (further including information such as multi-AP capability, etc., of the STA 1) requesting association with the coordinator. The association response frame sent by the coordinator to the STA 1 includes at least the coordinator key holder ID configured to generate the PMK and the PTK (GTK) between the STA 1 and the coordinator. The STA 1 may communicate directly with the coordinator. Any frame sent by other AP(s) to the STA 1 or any frame sent by the STA 1 to remaining AP(s) is relayed to the coordinator for processing.

Specifically, for example, in FIG. 23, temporal key(s) are generated by individual APs (i.e., other APs corresponding to the multi-AP candidate set with which the STA requests to be associated). In this case, the coordinator is to exchange the (association) information of the STA with other APs. The following specific operations are included. The STA 1 sends, to the coordinator, an association request frame (further including information such as multi-AP capability, etc., of the STA 1) requesting association with the individual APs (including the coordinator) in the VBSS. The coordinator shares the coordinator key holder ID and the MAC address (and information such as multi-AP transmission capability, etc.) of the STA 1 with other APs through the association info share frame. The other APs each derives respective PMK (or GMK) of the AP itself through the PMK (or GMK) of the coordinator, and then generate respective PTK (or GTK) between the AP itself and the STA 1. The association response frame sent by the coordinator to the STA 1 includes at least the coordinator key holder ID configured to generate the PMK and the PTK (or GTK) between the STA 1 and the coordinator. The STA 1 may communicate directly with the individual APs.

In some embodiments, in the architecture of wired multi-AP coordination, as shown in (a) of FIG. 9, a coordinator in a network is located in a certain AP, and controls other APs through wired connection. Specifically, the coordinator is located at the AP with which the STA is associated (i.e., the first AP in the disclosure). As shown in FIG. 24, the coordinator is located at the AP with which the STA is associated, and the coordinator (AP) is to perform wired interaction with the other AP(s).

Specifically, for example, in FIG. 24, temporal key(s) is generated by a VBSS coordinator (i.e., the coordinator corresponding to the multi-AP candidate set with which the STA requests to be associated), which includes specific operations as follows. The STA 1 sends, to the coordinator, the association request frame (further including information such as multi-AP capability, etc., of the STA 1) requesting association with the coordinator. The coordinator informs other AP(s) of the MAC address (and information such multi-AP transmission capability, etc.) of the STA 1 by sharing the association information. The association response frame sent by the coordinator to the STA 1 includes at least the coordinator key holder ID configured to generate the PMK and the PTK (or GTK) between the STA 1 and the coordinator. The STA 1 may communicate directly with the coordinator. Any frame sent by other AP(s) to the STA 1 or by the STA 1 to remaining AP(s) is relayed to the coordinator for processing.

Specifically, for example, in FIG. 24, temporal key(s) are generated by individual APs (i.e., other APs corresponding to the multi-AP candidate set with which the STA requests to be associated), which includes specific operations as follows. The STA 1 sends, to the coordinator, an association request frame (further including information such as multi-AP capability, etc., of the STA 1) requesting association with the individual APs (including the coordinator) in the VBSS. The coordinator shares the coordinator key holder ID and the MAC address (and information such as multi-AP transmission capability, etc.) of the STA 1 with other AP(s) by sharing the association information. The other APs each derives respective PMK (or GMK) of the AP itself through the PMK (or GMK) of the coordinator, and then generate respective PTK (or GTK) between the AP itself and the STA 1. The association response frame sent by the coordinator to the STA 1 includes at least the coordinator key holder ID configured to generate the PMK and the PTK (or GTK) between the STA 1 and the coordinator. The STA 1 may communicate directly with the individual APs.

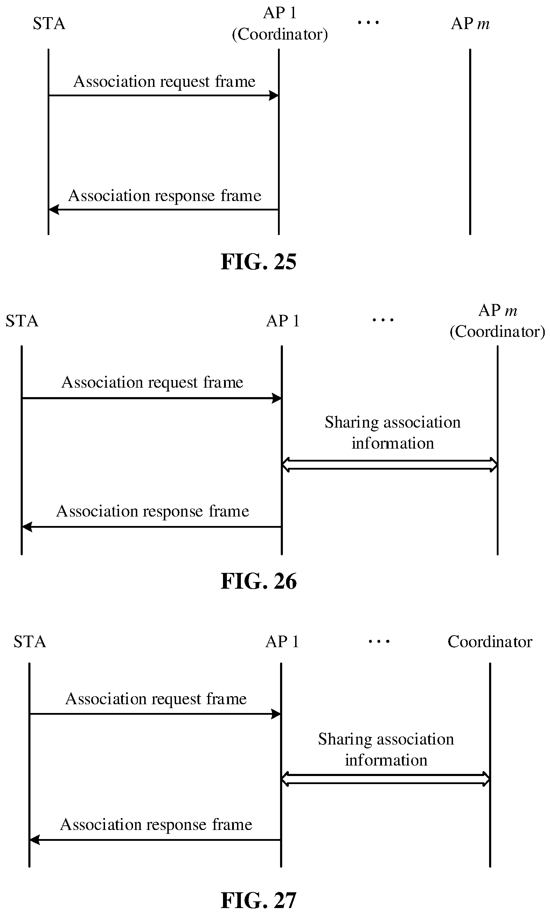

In some embodiments, in the architecture of wired multi-AP coordination, as shown in (a) of FIG. 9, a coordinator in a network is located in a certain AP, and controls other AP(s) through wired connection. Specifically, the coordinator is located at the AP with which the STA is associated (i.e., the first AP in the disclosure). As shown in FIG. 25, the coordinator is located at the AP with which the STA is associated, and the coordinator (AP) does not have to perform wired exchange or interaction with the another AP.

Specifically, for example, in FIG. 25, temporal key(s) is generated by a VBSS coordinator (i.e., the coordinator corresponding to the multi-AP candidate set with which the STA requests to be associated), which includes specific operations as follows. The STA 1 sends, to the coordinator, the association request frame (further including information such as multi-AP capability, etc., of the STA 1) requesting association with the coordinator. The association response frame sent by the coordinator to the STA 1 includes at least the coordinator key holder ID configured to generate the PMK and the PTK (or GTK) between the STA 1 and the coordinator. The STA 1 may communicate directly with the coordinator. Any frame sent by other(s) AP to the STA 1 or by the STA 1 to remaining AP(s) is relayed to the coordinator for processing.

Specifically, for example, in FIG. 25, temporal key(s) are generated by individual APs (i.e., other APs corresponding to the multi-AP candidate set with which the STA requests to be associated). In this case, the coordinator is to exchange the (association) information of the STA with other APs. The following specific operations are included. The STA 1 sends, to the coordinator, an association request frame (further including information such as multi-AP capability, etc., of the STA 1) requesting association with the individual APs (including the coordinator) in the VBSS. The coordinator shares the coordinator key holder ID and the MAC address (and information such as multi-AP transmission capability, etc.) of the STA 1 with other APs by sharing the association information, i.e., through the shared association information. The other APs each derives respective PMK (or GMK) of the AP itself through the PMK (or GMK) of the coordinator, and then generate respective PTK (or GTK) between the other APs and the STA 1. The association response frame sent by the coordinator to the STA 1 includes at least the coordinator key holder ID configured to generate the PMK and the PTK (or GTK) between the STA 1 and the coordinator. The STA 1 may communicate directly with the individual APs.

In some embodiments, in the architecture of wired multi-AP coordination, as shown in (a) of FIG. 9, a coordinator in a network is located in a certain AP, and controls other APs through wired connection. Specifically, the coordinator is located at another AP corresponding to the multi-AP candidate set with which the STA requests to be associated. As shown in FIG. 26, the coordinator (AP) interacts with other APs through wired connection.

Specifically, for example, in FIG. 26, temporal key(s) is generated by a VBSS coordinator (i.e., the coordinator corresponding to the multi-AP candidate set with which the STA requests to be associated), which includes specific operations as follows. The AP 1 shares the MAC address (and information such as multi-AP transmission capability, etc.) of the STA 1 with the coordinator in the shared association information. The coordinator sends the coordinator key holder ID to the STA 1 through the AP 1. Then, the PTK (or GTK) and the PMK (or GMK) between the STA 1 and the coordinator are generated.

Specifically, as another example, in FIG. 26, temporal key(s) are generated by individual APs (i.e., any other APs corresponding to the multi-AP candidate set with which the STA requests to be associated), which includes specific operations as follows. The STA 1 sends, to the AP 1, an association request frame (further including information such as multi-AP capability, etc., of the STA 1) requesting association with the individual APs (including the coordinator) in the VBSS. The AP 1 shares the MAC address (and information such as multi-AP transmission capability, etc.) of the STA 1 with the coordinator through the shared association information. The coordinator may also send the coordinator key holder ID to other AP(s) in the VBSS through the shared association information. The other AP(s) in the VBSS derives the PMK (or GMK) of AP from the PMK (or GMK) of the coordinator. The AP 1 sends information such as the coordinator key holder ID, etc., to the STA 1 through the association response frame. Then, the STA 1 may generate the PTKs (or GTKs) with the coordinator and the other AP(s) in the VBSS. The STA 1 may communicate directly with the individual APs.

In some embodiments, in the architecture of wired multi-AP coordination, as shown in (b) of FIG. 9, there is a standalone coordinator in the network. The standalone coordinator controls other APs through wired connection. As shown in FIG. 27, the coordinator interacts with APs through wired connection.

Specifically, for example, in FIG. 27, temporal key(s) is generated by a VBSS coordinator (i.e., the coordinator corresponding to the multi-AP candidate set with which the STA requests to be associated), which includes specific operations as follows. The AP 1 shares the MAC address (and information such as multi-AP transmission capability, etc.) of the STA 1 with the coordinator in the shared association information. The coordinator sends the coordinator key holder ID to the STA 1 through the AP 1. Then, the PTK (or GTK) and the PMK (or GMK) between the STA 1 and the coordinator are generated.

Specifically, as another example, in FIG. 27, temporal key(s) are generated by individual APs (i.e., any other APs corresponding to the multi-AP candidate set with which the STA requests to be associated), which includes specific operations as follows. The STA 1 sends, to the AP 1, an association request frame (further including information such as multi-AP capability, etc., of the STA 1) requesting association with the individual APs (including the coordinator) in the VBSS. The AP 1 shares the MAC address (and information such as multi-AP transmission capability, etc.) of the STA 1 with the coordinator through the shared association information. The coordinator may also send the coordinator key holder ID to other AP(s) in the VBSS through the shared association information. The other AP(s) in the VBSS derives the PMK (or GMK) of AP from the PMK (or GMK) of the coordinator. The AP 1 sends information such as the coordinator key holder ID, etc., to the STA 1 through the association response frame. Then, the STA 1 may generate the PTKs (or GTKs) with the coordinator and the other AP(s) in the VBSS. The STA 1 may communicate directly with the individual APs.

In some embodiments, the association request frame further includes information of multi-AP coordination capability of the STA.

In some embodiments, the association request frame includes at least one of a first SSID field, a second SSID field, an SSID list field, and a multi-AP coordination capability of STA field.

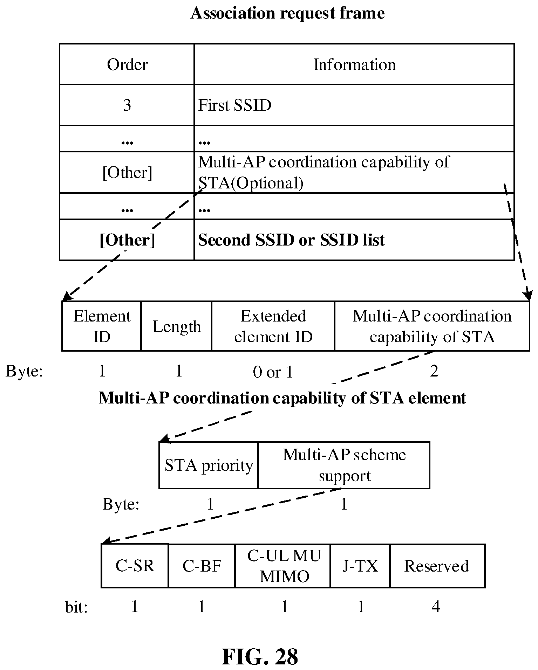

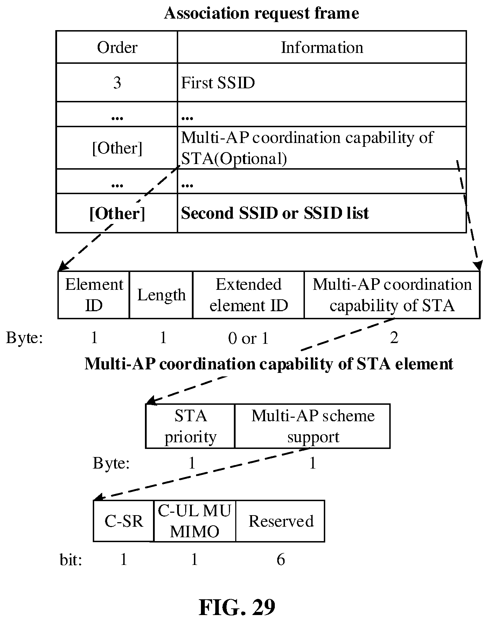

Specifically, the first SSID field indicates one legacy SSID with which the STA requests to be associated. For example, as shown in FIG. 28 and FIG. 29, the association request frame includes a first SSID element. The first SSID element may include at least the first SSID field.

Specifically, the second SSID field indicates one SSID of VBSS with which the STA requests to be associated. For example, as shown in FIG. 28 and FIG. 29, the association request frame includes a second SSID element. The second SSID element may include at least the second SSID field.

Specifically, the SSID list field is used to request multiple SSIDs. The multiple SSIDs include legacy SSID(s) and/or SSID(s) of VBSS(s). For example, as shown in FIG. 28 and FIG. 29, the association request frame includes an SSID list element. The SSID list element may include at least the SSID list field.

Specifically, the multi-AP coordination capability of STA field is used to indicate the multi-AP coordination capability information of the STA. For example, as shown in FIG. 28 and FIG. 29, the association request frame includes a multi-AP coordination capability of STA element. The multi-AP coordination capability of STA element may include an element ID field (occupying 1 byte), a length field (occupying 1 byte), an extended element ID field (occupying 0 or 1 byte), and the multi-AP coordination capability of STA field (occupying 2 bytes).

In some embodiments, the association request frame includes at least one of an SSID field, a selected multi-AP candidate set field, and a multi-AP coordination capability of STA field.

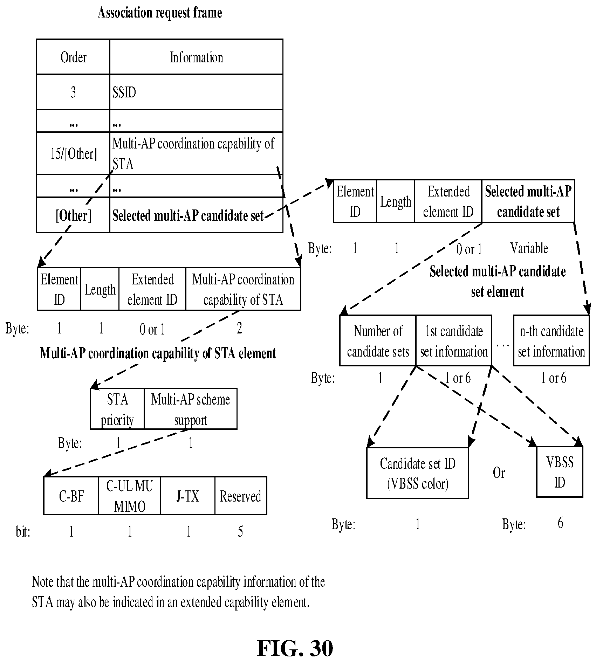

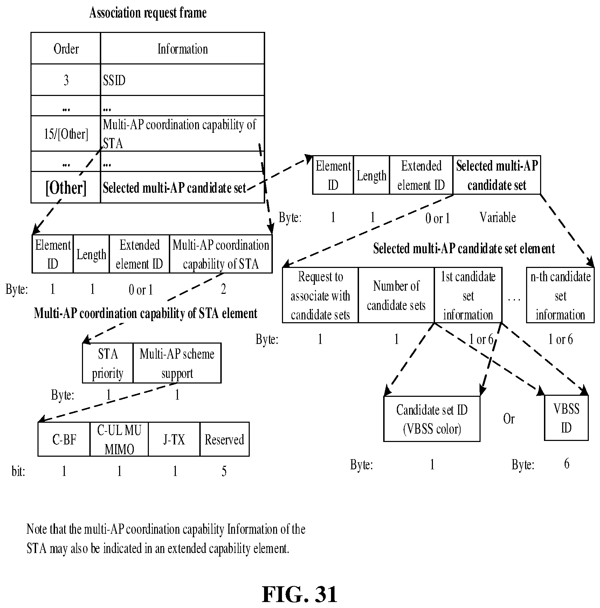

Specifically, the SSID field is used to indicate one legacy SSID with which the STA requests to be associated. For example, as shown in FIG. 30 and FIG. 31, the association request frame includes an SSID element. The SSID element may include at least the SSID field.

Specifically, the selected multi-AP candidate set field is used to indicate related information of at least one multi-AP candidate set with which the STA requests to be associated. For example, as shown in FIG. 30 and FIG. 31, the association request frame includes a selected multi-AP candidate set element. The selected multi-AP candidate set element may include an element ID field (occupying 1 byte), a length field (occupying 1 byte), an extended element ID field (occupying 0 or 1 byte), and the selected multi-AP candidate set field (occupying a variable number of bytes).

Specifically, the multi-AP coordination capability of STA field is used to indicate the multi-AP coordination capability information of the STA. For example, as shown in FIG. 30 and FIG. 31, the association request frame includes a multi-AP coordination capability of STA element. The multi-AP coordination capability of STA element may include an element ID field (occupying 1 byte), a length field (occupying 1 byte), an extended element ID field (occupying 0 or 1 byte), and the multi-AP coordination capability of STA field (occupying 2 bytes).

In some embodiments, the selected multi-AP candidate set field includes a number of candidate sets field and at least one candidate set information field.

Specifically, the number of candidate sets field indicates the number of multi-AP candidate sets with which the STA requests to be associated. For example, as shown in FIG. 30 and FIG. 31, the number of candidate sets field occupies 1 byte.

Specifically, an n-th candidate set information field of the at least one candidate set information field indicates related information of an n-th multi-AP candidate set with which the STA requests to be associated. n is a positive integer. For example, as shown in FIG. 30 and FIG. 31, candidate set information field(s) of the at least one candidate set information field occupies 1 byte or 6 bytes.

In some embodiments, candidate set information field(s) of the at least one candidate set information field includes a candidate set identifier (ID) field or a VBSS ID field.

Specifically, the candidate set ID field indicates an ID of a multi-AP candidate set corresponding to the current candidate set information field. For example, as shown in FIG. 30 and FIG. 31, the candidate set ID field occupies 1 byte.

In some embodiments, the candidate set ID field may also be replaced with a VBSS color field, as shown in FIG. 30 and FIG. 31.

Specifically, the VBSS ID field indicates a VBSS ID of the multi-AP candidate set corresponding to the current candidate set information field. For example, as shown in FIG. 30 and FIG. 31, the VBSS ID field occupies 6 bytes.

In some embodiments, the selected multi-AP candidate set field further includes a request to associate with candidate sets field (Request To Associate with Candidate Sets field). The request to associate with candidate sets field may be configured to indicate that the STA requests to be associated with a related multi-AP candidate set, or, that the STA requests not to be associated with a related multi-AP candidate set. For example, as shown in FIG. 31, the request to associate with candidate sets field occupies 1 byte.

For example, the value of Request To Associate with Candidate Sets equals to 1, representing that the STA requests association with the related multi-AP candidate set, and the current AP may transfer the association information of the STA to remaining member APs. the value of Request To Associate with Candidate Sets equals to 0, representing that the STA is just associated with the current AP, and is not associated with the related multi-AP candidate set.

As another example, the value of Request To Associate with Candidate Sets equals to 0, representing that the STA requests association with the related multi-AP candidate set, and the current AP may transfer the association information of the STA to the remaining member APs. the value of Request To Associate with Candidate Sets equals to 1, representing that the STA is just associated with just the current AP, and is not associated with the related multi-AP candidate set.

Note that the request to associate with candidate sets field may also be implemented through a reserved bit in another element or field in the association request frame.

In some embodiments, the multi-AP coordination capability of STA field includes a STA priority field and a multi-AP scheme support field.

Specifically, the STA priority field indicates information of a priority of the STA in taking part in a multi-AP transmission or reception mechanism. For example, as shown in FIG. 28 to FIG. 31, the STA priority field occupies 1 byte.

Specifically, the multi-AP scheme support field indicates a multi-AP coordination mode supported by the STA. For example, as shown in FIG. 28 to FIG. 31, the multi-AP scheme support field occupies 1 byte.

In some embodiments, the multi-AP scheme support field includes at least one of a joint coordinated spatial reuse (C-SR) field, a coordinated beamforming (C-BF) field, a coordinated uplink multiple-user multiple input multiple output (C-UL MU MIMO) field, and a joint transmission (J-TX) field.

Specifically, as shown in FIG. 28, the multi-AP scheme support field includes the C-SR field (occupying 1 bit), the C-BF field (occupying 1 bit), the C-UL MU MIMO field (occupying 1 bit), and the J-TX field (occupying 1 bit).

Specifically, as shown in FIG. 30 and FIG. 31, the multi-AP scheme support field includes the C-BF field (occupying 1 bit), the C-UL MU MIMO field (occupying 1 bit), and the J-TX field (occupying 1 bit).

In some embodiments, the multi-AP scheme support field includes at least one of the C-SR field and the C-UL MU MIMO field. Specifically, as shown in FIG. 29, the multi-AP scheme support field includes the C-SR field (occupying 1 bit) and the C-UL MU MIMO field (occupying 1 bit).

Specifically, the C-SR field indicates whether the STA supports C-SR.

For example, the value of C-SR field equals to 1 represents that the STA supports C-SR. The value of C-SR field equals to 0 represents that the STA does not support C-SR.

As another example, the value of C-SR field equals to 0 represents that the STA supports C-SR. The value of C-SR field equals to 1 represents that the STA does not support C-SR.

Specifically, C-BF field indicates whether the STA supports C-BF.

For example, the value of C-BF field equals to 1 represents that the STA supports C-BF. The value of C-BF field equals to 0 represents that the STA does not support C-BF.

As another example, the value of C-BF field equals to 0 represents that the STA supports C-BF. The value of C-BF field equals to 1 represents that the STA does not support C-BF.

Specifically, C-UL MU MIMO field indicates whether the STA supports C-UL MU MIMO.

For example, the value of C-UL MU MIMO field equals to 1 represents that the STA supports C-UL MU MIMO. the value of C-UL MU MIMO field equals to 0 represents that the STA does not support C-UL MU MIMO.

As another example, the value of C-UL MU MIMO field equals to 0 represents that the STA supports C-UL MU MIMO. the value of C-UL MU MIMO field equals to 1 represents that the STA does not support C-UL MU MIMO.

Specifically, J-TX field indicates whether the STA supports J-TX.

For example, the value of J-TX field equals to 1 represent that the STA supports J-TX. the value of J-TX field equals to 0 represents that the STA does not support J-TX.

As another example, the value of J-TX field equals to 0 represents that the STA supports J-TX. the value of J-TX field equals to 1 represents that the STA does not support J-TX.

In some embodiments, in case the multi-AP scheme support field does not include the C-BF field, the multi-AP coordination capability of STA field implies that the STA supports C-BF, and/or, the multi-AP coordination capability of STA field implies that the STA supports J-TX.

In some embodiments, the multi-AP coordination capability of STA field implies that the STA supports uplink (UL) coordinated orthogonal frequency division multiple access (C-OFDMA) and downlink (DL) C-OFDMA.

In some embodiments, the association response frame further includes coordinator key holder identifier (ID) information and key generation method information. The coordinator key holder ID information is configured to generate a PTK and/or a GTK, and, a PMK and/or a GMK, between the STA and a coordinator.

In some embodiments, the association response frame includes at least one of a status code field, an AID field, a VAID field, a key generation method field, a fast BSS transition element (FTE) field, a multi-AP candidate set information field, and a robust security network element (RSNE) field.

Specifically, the status code field indicates whether the STA is successfully associated with legacy SSID and/or SSID of VBSS with which the STA requests to be associated. The AID field indicates an AID allocated by an AP to the STA in a BSS. The VAID field indicates a VAID allocated by the AP to the STA in a VBSS. The key generation method field indicates the key generation method information. A parameter field included in the FTE field indicates the coordinator key holder ID information. The multi-AP candidate set information field indicates related information of a multi-AP candidate set with which the STA requests to be associated. The RSNE field instructs the STA to set up, directly with the coordinator, a PMK and/or a group master key (GMK), and, a PTK and/or a group temporal key (GTK).

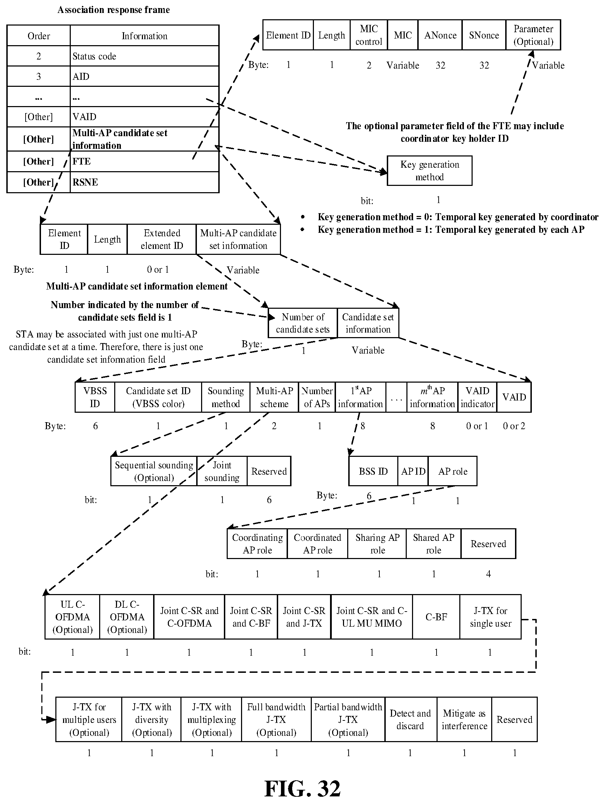

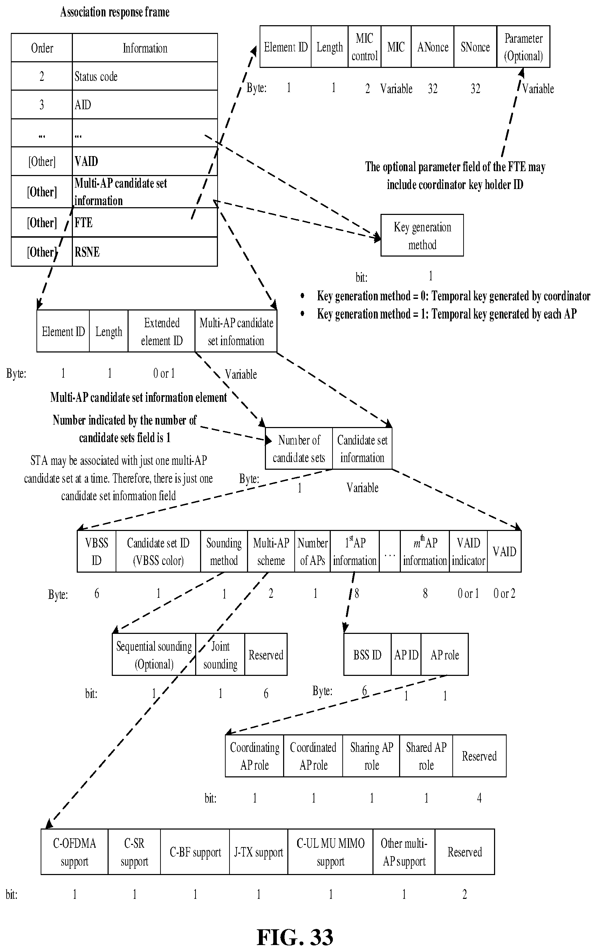

Specifically, for example, the association response frame is as shown in FIG. 32 and FIG. 33. The association response frame includes the status code field, the AID field, the VAID field, the key generation method field, the FTE field, the multi-AP candidate set information field, and the RSNE field.

Specifically, as shown in FIG. 32 and FIG. 33, the FTE field includes an element ID field (occupying 1 byte), a length field (occupying 1 byte), a message integrity code (MIC) control field (occupying 2 bytes), a MIC field (occupying a variable number of bytes), an authenticator nonce (ANonce) field (occupying 32 bytes), a supplicant nonce (SNonce) field (occupying 32 bytes), and the parameter field (occupying a variable number of bytes). The parameter field included in the FTE field indicates the coordinator key holder ID information.

In some embodiments, the association response frame includes at least one of a status code field, an AID field, a key generation method field, a fast BSS transition element (FTE) field, a multi-AP candidate set information field, and a robust security network element (RSNE) field.

The status code field indicates whether the STA is successfully associated with legacy SSID and/or SSID of VBSS with which the STA requests to be associated. The AID field indicates an AID allocated by an AP to the STA in a BSS. The AID field further indicates a VAID allocated by the AP to the STA in a VBSS. The key generation method field indicates the key generation method information. A parameter field included in the FTE field indicates the coordinator key holder ID information. The multi-AP candidate set information field indicates related information of a multi-AP candidate set with which the STA requests to be associated. The RSNE field instructs the STA to set up, directly with the coordinator, a PMK and/or a group master key (GMK), and, a PTK and/or a group temporal key (GTK).

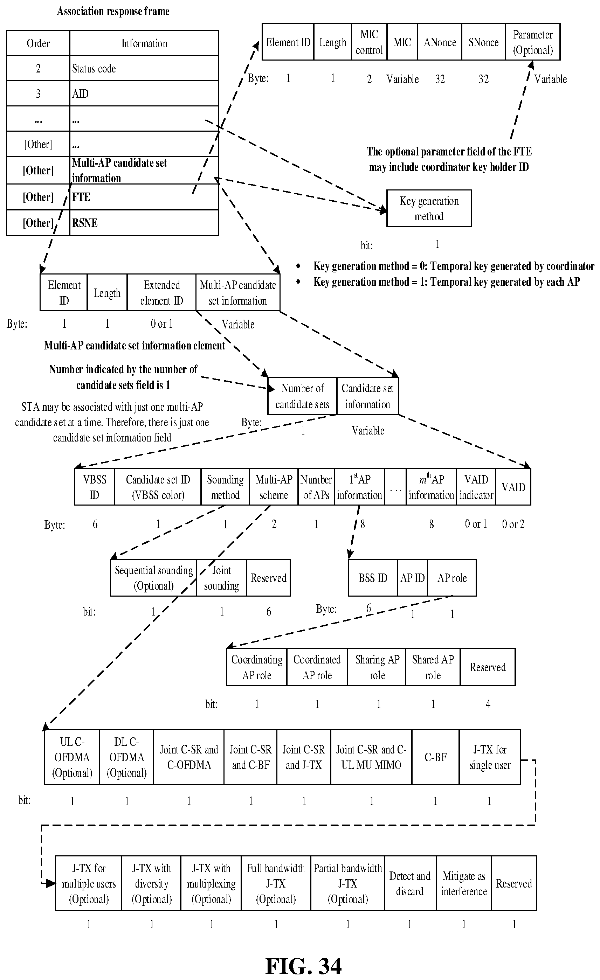

Specifically, for example, the association response frame is as shown in FIG. 34. The association response frame includes the status code field, the AID field, the key generation method field, the FTE field, the multi-AP candidate set information field, and the RSNE field. In this case, the AID field indicates the AID allocated by the AP to the STA in the BSS, and the AID field further indicates the VAID allocated by the AP to the STA in the VBSS.

In some embodiments, the association response frame includes at least one of a status code field, a first AID field, a second AID field, a key generation method field, a fast BSS transition element (FTE) field, a multi-AP candidate set information field, and a robust security network element (RSNE) field.

The status code field indicates whether the STA is successfully associated with legacy SSID and/or SSID of VBSS with which the STA requests to be associated. The first AID field indicates an AID allocated by an AP to the STA in a BSS. The second AID field indicates a VAID allocated by the AP to the STA in a VBSS. The key generation method field indicates the key generation method information. A parameter field included in the FTE field indicates the coordinator key holder ID information. The multi-AP candidate set information field indicates related information of a multi-AP candidate set with which the STA requests to be associated. The RSNE field instructs the STA to set up, directly with the coordinator, a PMK and/or a group master key (GMK), and, a PTK and/or a group temporal key (GTK).

For example, the parameter field included in the FTE field indicates the coordinator key holder ID information.

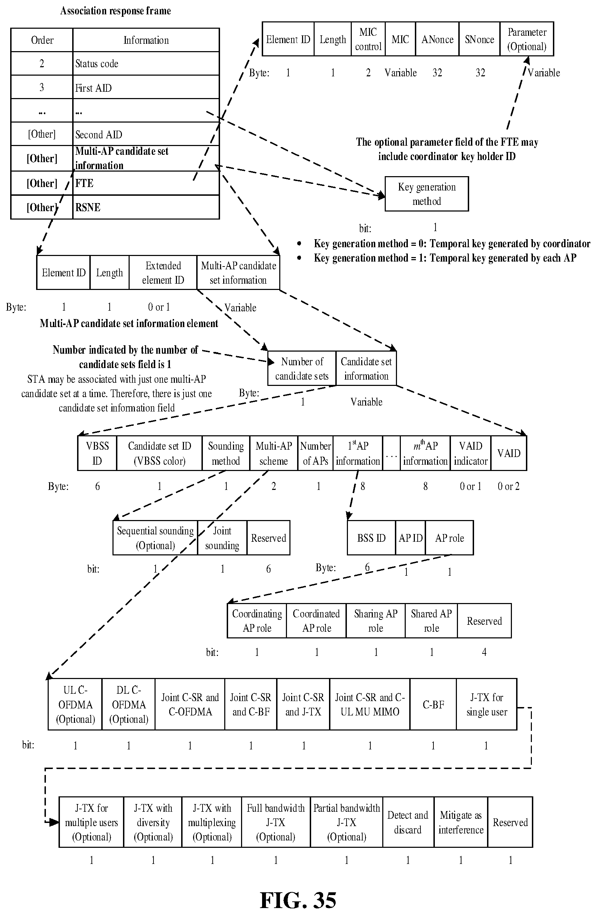

Specifically, for example, the association response frame is as shown in FIG. 35. The association response frame may include the status code field, the first AID field, the second AID field, the key generation method field, the FTE field, the multi-AP candidate set information field, and the RSNE field.

For example, the value of key generation method field equals to 0 represents that a temporal key is generated by a coordinator. The value of Key generation method field equals to 1 represents that temporal keys are generated by individual APs.

In some embodiments, the status code field indicating success (SUCCESS) represents that the STA is successfully associated with the legacy SSID and the SSID of VBSS, and/or the status code field indicating VBSS failure (FAILURE_VBSS) represents that the STA fails to be associated with the SSID of VBSS, and/or the status code field indicating failure (FAILURE) represents that the STA fails to be associated with the legacy SSID.

In some embodiments, in case the status code field indicates that the STA fails to be associated with the legacy SSID, the STA is to reinitiate an association request to associate with corresponding legacy SSID and SSID of VBSS.

In some embodiments, in case the status code field indicates that the STA fails to be associated with the SSID of VBSS with which the STA requests to be associated, the STA is to reinitiate an association request to associate with a corresponding SSID of VBSS.

In some embodiments, the multi-AP candidate set information field includes a candidate set information field. For example, as shown in FIG. 32 to FIG. 35, the multi-AP candidate set information field includes a number of candidate sets field (occupying 1 byte) and the candidate set information field (occupying a variable number of bytes).

Note that as the STA can associate with just one multi-AP candidate set at a time, the multi-AP candidate set information field includes just one candidate set information field.

In some embodiments, the candidate set information field includes at least one of a VBSS ID field, a candidate set ID field, a sounding method field, a multi-AP scheme field, a number of APs field, and multiple AP information fields.

In some embodiments, the candidate set information field includes at least one of the VBSS ID field, the candidate set ID field, a joint sounding support field, the multi-AP scheme field, the number of APs field, and the multiple AP information fields.

Specifically, the VBSS ID field is used to indicate VBSS ID(s) of the multi-AP candidate set with which the STA requests to be associated. For example, the VBSS ID field is as shown in FIG. 32 to FIG. 35 (occupying 6 bytes).

Specifically, the candidate set ID field is used to indicate an ID of the multi-AP candidate set with which the STA requests to be associated.

In some embodiments, the candidate set ID field may also be replaced with a VBSS color field. The VBSS color field may be used to indicate the multi-AP candidate set with which the STA requests to be associated.

For example, the candidate set ID field or the VBSS color field is as shown in FIG. 32 to FIG. 35 (occupying 0 or 1 byte).

Specifically, the sounding method field is used to indicate channel sounding method(s) supported by the multi-AP candidate set with which the STA requests to be associated. For example, the sounding method field is as shown in FIG. 32 to FIG. 35 (occupying 1 byte).

Specifically, the multi-AP scheme field is used to indicate multi-AP coordination mode(s) supported by the multi-AP candidate set with which the STA requests to be associated. For example, the multi-AP scheme field is as shown in FIG. 32 to FIG. 35 (occupying 1 byte).

Specifically, the number of APs field is used to indicate a number of member APs included in the multi-AP candidate set with which the STA requests to be associated. For example, the number of APs field is as shown in FIG. 32 to FIG. 35 (occupying 1 byte).

Specifically, an m-th AP information field of the multiple AP information fields is used to indicate related information of an m-th member AP of the multi-AP candidate set with which the STA requests to be associated. For example, an AP information field of the multiple AP information fields is as shown in FIG. 32 to FIG. 35 (occupying 8 bytes).

Specifically, the joint sounding support field is used to indicate whether the multi-AP candidate set with which the STA requests to be associated supports multiple APs to perform channel sounding simultaneously and synchronously.

In some embodiments, in case the candidate set information field includes the joint sounding support field, the multi-AP candidate set with which the STA requests to be associated supports the multiple APs to perform channel sounding sequentially by default.

In some embodiments, the sounding method field includes at least one of a sequential sounding field and a joint sounding field.

In some embodiments, the sounding method field includes only the joint sounding field.

Specifically, the sequential sounding field is used to indicate whether the multi-AP candidate set with which the STA requests to be associated supports the multiple APs to perform channel sounding sequentially by default. As shown in FIG. 32 to FIG. 35, the sequential sounding field is optional, and occupies 1 bit when present.

Specifically, the joint sounding field is used to indicate whether the multi-AP candidate set with which the STA requests to be associated supports the multiple APs to perform channel sounding simultaneously and synchronously. As shown in FIG. 32 to FIG. 35, the joint sounding field occupies 1 bit.

In some embodiments, in case the sounding method field does not include the sequential sounding field, the multi-AP candidate set with which the STA requests to be associated supports the multiple Aps to perform channel sounding sequentially by default.

In some embodiments, the multi-AP scheme field includes at least one of an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

In some embodiments, the multi-AP scheme field includes at least one of the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

Specifically, the UL C-OFDMA field is used to indicate whether the multi-AP candidate set with which the STA requests to be associated supports UL C-OFDMA. For example, as shown in FIG. 32, FIG. 34, and FIG. 35, the UL C-OFDMA field is optional, and occupies 1 bit when present.

For example, the value of UL C-OFDMA field equals to 1 represents that the multi-AP candidate set with which the STA requests to be associated supports UL C-OFDMA. the value of UL C-OFDMA field equals to 0 represents that the multi-AP candidate set with which the STA requests to be associated does not support UL C-OFDMA.

As another example, the value of UL C-OFDMA field equals to 0 represents that the multi-AP candidate set with which the STA requests to be associated supports UL C-OFDMA. the value of UL C-OFDMA field equals to 1 represents that the multi-AP candidate set with which the STA requests to be associated does not support UL C-OFDMA.

Specifically, the DL C-OFDMA field is used to indicate whether the multi-AP candidate set with which the STA requests to be associated supports DL C-OFDMA. For example, as shown in FIG. 32, FIG. 34, and FIG. 35, the DL C-OFDMA field is optional, and occupies 1 bit when present.

For example, the value of DL C-OFDMA field equals to 1 represents that the multi-AP candidate set with which the STA requests to be associated supports DL C-OFDMA. the value of DL C-OFDMA field equals to 0 represents that the multi-AP candidate set with which the STA requests to be associated does not support DL C-OFDMA.

As another example, the value of DL C-OFDMA field equals to 0 represents that the multi-AP candidate set with which the STA requests to be associated supports DL C-OFDMA. the value of DL C-OFDMA field equals to 1 represents that the multi-AP candidate set with which the STA requests to be associated does not support DL C-OFDMA.

Specifically, the joint C-SR and C-OFDMA field is used to indicate whether the multi-AP candidate set with which the STA requests to be associated supports simultaneous and joint use of C-SR and C-OFDMA. For example, as shown in FIG. 32, FIG. 34, and FIG. 35, the joint C-SR and C-OFDMA field occupies 1 bit.

For example, the value of joint C-SR and C-OFDMA field equals to 1 represents that the multi-AP candidate set with which the STA requests to be associated supports simultaneous and joint use of C-SR and C-OFDMA. the value of Joint C-SR and C-OFDMA field equals to 0 represents that the multi-AP candidate set with which the STA requests to be associated does not support simultaneous and joint use of C-SR and C-OFDMA.

As another example, the value of joint C-SR and C-OFDMA field equals to 0 represents that the multi-AP candidate set with which the STA requests to be associated supports simultaneous and joint use of C-SR and C-OFDMA. the value of Joint C-SR and C-OFDMA field equals to 1 represents that the multi-AP candidate set with which the STA requests to be associated does not support simultaneous and joint use of C-SR and C-OFDMA.

Specifically, the joint C-SR and C-BF field is used to indicate whether the multi-AP candidate set with which the STA requests to be associated supports simultaneous and joint use of C-SR and C-BF. For example, as shown in FIG. 32, FIG. 34, and FIG. 35, the joint C-SR and C-BF field occupies 1 bit.

For example, the value of joint C-SR and C-BF field equals to 1 represents that the multi-AP candidate set with which the STA requests to be associated supports simultaneous and joint use of C-SR and C-BF. the value of Joint C-SR and C-BF field equals to 0 represents that the multi-AP candidate set with which the STA requests to be associated does not support simultaneous and joint use of C-SR and C-BF.

As another example, the value of joint C-SR and C-BF field equals to 0 represents that the multi-AP candidate set with which the STA requests to be associated supports simultaneous and joint use of C-SR and C-BF. the value of Joint C-SR and C-BF field equals to 1 represents that the multi-AP candidate set with which the STA requests to be associated does not support simultaneous and joint use of C-SR and C-BF.

Specifically, the joint C-SR and J-TX field is used to indicate whether the multi-AP candidate set with which the STA requests to be associated supports simultaneous and joint use of C-SR and J-TX. For example, as shown in FIG. 32, FIG. 34, and FIG. 35, the joint C-SR and J-TX field occupies 1 bit.

For example, the value of joint C-SR and J-TX field equals to 1 represents that the multi-AP candidate set with which the STA requests to be associated supports simultaneous and joint use of C-SR and J-TX. the value of Joint C-SR and J-TX field equals to 0 represents that the multi-AP candidate set with which the STA requests to be associated does not support simultaneous and joint use of C-SR and J-TX.

As another example, the value of joint C-SR and J-TX field equals to 0 represents that the multi-AP candidate set with which the STA requests to be associated supports simultaneous and joint use of C-SR and J-TX. the value of Joint C-SR and J-TX field equals to 1 represents that the multi-AP candidate set with which the STA requests to be associated does not support simultaneous and joint use of C-SR and J-TX.

Specifically, the joint C-SR and C-UL MU MIMO field is used to indicate whether the multi-AP candidate set with which the STA requests to be associated supports simultaneous and joint use of C-SR and C-UL MU MIMO. For example, as shown in FIG. 32, FIG. 34, and FIG. 35, the joint C-SR and C-UL MU MIMO field occupies 1 bit.

For example, the value of joint C-SR and C-UL MU MIMO field equals to 1 represents that the multi-AP candidate set with which the STA requests to be associated supports simultaneous and joint use of C-SR and C-UL MU MIMO. the value of Joint C-SR and C-UL MU MIMO field equals to 0 represents that the multi-AP candidate set with which the STA requests to be associated does not support simultaneous and joint use of C-SR and C-UL MU MIMO.

As another example, the value of joint C-SR and C-UL MU MIMO field equals to 0 represents that the multi-AP candidate set with which the STA requests to be associated supports simultaneous and joint use of C-SR and C-UL MU MIMO. the value of Joint C-SR and C-UL MU MIMO field equals to 1 represents that the multi-AP candidate set with which the STA requests to be associated does not support simultaneous and joint use of C-SR and C-UL MU MIMO.

Specifically, the C-BF field is used to indicate whether the multi-AP candidate set with which the STA requests to be associated supports C-BF. For example, as shown in FIG. 32, FIG. 34, and FIG. 35, the C-BF field occupies 1 bit.

For example, the value of C-BF field equals to 1 represents that the multi-AP candidate set with which the STA requests to be associated supports C-BF. the value of The C-BF field equals to 0, representing that the multi-AP candidate set with which the STA requests to be associated does not support C-BF.

As another example, the value of C-BF field equals to 0 represents that the multi-AP candidate set with which the STA requests to be associated supports C-BF. the value of C-BF field equals to 1, represents that the multi-AP candidate set with which the STA requests to be associated does not support C-BF.

Specifically, the J-TX for single user field is used to indicate whether the multi-AP candidate set with which the STA requests to be associated supports J-TX for one user. For example, as shown in FIG. 32, FIG. 34, and FIG. 35, the J-TX for single user field occupies 1 bit.

For example, the value of J-TX for single user field equals to 1, representing that the multi-AP candidate set with which the STA requests to be associated supports performing joint transmission for a same user. the value of J-TX for single user field equals to 0 represents that the multi-AP candidate set with which the STA requests to be associated does not support performing joint transmission for a same user.

As another example, the value of the J-TX for single user field equals to 0 represents that the multi-AP candidate set with which the STA requests to be associated supports performing joint transmission for a same user. the value of J-TX for single user field equals to 1 represents that the multi-AP candidate set with which the STA requests to be associated does not support performing joint transmission for a same user.

Specifically, the J-TX for multiple-user field is used to indicate whether the multi-AP candidate set with which the STA requests to be associated supports performing joint transmission for multiple users. For example, as shown in FIG. 32, FIG. 34, and FIG. 35, the J-TX for multiple-user field is optional, and occupies 1 bit when present.

For example, the value of J-TX for multiple-user field equals to 1 represents that the multi-AP candidate set with which the STA requests to be associated supports performing joint transmission for multiple users. the value of The J-TX for multiple-user field equals to 0, representing that the multi-AP candidate set with which the STA requests to be associated does not support performing joint transmission for multiple users.

As another example, the value of the J-TX for multiple-user field equals to 0 represents that the multi-AP candidate set with which the STA requests to be associated supports performing joint transmission for multiple users. the value of J-TX for multiple-user field equals to 1 represents that the multi-AP candidate set with which the STA requests to be associated does not support performing joint transmission for multiple users.

Specifically, the J-TX with diversity field is used to indicate whether the multi-AP candidate set with which the STA requests to be associated supports joint transmission of diversity type. For example, as shown in FIG. 32, FIG. 34, and FIG. 35, the J-TX with diversity field is optional, and occupies 1 bit when present.

For example, the value of J-TX with diversity field equals to 1 represents that the multi-AP candidate set with which the STA requests to be associated supports joint transmission of diversity type. the value of J-TX with diversity field equals to 0 represent that the multi-AP candidate set with which the STA requests to be associated does not support joint transmission of diversity type.

As another example, the value of J-TX with diversity field equals to 0 represents that the multi-AP candidate set with which the STA requests to be associated supports joint transmission of diversity type. the value of J-TX with diversity field equals to 1 represents that the multi-AP candidate set with which the STA requests to be associated does not support joint transmission of diversity type.

Specifically, the J-TX with multiplexing field is used to indicate whether the multi-AP candidate set with which the STA requests to be associated supports joint transmission of multiplexing type. For example, as shown in FIG. 32, FIG. 34, and FIG. 35, the J-TX with multiplexing field is optional, and occupies 1 bit when present.

For example, the value of the J-TX with multiplexing field equals to 1 represents that the multi-AP candidate set with which the STA requests to be associated supports joint transmission of multiplexing type. the value of The J-TX with multiplexing field equals to 0 represents that the multi-AP candidate set with which the STA requests to be associated does not support joint transmission of multiplexing type.

As another example, the value of the J-TX with multiplexing field equals to 0 represents that the multi-AP candidate set with which the STA requests to be associated supports joint transmission of multiplexing type. the value of The J-TX with multiplexing field equals to 1 represents that the multi-AP candidate set with which the STA requests to be associated does not support joint transmission of multiplexing type.

Specifically, the full bandwidth J-TX field is used to indicate whether the multi-AP candidate set with which the STA requests to be associated supports joint transmission in full bandwidth. For example, as shown in FIG. 32, FIG. 34, and FIG. 35, the full bandwidth J-TX field is optional, and occupies 1 bit when present.

For example, the value of the full bandwidth J-TX field equals to 1 represents that the multi-AP candidate set with which the STA requests to be associated supports joint transmission in full bandwidth. the value of The full bandwidth J-TX field equals to 0 represents that the multi-AP candidate set with which the STA requests to be associated does not support joint transmission in full bandwidth.

As another example, the value of the full bandwidth J-TX field equals to 0 represents that the multi-AP candidate set with which the STA requests to be associated supports joint transmission in full bandwidth. the value of The full bandwidth J-TX field equals to 1 represents that the multi-AP candidate set with which the STA requests to be associated does not support joint transmission in full bandwidth.

Specifically, the partial bandwidth J-TX field is used to indicate whether the multi-AP candidate set with which the STA requests to be associated supports joint transmission in partial bandwidth. For example, as shown in FIG. 32, FIG. 34, and FIG. 35, the partial bandwidth J-TX field is optional, and occupies 1 bit when present.

For example, the value of partial bandwidth J-TX field equals to 1 represents that the multi-AP candidate set with which the STA requests to be associated supports joint transmission in partial bandwidth. the value of Partial bandwidth J-TX field equals to 0 represents that the multi-AP candidate set with which the STA requests to be associated does not support joint transmission in partial bandwidth.

As another example, the value of partial bandwidth J-TX field equals to 0 represents that the multi-AP candidate set with which the STA requests to be associated supports joint transmission in partial bandwidth. the value of Partial bandwidth J-TX field equals to 1 represents that the multi-AP candidate set with which the STA requests to be associated does not support joint transmission in partial bandwidth.

Specifically, the detect and discard field is used to indicate whether the multi-AP candidate set with which the STA requests to be associated supports receiving and demodulating other users' data/frames and then discarding in a C-UL-MU MIMO mode, to obtain useful data/frames. For example, as shown in FIG. 32, FIG. 34, and FIG. 35, the detect and discard field occupies 1 bit.

For example, the value of detect and discard field equals to 1 represents that the multi-AP candidate set with which the STA requests to be associated supports receiving and demodulating other users' data/frames and then discarding in a C-UL-MU MIMO mode, to obtain useful data/frames. the value of Detect and discard field equals to 0 represents that the multi-AP candidate set with which the STA requests to be associated does not support receiving and demodulating other users' data/frames and then discarding in a C-UL-MU MIMO mode, to obtain useful data/frames.

As another example, the value of detect and discard field equals to 0 represents that the multi-AP candidate set with which the STA requests to be associated supports receiving and demodulating other users' data/frames and then discarding in a C-UL-MU MIMO mode, to obtain useful data/frames. the value of Detect and discard field equals to 1 represents that the multi-AP candidate set with which the STA requests to be associated does not support receiving and demodulating other users' data/frames and then discarding in a C-UL-MU MIMO mode, to obtain useful data/frames.

Specifically, the mitigate as interference field is used to indicate whether the multi-AP candidate set with which the STA requests to be associated supports treating other users' data as interference directly, and receiving and demodulating a target user's data/frame directly in the C-UL-MU MIMO mode. For example, as shown in FIG. 32, FIG. 34, and FIG. 35, the mitigate as interference field occupies 1 bit.

For example, the value of the mitigate as interference field equals to 1 represents that the multi-AP candidate set with which the STA requests to be associated supports treating other users' data as interference directly, and receiving and demodulating a target user's data/frame directly in the C-UL-MU MIMO mode. the value of The mitigate as interference field equals to 0 represents that the multi-AP candidate set with which the STA requests to be associated does not support treating other users' data as interference directly, and receiving and demodulating a target user's data/frame directly in the C-UL-MU MIMO mode.

As another example, the value of the mitigate as interference field equals to 0 represents that the multi-AP candidate set with which the STA requests to be associated supports treating other users' data as interference directly, and receiving and demodulating a target user's data/frame directly in the C-UL-MU MIMO mode. the value of The mitigate as interference field equals to 1 represents that the multi-AP candidate set with which the STA requests to be associated does not support treating other users' data as interference directly, and receiving and demodulating a target user's data/frame directly in the C-UL-MU MIMO mode.

In some embodiments, in case the multi-AP scheme field does not include the UL C-OFDMA field and the DL C-OFDMA field, the multi-AP candidate set with which the STA requests to be associated supports UL C-OFDMA and DL C-OFDMA by default.

In some embodiments, in case a value of the J-TX for single user field indicates that the multi-AP candidate set with which the STA requests to be associated does not support performing joint transmission for a same user, the multi-AP scheme field does not include the J-TX for multiple-user field, or a value of the J-TX for multiple-user field indicates that the multi-AP candidate set with which the STA requests to be associated does not support performing joint transmission for multiple users.

In some embodiments, in case a value of the J-TX for single user field indicates that the multi-AP candidate set with which the STA requests to be associated does not support performing joint transmission for a same user, the multi-AP scheme field does not include the J-TX with diversity field, or a value of the J-TX with diversity field indicates that the multi-AP candidate set with which the STA requests to be associated does not support joint transmission of diversity type.

In some embodiments, in case a value of the J-TX for single user field indicates that the multi-AP candidate set with which the STA requests to be associated does not support performing joint transmission for a same user, the multi-AP scheme field does not include the J-TX with multiplexing field, or a value of the J-TX with multiplexing field indicates that the multi-AP candidate set with which the STA requests to be associated does not support joint transmission of multiplexing type.

In some embodiments, in case a value of the J-TX for single user field indicates that the multi-AP candidate set with which the STA requests to be associated does not support performing joint transmission for a same user, the multi-AP scheme field does not include the full bandwidth J-TX field, or a value of the full bandwidth J-TX field indicates that the multi-AP candidate set with which the STA requests to be associated does not support joint transmission in full bandwidth.

In some embodiments, in case a value of the J-TX for single user field indicates that the multi-AP candidate set with which the STA requests to be associated does not support performing joint transmission for a same user, the multi-AP scheme field does not include the partial bandwidth J-TX field, or a value of the partial bandwidth J-TX field indicates that the multi-AP candidate set with which the STA requests to be associated does not support joint transmission in partial bandwidth.

In some embodiments, in case a value of the J-TX for single user field indicates that the multi-AP candidate set with which the STA requests to be associated supports performing joint transmission for a same user, the multi-AP scheme field does not include the J-TX with diversity field and the full bandwidth J-TX field.

In some embodiments, in case the multi-AP scheme field does not include the J-TX with diversity field, by default the multi-AP candidate set with which the STA requests to be associated supports joint transmission of diversity type.

In some embodiments, in case the multi-AP scheme field does not include the full bandwidth J-TX field, by default the multi-AP candidate set with which the STA requests to be associated supports joint transmission in full bandwidth.

In some embodiments, the multi-AP scheme field includes at least one of a coordinated orthogonal frequency division multiple access (C-OFDMA) support field, a coordinated spatial reuse (C-SR) support field, a coordinated beamforming (C-BF) support field, a joint transmission (J-TX) support field, and a coordinated uplink multiple-user multiple input multiple output (C-UL MU MIMO) support field.

In some embodiments, the multi-AP scheme field includes at least one of the C-SR support field, the C-BF support field, the J-TX support field, and the C-UL MU MIMO support field.

The C-OFDMA support field is used to indicate whether the multi-AP candidate set with which the STA requests to be associated supports C-OFDMA. The C-SR support field is used to indicate whether the multi-AP candidate set with which the STA requests to be associated supports C-SR. The C-BF support field is used to indicate whether the multi-AP candidate set with which the STA requests to be associated supports C-BF. The J-TX support field is used to indicate whether the multi-AP candidate set with which the STA requests to be associated supports J-TX. The C-UL MU MIMO support field is used to indicate whether the multi-AP candidate set with which the STA requests to be associated supports C-UL MU MIMO.

Specifically, the C-OFDMA support field is used to indicate whether the multi-AP candidate set with which the STA requests to be associated supports C-OFDMA. For example, as shown in FIG. 33, the C-OFDMA support field occupies 1 bit.

For example, the value of the C-OFDMA field equals to 1 represents that the multi-AP candidate set with which the STA requests to be associated supports C-OFDMA. The value of the C-OFDMA field equals to 0 represents that the multi-AP candidate set with which the STA requests to be associated does not support C-OFDMA.

As another example, the value of the C-OFDMA field equals to 0 represents that the multi-AP candidate set with which the STA requests to be associated supports C-OFDMA. The value of the C-OFDMA field equals to 1 represents that the multi-AP candidate set with which the STA requests to be associated does not support C-OFDMA.

Specifically, the C-SR support field is used to indicate whether the multi-AP candidate set with which the STA requests to be associated supports C-SR. For example, as shown in FIG. 33, the C-SR support field occupies 1 bit.

For example, the value of the C-SR support field equals to 1 represents that the multi-AP candidate set with which the STA requests to be associated supports C-SR. The value of the C-SR support field equals to 0, representing that the multi-AP candidate set with which the STA requests to be associated does not support C-SR.

As another example, the value of the C-SR support field equals to 0 represents that the multi-AP candidate set with which the STA requests to be associated supports C-SR. The value of the C-SR support field equals to 1 represents that the multi-AP candidate set with which the STA requests to be associated does not support C-SR.

Specifically, the C-BF support field is used to indicate whether the multi-AP candidate set with which the STA requests to be associated supports C-BF. For example, as shown in FIG. 33, the C-BF support field occupies 1 bit.

For example, the value of the C-BF support field equals to 1 represents that the multi-AP candidate set with which the STA requests to be associated supports C-BF. The value of the C-BF support field equals to 0 represents that the multi-AP candidate set with which the STA requests to be associated does not support C-BF.

As another example, the value of the C-BF support field equals to 0 represents that the multi-AP candidate set with which the STA requests to be associated supports C-BF. The value of the C-BF support field equals to 1 represents that the multi-AP candidate set with which the STA requests to be associated does not support C-BF.

Specifically, J-TX support field is used to indicate whether the multi-AP candidate set with which the STA requests to be associated supports J-TX. For example, as shown in FIG. 33, the J-TX support field occupies 1 bit.

For example, the value of the J-TX support field equals to 1 represents that the multi-AP candidate set with which the STA requests to be associated supports J-TX. The value of the J-TX support field equals to 0 represents that the multi-AP candidate set with which the STA requests to be associated does not support J-TX.

As another example, the value of the J-TX support field equals to 0 represents that the multi-AP candidate set with which the STA requests to be associated supports J-TX. The value of the J-TX support field equals to 1 represents that the multi-AP candidate set with which the STA requests to be associated does not support J-TX.

Specifically, the C-UL MU MIMO support field is used to indicate whether the multi-AP candidate set with which the STA requests to be associated supports C-UL MU MIMO. For example, as shown in FIG. 33, the C-UL MU MIMO support field occupies 1 bit.

For example, the value of the C-UL MU MIMO support field equals to 1 represents that the multi-AP candidate set with which the STA requests to be associated supports C-UL MU MIMO. The value of the C-UL MU MIMO support field equals to 0 represents that the multi-AP candidate set with which the STA requests to be associated does not support C-UL MU MIMO.

As another example, the value of the C-UL MU MIMO support field equals to 0 represents that the multi-AP candidate set with which the STA requests to be associated supports C-UL MU MIMO. The value of the C-UL MU MIMO support field equals to 1 represents that the multi-AP candidate set with which the STA requests to be associated does not support C-UL MU MIMO.

In some embodiments, in case the multi-AP scheme field does not include the C-OFDMA support field, by default the multi-AP candidate set with which the STA requests to be associated supports uplink (UL) C-OFDMA and downlink (DL) C-OFDMA.

In some embodiments, an AP information field of the multiple AP information fields includes at least one of a BSS ID field, an AP ID field, and an AP role field.

The BSS ID field is used to indicate a BSS ID of an AP indicated by the AP information field. The AP ID field is used to indicate an ID of the AP indicated by the AP information field. The AP role field is used to indicate a multi-AP coordination role supported by the AP indicated by the AP information field.

Specifically, the BSS ID field is used to indicate a BSS ID of an AP indicated by the AP information field. For example, as shown in FIG. 32 to FIG. 35, the BSS ID field occupies 6 bytes.

Specifically, the AP ID field is used to indicate an ID of the AP indicated by the AP information field. For example, as shown in FIG. 32 to FIG. 35, the AP ID field occupies 1 byte.

Specifically, the AP role field is used to indicate a multi-AP coordination role supported by the AP indicated by the AP information field. For example, as shown in FIG. 32 to FIG. 35, the AP role field occupies 1 byte.

In some embodiments, the AP ID field is set directly by a master AP (MAP) or the coordinator, or the AP ID field is determined by an order of the AP in the multi-AP candidate set as indicated by the AP information field.

In some embodiments, the AP role field includes at least one of a coordinating AP role field, a coordinated AP role field, a sharing AP role field, and a shared AP role field.

Specifically, in a channel sounding phase, a coordinating AP indicated by the coordinating AP role field initiates channel sounding, and an AP indicated by the coordinated AP role field takes part in the channel sounding. In a preparation phase and/or a transmission phase, an AP indicated by the sharing AP role field shares a transmission opportunity (TXOP) resource thereof with an AP indicated by the shared AP role field, to perform coordination transmission.

For example, as shown in FIG. 32 to FIG. 35, the coordinating AP role field occupies 1 bit. The coordinated AP role field occupies 1 bit. The sharing AP role field occupies 1 bit. The shared AP role field occupies 1 bit.

In some embodiments, the first AP is a non-coordinator and the second AP is a coordinator, or the first AP is the coordinator and the second AP is the non-coordinator.

In some embodiments, in case the first AP is a coordinator, the shared information is configured to share related information of the STA among the coordinator and other AP(s) corresponding to a multi-AP candidate set with which the STA requests to be associated.

In some embodiments, in case the first AP is a coordinator and a group temporal key (GTK) and/or a pairwise transient key (PTK) between the STA and other AP(s) corresponding to a multi-AP candidate set with which the STA requests to be associated is generated by corresponding AP, the shared information further includes coordinator key holder ID information. The coordinator key holder ID information is configured for the second AP to acquire a group master key (GMK) and/or a PMK of the coordinator. A GTK and/or the PMK of the coordinator is configured for the second AP to generate a GMK and/or a PMK of the second AP. The second AP and the STA communicate with each other based on a GTK and/or a PTK generated using at least one of the GMK or the PMK of the second AP.

In some embodiments, the shared information is sent through an association info share frame. The association info share frame includes an association info share field. The association info share field includes at least one of a STA MAC address field, a multi-AP coordination capability of STA field, an SSID field, a VAID field, a coordinator key holder ID field, and a fast BSS transition element (FTE) field.

In some embodiments, the STA MAC address field is used to indicate the MAC address of the STA. The multi-AP coordination capability of STA field is used to indicate the multi-AP coordination capability information of the STA. The SSID field is used to indicate the SSID of VBSS with which the STA requests to be associated in multiple SSIDs of VBSSs. The VAID field is used to indicate a VAID allocated, in a VBSS with which the STA requests to be associated, by a coordinator to the STA. The coordinator key holder ID field is used to indicate coordinator key holder ID information. A parameter field included in the FTE field is used to indicate the coordinator key holder ID information. The multiple SSIDs of VBSSs refer to VBSSs set up between the second AP and the coordinator.

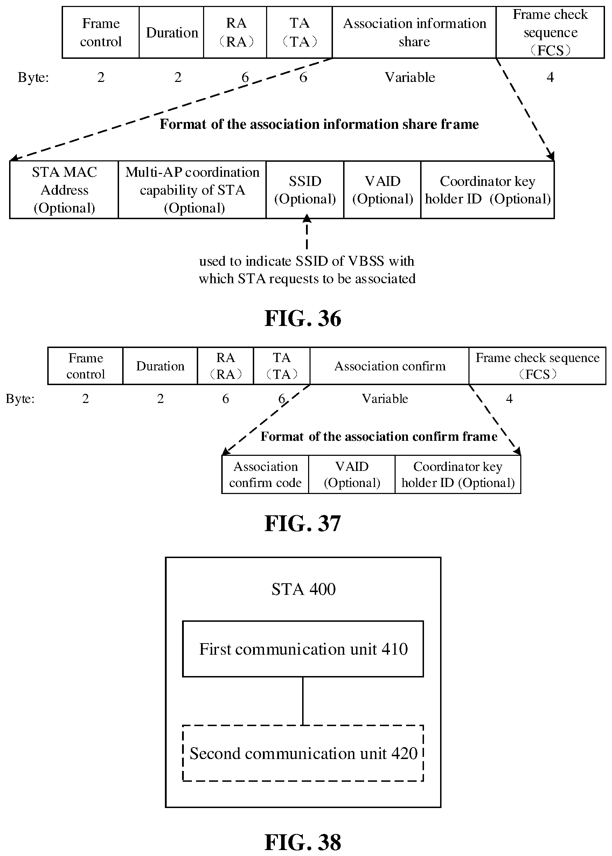

Specifically, for example, as shown in FIG. 36, the STA MAC address field, the multi-AP coordination capability of STA field, the SSID field, the VAID field, and the coordinator key holder ID field are all optional fields.

Note that the association info share frame may be configured to share the information of the STA between the coordinator (AP) and other AP(s). In case that it is sent by the coordinator to other AP(s) and key is generated by individual APs, the coordinator key holder ID field or the FTE field is included.

Specifically, the function of sharing SSID is: multiple VBSSs may be set up between the coordinator and a certain member, and the member AP may be informed of information that the VBSS with which the STA requests to be associated through the SSID (carrying SSID of VBSS), so that the member AP can tell the VBSS apart from the rest.

Specifically, the function of sharing SSID is: the VAID of the STA is allocated by the coordinator and is not known by a member AP, and thus the member AP may be informed of the VAID of the STA through the VAID field.

In some embodiments, the confirmation information is sent through an association info confirm frame. The association info confirm frame includes an association confirming field. The association confirming field includes at least one of an association confirm code field, a VAID field, a coordinator key holder ID field, and a fast BSS transition element (FTE) field. The association confirm code field indicates whether the second AP accepts the association request of the STA. The VAID field indicates a VAID allocated, in a VBSS with which the STA requests to be associated, by a coordinator to the STA. The coordinator key holder ID field indicates coordinator key holder ID information. A parameter field included in the FTE field indicates the coordinator key holder ID information.

For example, the value of the association confirm code field equals to 1 represents that the second AP accepts the association request of the STA. The value of the association confirm code field equals to 0 represents that the second AP does not accept the association request of the STA.

As another example, the value of the association confirm code field equals to 0 represents that the second AP accepts the association request of the STA. The value of the association confirm code field equals to 1 represents that the second AP does not accept the association request of the STA.

Specifically, for example, as shown in FIG. 37, both the VAID field and the coordinator key holder ID field are optional.

Note that in case that it is sent by the coordinator to the another AP and the key is generated by individual Aps, the coordinator key holder ID field or the FTE field needs to be included.

Specifically, a reason that the association info confirm frame includes the coordinator key holder ID field is as follows. After a member AP has shared the association information of the STA with the coordinator through the association info share frame, the coordinator informs the member AP of the coordinator key holder ID through the association info confirm frame, to allow the member AP to compute the PMK (or GMK) of the member AP using the PMK (or GMK) of the coordinator.

Specifically, the association info confirm frame may be an ACK frame. Then, by default other AP(s) accepts the association request of the STA transferred by the MAP.

In some embodiments, in case the first AP is a non-coordinator and the second AP is a coordinator, the coordinator key holder ID information is configured for the first AP to acquire a group master key (GMK) and/or a pairwise master key (PMK) of the coordinator. the GMK and/or the PMK of the coordinator is configured for the first AP to generate a GMK and/or a PMK of the first AP. The first AP and the STA communicate with each other based on a group temporal key (GTK) and/or a pairwise transient key (PTK) generated using the GMK and/or the PMK of the first AP.

In some embodiments, in case the first AP is a non-coordinator and the second AP is a coordinator, related information of the STA included in the shared information is shared by the second AP with other AP(s) corresponding to a multi-AP candidate set with which the STA requests to be associated.

In some embodiments, the confirmation information is sent through an acknowledgement (ACK) frame. The ACK frame may be configured to indicate that the second AP accepts the association request of the STA.

In some embodiments, the first AP sends, to the second AP, the shared information after receiving the association request frame sent by the STA and before sending the association response frame to the STA.

In some embodiments, the first AP sends, to the second AP, the shared information after sending the association response frame to the STA.

In some embodiments, the shared information is transmitted in a wired transmission manner, and/or the confirmation is transmitted in a wired transmission manner.

Therefore, in an embodiment of the disclosure, a flow of associating a STA with a multi-AP candidate set is devised, and parameter setting to be performed in association with the multi-AP candidate set is devised in detail, providing sufficient information for implementing multi-AP coordinated transmission.

Method embodiments of the disclosure are elaborated with reference to FIG. 11 to FIG. 37. Apparatus embodiments of the disclosure are elaborated hereinafter with reference to FIG. 38 to FIG. 42. Note that the apparatus embodiments correspond respectively to the method embodiments. Refer to the method embodiments for similar description in the apparatus embodiments.

FIG. 38 is a block diagram of a STA 400 according to embodiments of the disclosure. As shown in FIG. 38, the station (STA) 400 includes a first communication unit.

The first communication unit 410 is configured to receive first information sent by an access point (AP).

The first information includes information of a multi-AP candidate set to which the AP belongs.

The information of the multi-AP candidate set includes at least one of: at least one legacy SSID to which the AP belongs, an SSID of at least one virtual basic service set (VBSS) to which the AP belongs, a sending period of information corresponding to the SSID of at least one VBSS, and information corresponding to a VBSS where the AP is located.

The legacy SSID is a string. The string is used to identify infrastructure basic service sets (BSSs) that comprises an extended service set (ESS) or the string is used to identify a non-infrastructure BSS.

In some embodiments, the first information is sent through a first frame.

The first frame includes at least one of a first SSID field, W SSID field(s), an SSID interval of VBSS field, and a multi-AP candidate set information field.

The first SSID field indicates the at least one legacy SSID to which the AP belongs. The W SSID field(s) respectively indicates SSID(s) of W VBSS(s) to which the AP belongs. The SSID interval of VBSS field indicates the sending period of the information corresponding to the SSID of at least one VBSS. The multi-AP candidate set information field indicates the information corresponding to the VBSS where the AP is located. W is a positive integer.

In some embodiments, the first information is sent through a first frame.

The first frame includes at least one of a first SSID field, W virtual SSID (VSSID) field(s), a VSSID interval field, and a multi-AP candidate set information field.

The first SSID field indicates the at least one legacy SSID to which the AP belongs. The W VSSID field(s) respectively indicates SSID(s) of W VBSS(s) to which the AP belongs. The VSSID interval field indicates the sending period of the information corresponding to the SSID of at least one VBSS. The multi-AP candidate set information field indicates the information corresponding to the VBSS where the AP is located. W is a positive integer.

In some embodiments, the multi-AP candidate set information field includes at least one candidate set information field and a number of candidate sets field.

The number of candidate sets field indicates a number of multi-AP candidate sets where the AP is located. The number of candidate sets field indicates a value of W. An n-th candidate set information field of the at least one candidate set information field indicates related information of an n-th multi-AP candidate set where the AP is located. Here, n is a positive integer.

In some embodiments, candidate set information field(s) of the at least one candidate set information field includes at least one of a VBSS identifier (ID) field, a candidate set ID field, a multi-AP sounding method support field, a multi-AP scheme support field, a number of APs field, and multiple AP information fields.

Alternatively, the candidate set information field(s) of the at least one candidate set information field includes at least one of the VBSS ID field, the candidate set ID field, a multi-AP joint sounding support field, the multi-AP scheme support field, the number of APs field, and the multiple AP information fields.

The VBSS ID field indicates a VBSS ID of a multi-AP candidate set corresponding to the current candidate set information field. The candidate set ID field indicates an ID of the multi-AP candidate set corresponding to the current candidate set information field. The multi-AP sounding method support field indicates a channel sounding method supported by the multi-AP candidate set corresponding to the current candidate set information field. The multi-AP scheme support field indicates a multi-AP coordination mode supported by the multi-AP candidate set corresponding to the current candidate set information field. The number of APs field indicates a number of member APs included in the multi-AP candidate set corresponding to the current candidate set information field. An m-th AP information field of the multiple AP information fields indicates related information of an m-th member AP of the multi-AP candidate set corresponding to the current candidate set information field. The multi-AP joint sounding support field indicates whether the multi-AP candidate set corresponding to the current candidate set information field supports multiple APs to perform channel sounding simultaneously and synchronously. Here, m is a positive integer.

In some embodiments, in case the candidate set information field(s) of the at least one candidate set information field includes the multi-AP joint sounding support field, by default the multi-AP candidate set corresponding to the current candidate set information field supports multiple APs to perform channel sounding sequentially.

In some embodiments, the multi-AP sounding method support field includes at least one of a sequential sounding field and a joint sounding field.

Alternatively, the multi-AP sounding method support field includes just the joint sounding field.

The sequential sounding field indicates whether the multi-AP candidate set corresponding to the current candidate set information field supports multiple APs to perform channel sounding sequentially. The joint sounding field indicates whether the multi-AP candidate set corresponding to the current candidate set information field supports multiple APs to perform channel sounding simultaneously and synchronously.

In some embodiments, in case the multi-AP sounding method support field does not include the sequential sounding field, by default the multi-AP candidate set corresponding to the current candidate set information field supports multiple APs to perform channel sounding sequentially.

In some embodiments, the multi-AP scheme support field includes at least one of an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

Alternatively, the multi-AP scheme support field includes at least one of the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

The UL C-OFDMA field indicates whether the multi-AP candidate set corresponding to the current candidate set information field supports UL C-OFDMA. The DL C-OFDMA field indicates whether the multi-AP candidate set corresponding to the current candidate set information field supports DL C-OFDMA. The joint C-SR and C-OFDMA field indicates whether the multi-AP candidate set corresponding to the current candidate set information field supports simultaneous and joint use of C-SR and C-OFDMA. The joint C-SR and C-BF field indicates whether the multi-AP candidate set corresponding to the current candidate set information field supports simultaneous and joint use of C-SR and C-BF. The joint C-SR and J-TX field indicates whether the multi-AP candidate set corresponding to the current candidate set information field supports simultaneous and joint use of C-SR and J-TX. The joint C-SR and C-UL MU MIMO field indicates whether the multi-AP candidate set corresponding to the current candidate set information field supports simultaneous and joint use of C-SR and C-UL MU MIMO. The C-BF field indicates whether the multi-AP candidate set corresponding to the current candidate set information field supports C-BF. The J-TX for single user field indicates whether the multi-AP candidate set corresponding to the current candidate set information field supports performing joint transmission for a same user. The J-TX for multiple-user field indicates whether the multi-AP candidate set corresponding to the current candidate set information field supports performing joint transmission for multiple users. The J-TX with diversity field indicates whether the multi-AP candidate set corresponding to the current candidate set information field supports joint transmission of diversity type. The J-TX with multiplexing field indicates whether the multi-AP candidate set corresponding to the current candidate set information field supports joint transmission of multiplexing type. The full bandwidth J-TX field indicates whether the multi-AP candidate set corresponding to the current candidate set information field supports joint transmission in full bandwidth. The partial bandwidth J-TX field indicates whether the multi-AP candidate set corresponding to the current candidate set information field supports joint transmission in partial bandwidth. The detect and discard field indicates whether the multi-AP candidate set corresponding to the current candidate set information field supports receiving and demodulating other users' data/frames and then discarding in a C-UL-MU MIMO mode, to obtain useful data/frames. The mitigate as interference field indicates whether the multi-AP candidate set corresponding to the current candidate set information field supports treating other users' data as interference directly, and receiving and demodulating a target user's data/frame directly in the C-UL-MU MIMO mode.

In some embodiments, in case the multi-AP scheme support field does not include the UL C-OFDMA field and the DL C-OFDMA field, by default the multi-AP candidate set corresponding to the current candidate set information field supports UL C-OFDMA and DL C-OFDMA.

In some embodiments, in case a value of the J-TX for single user field indicates that the multi-AP candidate set corresponding to the current candidate set information field does not support performing joint transmission for a same user,

the multi-AP scheme field does not include the J-TX for multiple-user field, or a value of the J-TX for multiple-user field indicates that the multi-AP candidate set corresponding to the current candidate set information field does not support performing joint transmission for multiple users; and/or

the multi-AP scheme field does not include the J-TX with diversity field, or a value of the J-TX with diversity field indicates that the multi-AP candidate set corresponding to the current candidate set information field does not support joint transmission of diversity type; and/or

The multi-AP scheme field does not include the J-TX with multiplexing field, or a value of the J-TX with multiplexing field indicates that the multi-AP candidate set corresponding to the current candidate set information field does not support joint transmission of multiplexing type; and/or

the multi-AP scheme field does not include the full bandwidth J-TX field, or a value of the full bandwidth J-TX field indicates that the multi-AP candidate set corresponding to the current candidate set information field does not support joint transmission in full bandwidth; and/or

the multi-AP scheme field does not include the partial bandwidth J-TX field, or a value of the partial bandwidth J-TX field indicates that the multi-AP candidate set corresponding to the current candidate set information field does not support joint transmission in partial bandwidth.

In some embodiments, in case a value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, by default the multi-AP candidate set corresponding to the current candidate set information field supports joint transmission of diversity type, and/or, by default the multi-AP candidate set corresponding to the current candidate set information field supports joint transmission in full bandwidth.

In some embodiments, the multi-AP scheme support field includes at least one of a coordinated orthogonal frequency division multiple access (C-OFDMA) support field, a coordinated spatial reuse (C-SR) support field, a coordinated beamforming (C-BF) support field, a joint transmission (J-TX) support field, and a coordinated uplink multiple-user multiple input multiple output (C-UL MU MIMO) support field.

Alternatively, the multi-AP scheme support field includes at least one of the C-SR support field, the C-BF support field, the J-TX support field, and the C-UL MU MIMO support field.

The C-OFDMA support field indicates whether the multi-AP candidate set corresponding to the current candidate set information field supports C-OFDMA. The C-SR support field indicates whether the multi-AP candidate set corresponding to the current candidate set information field supports C-SR. The C-BF support field indicates whether the multi-AP candidate set corresponding to the current candidate set information field supports C-BF. The J-TX support field indicates whether the multi-AP candidate set corresponding to the current candidate set information field supports J-TX. The C-UL MU MIMO support field indicates whether the multi-AP candidate set corresponding to the current candidate set information field supports C-UL MU MIMO.

In some embodiments, in case the multi-AP scheme support field does not include the C-OFDMA support field, by default the multi-AP candidate set corresponding to the current candidate set information field supports uplink (UL) C-OFDMA and downlink (DL) C-OFDMA.

In some embodiments, AP information field(s) of the multiple AP information fields includes at least one of a BSS ID field, an AP ID field, and an AP role field.

The BSS ID field indicates a BSS ID of an AP indicated by a current AP information field. The AP ID field indicates an ID of the AP indicated by the current AP information field. The AP role field indicates a multi-AP coordination role supported by the AP indicated by the current AP information field.

In some embodiments, the AP ID field is set directly by a master AP (MAP) or a coordinator, or determined by an order of the AP in the multi-AP candidate set as indicated by the AP information field.

In some embodiments, the AP role field includes at least one of a coordinating AP role field, a coordinated AP role field, a sharing AP role field, and a shared AP role field.

In a channel sounding phase, a coordinating AP indicated by the coordinating AP role field initiates channel sounding, and an AP indicated by the coordinated AP role field takes part in the channel sounding. In a preparation phase and/or a transmission phase, an AP indicated by the sharing AP role field shares a transmission opportunity (TXOP) resource thereof to an AP indicated by the shared AP role field, to perform coordination transmission.

In some embodiments, the first frame is a probe response frame or a beacon frame.

In some embodiments, the STA 400 further includes a second communication unit 420.

The second communication unit 420 is configured to send second information to the AP before the STA receives the first information. The second information is configured to request the multi-AP candidate set information.

In some embodiments, the second information is sent through a probe request frame.

The probe request frame includes at least one of an SSID field and an SSID list field.

A first value of a length field corresponding to the SSID field requests a first SSID. The first SSID is a legacy SSID or an SSID of VBSS.

A second value of the length field corresponding to the SSID field requests multiple SSIDs. The multiple SSIDs are all legacy SSIDs where the AP is located, or SSIDs of all VBSSs where the AP is located.

The SSID list field is configured to request at least one SSID. The at least one SSID includes legacy SSID(s) and/or SSID(s) of VBSS(s).

In some embodiments, in case that a value of a length field corresponding to the SSID field is non-zero, the STA requests the first SSID, or, in case that the value of the length field corresponding to the SSID field is zero, the STA requests all SSIDs.

In some embodiments, in case the probe request frame does not include a multi-AP candidate set info request field, and the length field corresponding to the SSID field takes on the second value, the multiple SSIDs are all legacy SSIDs where the AP is located.

In some embodiments, the probe request frame further includes a multi-AP candidate set info request field. The multi-AP candidate set info request field includes an extra SSID indicator field.

The extra SSID indicator field is used to instruct the AP to return, to the STA, SSIDs of VBSSs and all legacy SSIDs where the AP is located. Alternatively, the extra SSID indicator field is used to instruct the AP to return, to the STA, SSIDs of all VBSSs where the AP is located, and to not return, to the STA, any legacy SSID.

In some embodiments, a value of 0 of the extra SSID indicator field is used to instruct the AP to return, to the STA, SSIDs of VBSSs and all legacy SSIDs where the AP is located.

Alternatively or additionally, a value of 1 of the extra SSID indicator field is used to instruct the AP to return, to the STA, SSIDs of all VBSSs where the AP is located, and to not return, to the STA, the any legacy SSID.

In some embodiments, in case the probe request frame does not include the multi-AP candidate set info request field, the SSID field takes on the second value, and the multiple SSIDs are the SSIDs of all VBSSs where the AP is located.

Alternatively, in case the probe request frame includes the multi-AP candidate set info request field and the multi-AP candidate set info request field does not include the extra SSID indicator field, the SSID field takes on the second value, and the multiple SSIDs are SSIDs of all VBSSs where the AP is located.

The extra SSID indicator field is used to instruct the AP to return, to the STA, the SSIDs of VBSSs and all legacy SSIDs where the AP is located. Alternatively, the extra SSID indicator field requests the AP to return, to the STA, SSIDs of all VBSSs where the AP is located, and to not return, to the STA, the any legacy SSID.

In some embodiments, the second information is sent through a probe request frame.

The probe request frame includes at least one of an SSID field, an SSID list field, a virtual SSID (VSSID) field, and a VSSID list field.

A first value of a length field corresponding to the SSID field is configured to request a first SSID. The first SSID is a legacy SSID or an SSID of VBSS.

A second value of the length field corresponding to the SSID field is configured to request P SSIDs. The P SSIDs are all legacy SSIDs where the AP is located, or SSIDs of all VBSSs where the AP is located.

The SSID list field is configured to request K SSIDs. The K SSIDs include legacy SSID(s) and/or SSID(s) of VBSS(s).

The first value of a length field corresponding to the VSSID field is configured to request a second SSID. The second SSID is a legacy SSID or an SSID of VBSS. The second value of the length field corresponding to the VSSID field is configured to request Q SSIDs. The Q SSIDs are all legacy SSIDs where the AP is located, or SSIDs of all VBSSs where the AP is located.

The VSSID list field is configured to request T SSIDs. The T SSIDs include legacy SSID(s) and/or SSID(s) of VBSS(s).

P, Q, K, and T are all positive integers.

In some embodiments, in case of a value of the length field corresponding to the SSID field is zero, the STA requests all SSIDs, and the length field corresponding to the SSID field takes on the second value.

In some embodiments, the probe request frame further includes a multi-AP candidate set info request field. The multi-AP candidate set info request field includes a VSSID indicator field.

The VSSID indicator field is configured to indicate that the multi-AP candidate set information is not requested, and that the probe request frame does not include the VSSID field and the VSSID list field.

Alternatively, the VSSID indicator field is configured to indicate that the multi-AP candidate set information is requested, and that the STA requests SSID of VBSS through the SSID field or the SSID list field.

Alternatively, the VSSID indicator field is configured to indicate that the multi-AP candidate set information is requested, and that the STA requests the SSID of VBSS through the VSSID field or the VSSID list field.

Alternatively, the VSSID indicator field is configured to indicate that the multi-AP candidate set information is requested, and that the STA requests SSID of VBSS and/or legacy SSID through the VSSID field or the VSSID list field.

In some embodiments, the first value corresponding to the length field corresponding to the SSID field is non-zero, and the second value corresponding to the length field corresponding to the SSID field is zero.

In some embodiments, a foregoing communication unit is a communication interface or a transceiver, or an input/output interface of a system on chip (SOC) or a communication chip.

Note that the STA 400 according to the embodiments of the disclosure may correspond to the STA in the method embodiments of the disclosure. A foregoing operation and/or function and any other operations and/or functions of a unit in the STA 400 are configured to implement a corresponding flow of the STA in the method 200 as shown in FIG. 11 to FIG. 18, which is not repeated here for brevity.

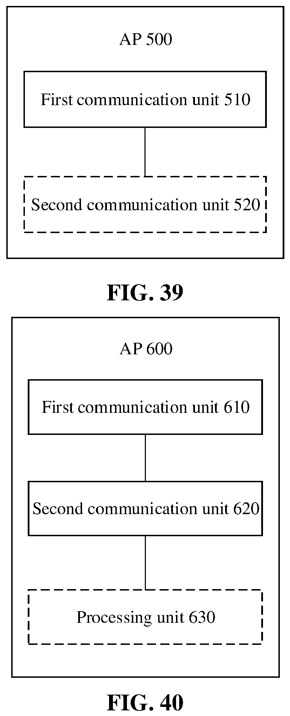

FIG. 39 is a block diagram of an AP 500 according to embodiments of the disclosure. As shown in FIG. 39, the access point (AP) 500 includes a first communication unit.

The first communication unit 510 of the AP is configured to send first information to a station (STA).

The first information includes information of a multi-AP candidate set to which the AP belongs.

The information of the multi-AP candidate set includes at least one of: at least one legacy SSID to which the AP belongs, an SSID of at least one virtual basic service set (VBSS) to which the AP belongs, a sending period of information corresponding to an SSID of at least one VBSS, and information corresponding to a VBSS where the AP is located.

The legacy SSID is a string. The string is used to identify infrastructure basic service sets (BSSs) that comprise an extended service set (ESS) or the string is used to identify a non-infrastructure BSS.

In some embodiments, the first information is sent through a first frame.

The first frame includes at least one of a first SSID field, W SSID field(s), as SSID interval of VBSS field, and a multi-AP candidate set information field. The first SSID field is configured to indicate the at least one legacy SSID to which the AP belongs. The W SSID field(s) is configured to respectively indicate SSID(s) of W VBSS(s) to which the AP belongs. The SSID interval of VBSS field is configured to indicate the sending period of the information corresponding to the SSID of at least one VBSS. The multi-AP candidate set information field is configured to indicate the information corresponding to the VBSS where the AP is located. W is a positive integer.

In some embodiments, the first information is sent through a first frame.

The first frame includes at least one of a first SSID field, W virtual SSID (VSSID) field(s), a VSSID interval field, and a multi-AP candidate set information field.

The first SSID field is configured to indicate the at least one legacy SSID to which the AP belongs. The W VSSID field(s) is configured to respectively indicate SSID(s) of W VBSS(s) to which the AP belongs. The VSSID interval field is configured to indicate the sending period of the information corresponding to the SSID of at least one VBSS. The multi-AP candidate set information field is configured to indicate the information corresponding to the VBSS where the AP is located. W is a positive integer.

In some embodiments, the multi-AP candidate set information field includes at least one candidate set information field and a number of candidate sets field. The number of candidate sets field is configured to indicate a number of multi-AP candidate sets where the AP is located. The number of candidate sets field is configured to indicate a value of W. An n-th candidate set information field of the at least one candidate set information field is configured to indicate related information of an n-th multi-AP candidate set where the AP is located. n is a positive integer.

In some embodiments, candidate set information field(s) of the at least one candidate set information field includes at least one of a VBSS identifier (ID) field, a candidate set ID field, a multi-AP sounding method support field, a multi-AP scheme support field, a number of APs field, and multiple AP information fields.

Alternatively, the candidate set information field(s) of the at least one candidate set information field includes at least one of the VBSS ID field, the candidate set ID field, a multi-AP joint sounding support field, the multi-AP scheme support field, the number of APs field, and the multiple AP information fields.

The VBSS ID field is configured to indicate a VBSS ID of a multi-AP candidate set corresponding to the current candidate set information field. The candidate set ID field is configured to indicate an ID of the multi-AP candidate set corresponding to the current candidate set information field. The multi-AP sounding method support field is configured to indicate a channel sounding method supported by the multi-AP candidate set corresponding to the current candidate set information field. The multi-AP scheme support field is configured to indicate a multi-AP coordination mode supported by the multi-AP candidate set corresponding to the current candidate set information field. The number of APs field is configured to indicate a number of member APs included in the multi-AP candidate set corresponding to the current candidate set information field. An m-th AP information field of the multiple AP information fields is configured to indicate related information of an m-th member AP of the multi-AP candidate set corresponding to the current candidate set information field. The multi-AP joint sounding support field is configured to indicate whether the multi-AP candidate set corresponding to the current candidate set information field supports multiple APs to perform channel sounding simultaneously and synchronously. m is a positive integer.

In some embodiments, in case the candidate set information field(s) of the at least one candidate set information field includes the multi-AP joint sounding support field, by default the multi-AP candidate set corresponding to the candidate set information field supports the multiple APs to perform channel sounding sequentially.

In some embodiments, the multi-AP sounding method support field includes at least one of a sequential sounding field and a joint sounding field. Alternatively, the multi-AP sounding method support field includes just the joint sounding field.

The sequential sounding field is configured to indicate whether the multi-AP candidate set corresponding to the current candidate set information field supports the multiple APs to perform channel sounding sequentially. The joint sounding field is configured to indicate whether the multi-AP candidate set corresponding to the current candidate set information field supports multiple APs to perform channel sounding simultaneously and synchronously.

In some embodiments, in case the multi-AP sounding method support field does not include the sequential sounding field, by default the multi-AP candidate set corresponding to the current candidate set information field supports the multiple APs to perform channel sounding sequentially.

In some embodiments, the multi-AP scheme support field includes at least one of an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

Alternatively, The multi-AP scheme support field includes at least one of the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

The UL C-OFDMA field is configured to indicate whether the multi-AP candidate set corresponding to the current candidate set information field supports UL C-OFDMA. The DL C-OFDMA field is configured to indicate whether the multi-AP candidate set corresponding to the current candidate set information field supports DL C-OFDMA. The joint C-SR and C-OFDMA field is configured to indicate whether the multi-AP candidate set corresponding to the current candidate set information field supports simultaneous and joint use of C-SR and C-OFDMA. The joint C-SR and C-BF field is configured to indicate whether the multi-AP candidate set corresponding to the current candidate set information field supports simultaneous and joint use of C-SR and C-BF. The joint C-SR and J-TX field is configured to indicate whether the multi-AP candidate set corresponding to the current candidate set information field supports simultaneous and joint use of C-SR and J-TX. The joint C-SR and C-UL MU MIMO field is configured to indicate whether the multi-AP candidate set corresponding to the current candidate set information field supports simultaneous and joint use of C-SR and C-UL MU MIMO. The C-BF field is configured to indicate whether the multi-AP candidate set corresponding to the current candidate set information field supports C-BF. The J-TX for single user field is configured to indicate whether the multi-AP candidate set corresponding to the current candidate set information field supports performing joint transmission for a same user. The J-TX for multiple-user field is configured to indicate whether the multi-AP candidate set corresponding to the current candidate set information field supports performing joint transmission for multiple users. The J-TX with diversity field is configured to indicate whether the multi-AP candidate set corresponding to the current candidate set information field supports joint transmission of diversity type. The J-TX with multiplexing field is configured to indicate whether the multi-AP candidate set corresponding to the current candidate set information field supports joint transmission of multiplexing type. The full bandwidth J-TX field is configured to indicate whether the multi-AP candidate set corresponding to the current candidate set information field supports joint transmission in full bandwidth. The partial bandwidth J-TX field is configured to indicate whether the multi-AP candidate set corresponding to the current candidate set information field supports joint transmission in partial bandwidth. The detect and discard field is configured to indicate whether the multi-AP candidate set corresponding to the current candidate set information field supports receiving and demodulating other users' data/frames and then discarding in a C-UL-MU MIMO mode, to obtain useful data/frames. The mitigate as interference field is configured to indicate whether the multi-AP candidate set corresponding to the current candidate set information field supports treating other users' data as interference directly, and receiving and demodulating a target user's data/frame directly in the C-UL-MU MIMO mode.

In some embodiments, in case the multi-AP scheme support field does not include the UL C-OFDMA field and the DL C-OFDMA field, by default the multi-AP candidate set corresponding to the current candidate set information field supports UL C-OFDMA and DL C-OFDMA.

In some embodiments, in case a value of the J-TX for single user field indicates that the multi-AP candidate set corresponding to the current candidate set information field does not support performing joint transmission for a same user,

the multi-AP scheme field does not include the J-TX for multiple-user field, or a value of the J-TX for multiple-user field is configured to indicate that the multi-AP candidate set corresponding to the current candidate set information field does not support performing joint transmission for multiple users; and/or

the multi-AP scheme field does not include the J-TX with diversity field, or a value of the J-TX with diversity field is configured to indicate that the multi-AP candidate set corresponding to the current candidate set information field does not support joint transmission of diversity type; and/or

the multi-AP scheme field does not include the J-TX with multiplexing field, or a value of the J-TX with multiplexing field is configured to indicate that the multi-AP candidate set corresponding to the current candidate set information field does not support joint transmission of multiplexing type; and/or

the multi-AP scheme field does not include the full bandwidth J-TX field, or a value of the full bandwidth J-TX field is configured to indicate that the multi-AP candidate set corresponding to the current candidate set information field does not support joint transmission in full bandwidth; and/or

the multi-AP scheme field does not include the partial bandwidth J-TX field, or a value of the partial bandwidth J-TX field is configured to indicate that the multi-AP candidate set corresponding to the current candidate set information field does not support joint transmission in partial bandwidth.

In some embodiments, in case a value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, by default the multi-AP candidate set corresponding to the current candidate set information field supports joint transmission of diversity type, or, by default the multi-AP candidate set corresponding to the current candidate set information field supports joint transmission in full bandwidth.

In some embodiments, the multi-AP scheme support field includes at least one of a coordinated orthogonal frequency division multiple access (C-OFDMA) support field, a coordinated spatial reuse (C-SR) support field, a coordinated beamforming (C-BF) support field, a joint transmission (J-TX) support field, and a coordinated uplink multiple-user multiple input multiple output (C-UL MU MIMO) support field.

Alternatively, the multi-AP scheme support field includes at least one of the C-SR support field, the C-BF support field, the J-TX support field, and the C-UL MU MIMO support field.

The C-OFDMA support field is configured to indicate whether the multi-AP candidate set corresponding to the current candidate set information field supports C-OFDMA. The C-SR support field is configured to indicate whether the multi-AP candidate set corresponding to the current candidate set information field supports C-SR. The C-BF support field is configured to indicate whether the multi-AP candidate set corresponding to the current candidate set information field supports C-BF. The J-TX support field is configured to indicate whether the multi-AP candidate set corresponding to the current candidate set information field supports J-TX. The C-UL MU MIMO support field is configured to indicate whether the multi-AP candidate set corresponding to the current candidate set information field supports C-UL MU MIMO.

In some embodiments, in case the multi-AP scheme support field does not include the C-OFDMA support field, by default the multi-AP candidate set corresponding to the current candidate set information field supports uplink (UL) C-OFDMA and downlink (DL) C-OFDMA.

In some embodiments, AP information field(s) of the multiple AP information fields includes at least one of a BSS ID field, an AP ID field, and an AP role field.

The BSS ID field is configured to indicate a BSS ID of an AP indicated by the current AP information field. The AP ID field is configured to indicate an ID of the AP indicated by the current AP information field. The AP role field is configured to indicate a multi-AP coordination role supported by the AP indicated by the current AP information field.

In some embodiments, the AP ID field is set directly by a master AP (MAP) or a coordinator, or determined by an order of the AP in the multi-AP candidate set as indicated by the AP information field.

In some embodiments, the AP role field includes at least one of a coordinating AP role field, a coordinated AP role field, a sharing AP role field, and a shared AP role field.

In a channel sounding phase, a coordinating AP indicated by the coordinating AP role field initiates channel sounding, and an AP indicated by the coordinated AP role field takes part in the channel sounding. In a preparation phase and/or a transmission phase, an AP indicated by the sharing AP role field shares a transmission opportunity (TXOP) resource thereof to an AP indicated by the shared AP role field, to perform coordination transmission.

In some embodiments, the first frame is a probe response frame or a beacon frame.

In some embodiments, the AP 500 further includes a second communication unit 520.

The second communication unit 520 is configured to receive second information sent by the STA before the AP sends the first information. The second information is configured to request the multi-AP candidate set information.

In some embodiments, the second information is sent through a probe request frame.

The probe request frame includes at least one of an SSID field and an SSID list field.

A first value of a length field corresponding to the SSID field is configured to request a first SSID. The first SSID is a legacy SSID or an SSID of VBSS.

A second value of the length field corresponding to the SSID field is configured to request multiple SSIDs. The multiple SSIDs are all legacy SSIDs where the AP is located, or SSIDs of all VBSSs where the AP is located.

The SSID list field is configured to request at least one SSID. The at least one SSID includes legacy SSID(s) and/or SSID(s) of VBSS(s).

In some embodiments, in case that a value of a length field corresponding to the SSID field is non-zero, the STA requests the first SSID. Alternatively, in case that the value of the length field corresponding to the SSID field is zero, the STA requests all SSIDs.

In some embodiments, in case the probe request frame does not include a multi-AP candidate set info request field, and the length field corresponding to the SSID field takes on the second value, the multiple SSIDs are all legacy SSIDs where the AP is located.

In some embodiments, the probe request frame further includes a multi-AP candidate set info request field. The multi-AP candidate set info request field includes an extra SSID indicator field.

The extra SSID indicator field is configured to instruct the AP to return, to the STA, SSIDs of VBSSs and all legacy SSIDs where the AP is located. Alternatively, the extra SSID indicator field is configured to instruct the AP to return, to the STA, SSIDs of all VBSSs where the AP is located, and to not return, to the STA, any legacy SSID.

In some embodiments, a value of 0 of the extra SSID indicator field is configured to instruct the AP to return, to the STA, SSIDs of VBSSs and all legacy SSIDs where the AP is located.

Alternatively or additionally, a value of 1 of the extra SSID indicator field is configured to instruct the AP to return, to the STA, SSIDs of all VBSSs where the AP is located, and to not return, to the STA, the any legacy SSID.

In some embodiments, in case the probe request frame does not include the multi-AP candidate set info request field, the SSID field takes on the second value, and the multiple SSIDs are SSIDs of all VBSSs where the AP is located.

Alternatively, in case the probe request frame includes the multi-AP candidate set info request field and the multi-AP candidate set info request field does not include the extra SSID indicator field, the SSID field takes on the second value, and the multiple SSIDs are SSIDs of all VBSSs where the AP is located.

The extra SSID indicator field is configured to instruct the AP to return, to the STA, the SSIDs of VBSSs and all legacy SSIDs where the AP is located. Alternatively, the extra SSID indicator field is configured to request the AP to return, to the STA, SSIDs of all VBSSs where the AP is located, and to not return, to the STA, the any legacy SSID.

In some embodiments, the second information is sent through a probe request frame.

The probe request frame includes at least one of an SSID field, an SSID list field, a virtual SSID (VSSID) field, and a VSSID list field.

A first value of a length field corresponding to the SSID field is configured to request a first SSID. The first SSID is a legacy SSID or an SSID of VBSS.

A second value of the length field corresponding to the SSID field is configured to request P SSIDs. The P SSIDs are all legacy SSIDs where the AP is located, or SSIDs of all VBSSs where the AP is located.

The SSID list field is configured to request K SSIDs. The K SSIDs include at least one of legacy SSID(s) and/or SSID(s) of VBSS(s).

The first value of a length field corresponding to the VSSID field is configured to request a second SSID. The second SSID is a legacy SSID or an SSID of VBSS. The second value of the length field corresponding to the VSSID field is configured to request Q SSIDs. The Q SSIDs are all legacy SSIDs where the AP is located, or SSIDs of all VBSSs where the AP is located.

The VSSID list field is configured to request T SSIDs. The T SSIDs include legacy SSID(s) or SSID(s) of VBSS(s).

P, Q, K, and T are all positive integers.

In some embodiments, in case of a value of the length field corresponding to the SSID field is zero, the STA requests all SSIDs, and the length field corresponding to the SSID field takes on the second value.

In some embodiments, the probe request frame further includes a multi-AP candidate set info request field. The multi-AP candidate set info request field includes a VSSID indicator field.

The VSSID indicator field is configured to indicate that the multi-AP candidate set information is not requested, and that the probe request frame does not include the VSSID field and the VSSID list field.

Alternatively, the VSSID indicator field is configured to indicate that the multi-AP candidate set information is requested, and that the STA requests the SSID of VBSS through the SSID field or the SSID list field.

Alternatively, the VSSID indicator field is configured to indicate that the multi-AP candidate set information is requested, and that the STA requests the SSID of VBSS through the VSSID field or the VSSID list field.

Alternatively, the VSSID indicator field is configured to indicate that the multi-AP candidate set information is requested, and that the STA requests SSID of VBSS and/or legacy SSID through the VSSID field or the VSSID list field.

In some embodiments, the first value corresponding to the length field corresponding to the SSID field is non-zero, and the second value corresponding to the length field corresponding to the SSID field is zero.

In some embodiments, a foregoing communication unit is a communication interface or a transceiver, or an input/output interface of a system on chip (SOC) or a communication chip.

Note that the AP 500 according to the embodiments of the disclosure may correspond to the AP in the method embodiments of the disclosure. A foregoing operation and/or function and any other operations and/or functions of a unit in the AP 500 are configured to implement a corresponding flow of the AP in the method 200 as shown in FIG. 11 to FIG. 18, which is not repeated here for brevity.

FIG. 40 is a block diagram of an AP 600 according to embodiments of the disclosure. The access point (AP) 600 is a first AP. As shown in FIG. 40, the AP 600 includes a first communication unit and a second communication unit.

The first communication unit 610 is configured to receive an association request frame sent by a station (STA). The association request frame is configured to request association with the first AP. The association request frame includes at least one piece of indication information. The at least one piece of indication information is configured to indicate at least one of: an service set identifier (SSID) of at least one virtual basic service set (VBSS) with which the STA requests to be associated, and at least one legacy SSID with which the STA requests to be associated. The legacy SSID is a string. The string is used to identify infrastructure basic service sets (BSSs) including an extended service set (ESS) or the string is used to identify indicate a non-infrastructure BSS.

The second communication unit 620 is configured to send, to the STA, an association response frame. The association response frame at least includes association identifier (AID) information corresponding to legacy SSID(s) with which the STA requests to be associated and/or virtual AID (VAID) information corresponding to SSID(s) of VBSS(s) with which the STA requests to be associated.

In some embodiments, the association request frame further includes multi-AP coordination capability information of the STA.

In some embodiments, the association request frame includes at least one of a first SSID field, a second SSID field, an SSID list field, and a multi-AP coordination capability of STA field.

The first SSID field is configured to indicate one legacy SSID with which the STA requests to be associated. The second SSID field is configured to indicate SSID of VBSS with which the STA requests to be associated. The SSID list field is configured to request multiple SSIDs.

The multiple SSIDs include legacy SSID(s) and/or SSID(s) of VBSS(s).

The multi-AP coordination capability of STA field is configured to indicate the multi-AP coordination capability information of the STA.

In some embodiments, the association request frame includes at least one of an SSID field, a selected multi-AP candidate set field, and a multi-AP coordination capability of STA field.

The SSID field is configured to indicate one legacy SSID with which the STA requests to be associated.

The selected multi-AP candidate set field is configured to indicate related information of at least one multi-AP candidate set with which the STA requests to be associated.

The multi-AP coordination capability of STA field is configured to indicate the multi-AP coordination capability information of the STA.

In some embodiments, the selected multi-AP candidate set field includes a number of candidate sets field and at least one candidate set information field.

The number of candidate sets field is configured to indicate a number of multi-AP candidate sets with which the STA requests to be associated. An n-th candidate set information field of the at least one candidate set information field is configured to indicate related information of an n-th multi-AP candidate set with which the STA requests to be associated. n is a positive integer.

In some embodiments, a candidate set information field of the at least one candidate set information field includes a candidate set identifier (ID) field or a VBSS ID field.

The candidate set ID field is configured to indicate an ID of a multi-AP candidate set corresponding to the current candidate set information field. The VBSS ID field is configured to indicate a VBSS ID of the multi-AP candidate set corresponding to the current candidate set information field.

In some embodiments, the selected multi-AP candidate set field further includes a request to associate with candidate sets field.

The request to associate with candidate sets field is configured to indicate that the STA requests to be associated with a related multi-AP candidate set or, the request to associate with candidate sets field is used to indicate that the STA requests not to be associated with a related multi-AP candidate set.

In some embodiments, the multi-AP coordination capability of STA field includes a STA priority field and a multi-AP scheme support field.

The STA priority field is configured to indicate information on priority information of the STA in taking part in a multi-AP transmission or reception mechanism. The multi-AP scheme support field is configured to indicate a multi-AP coordination mode supported by the STA.

In some embodiments, the multi-AP scheme support field includes at least one of a coordinated spatial reuse (C-SR) field, a coordinated beamforming (C-BF) field, a coordinated uplink multiple-user multiple input multiple output (C-UL MU MIMO) field, and a joint transmission (J-TX) field.

Alternatively, the multi-AP scheme support field includes at least one of the C-SR field and the C-UL MU MIMO field.

The C-SR field is configured to indicate whether the STA supports C-SR. The C-BF field is configured to indicate whether the STA supports C-BF. The C-UL MU MIMO field is configured to indicate whether the STA supports C-UL MU MIMO. The J-TX field is configured to indicate whether the STA supports J-TX.

In some embodiments, in case the multi-AP scheme support field does not include the C-BF field, the multi-AP coordination capability of STA field implies that the STA supports C-BF.

Alternatively or additionally, in case the multi-AP scheme support field does not include the J-TX field, the multi-AP coordination capability of STA field implies that the STA supports J-TX field.

In some embodiments, the multi-AP coordination capability of STA field itself implies that the STA supports uplink (UL) coordinated orthogonal frequency division multiple access (C-OFDMA) and downlink (DL) C-OFDMA.

In some embodiments, the association response frame further includes coordinator key holder identifier (ID) information and key generation method information. The coordinator key holder ID information is configured to generate a pairwise transient key (PTK) and a pairwise master key (PMK) between the STA and the coordinator.

In some embodiments, the association response frame includes at least one of a status code field, an AID field, a VAID field, a key generation method field, a fast BSS transition element (FTE) field, a multi-AP candidate set information field, and a robust security network element (RSNE) field.

The status code field is configured to indicate whether the STA is successfully associated with the requested legacy SSID(s) or SSID(s) of VBSS(s).

The AID field is configured to indicate an AID allocated by an AP to the STA in a BSS. The VAID field is configured to indicate a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, the association response frame includes at least one of a status code field, an AID field, a key generation method field, a fast BSS transition element (FTE) field, a multi-AP candidate set information field, and a robust security network element (RSNE) field.

The status code field is configured to indicate whether the STA is successfully associated with the requested legacy SSID and/or SSID(s) of VBSS(s) with which the STA requests to be associated.

The AID field is configured to indicate an AID allocated by an AP to the STA in a BSS. The AID field further indicates a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, the association response frame includes at least one of a status code field, a first AID field, a second AID field, a key generation method field, a fast BSS transition element (FTE) field, a multi-AP candidate set information field, and a robust security network element (RSNE) field.

The status code field is configured to indicate whether the STA is successfully associated with the requested legacy SSID(s) and/or SSID(s) of VBSS(s) with which the STA requests to be associated.

The first AID field is configured to indicate an AID allocated by an AP to the STA in a BSS. The second AID field is configured to indicate a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, a success indicated by the status code field represents that the STA is successfully associated with the legacy SSID(s) and SSID(s) of VBSS(s). Alternatively or additionally, a VBSS failure indicated by the status code field represents that the STA fails to be associated with the SSID(s) of VBSS(s). Alternatively or additionally, a failure indicated by the status code field represents that the STA fails to be associated with the legacy SSID(s).

In some embodiments, in case the status code field indicates that the STA fails to be associated with the legacy SSID(s), the STA is to reinitiate an association request to associate with corresponding legacy SSID(s) and SSID(s) of VBSS(s).

Alternatively or additionally, in case the status code field indicates that the STA fails to be associated with the SSID(s) of VBSS(s), the STA is to reinitiate an association request to associate with corresponding SSID(s) of VBSS(s).

In some embodiments, the multi-AP candidate set information field includes a candidate set information field.

The candidate set information field includes at least one of a VBSS ID field, a candidate set ID field, a sounding method field, a multi-AP scheme field, a number of APs field, and multiple AP information fields.

Alternatively, the candidate set information field includes at least one of the VBSS ID field, the candidate set ID field, a joint sounding support field, the multi-AP scheme field, the number of APs field, and the multiple AP information fields.

The VBSS ID field is configured to indicate a VBSS ID of the multi-AP candidate set with which the STA requests to be associated. The candidate set ID field is configured to indicate an ID of the multi-AP candidate set with which the STA requests to be associated. The sounding method field is configured to indicate a channel sounding method supported by the multi-AP candidate set with which the STA requests to be associated. The multi-AP scheme field is configured to indicate a multi-AP coordination mode supported by the multi-AP candidate set with which the STA requests to be associated. The number of APs field is configured to indicate a number of member APs included in the multi-AP candidate set with which the STA requests to be associated. An m-th AP information field of the multiple AP information fields is configured to indicate related information of an m-th member AP of the multi-AP candidate set with which the STA requests to be associated. The joint sounding support field is configured to indicate whether the multi-AP candidate set with which the STA requests to be associated supports multiple APs to perform channel sounding simultaneously and synchronously.

In some embodiments, in case the candidate set information field includes the joint sounding support field, by default the multi-AP candidate set with which the STA requests to be associated supports multiple APs to perform channel sounding sequentially.

In some embodiments, the sounding method field includes at least one of a sequential sounding field and a joint sounding field.

Alternatively, the sounding method field includes just the joint sounding field.

The sequential sounding field is configured to indicate whether the multi-AP candidate set with which the STA requests to be associated supports multiple APs to perform channel sounding sequentially. The joint sounding field is configured to indicate whether the multi-AP candidate set with which the STA requests to be associated supports multiple APs to perform channel sounding simultaneously and synchronously.

In some embodiments, in case the sounding method field does not include the sequential sounding field, by default the multi-AP candidate set with which the STA requests to be associated supports multiple APs to perform channel sounding sequentially.

In some embodiments, the multi-AP scheme field includes at least one of an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

Alternatively, the multi-AP scheme field includes at least one of the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

The UL C-OFDMA field is configured to indicate whether the multi-AP candidate set with which the STA requests to be associated supports UL C-OFDMA. The DL C-OFDMA field is configured to indicate whether the multi-AP candidate set with which the STA requests to be associated supports DL C-OFDMA. The joint C-SR and C-OFDMA field is configured to indicate whether the multi-AP candidate set with which the STA requests to be associated supports simultaneous and joint use of C-SR and C-OFDMA. The joint C-SR and C-BF field is configured to indicate whether the multi-AP candidate set with which the STA requests to be associated supports simultaneous and joint use of C-SR and C-BF. The joint C-SR and J-TX field is configured to indicate whether the multi-AP candidate set with which the STA requests to be associated supports simultaneous and joint use of C-SR and J-TX. The joint C-SR and C-UL MU MIMO field is configured to indicate whether the multi-AP candidate set with which the STA requests to be associated supports simultaneous and joint use of C-SR and C-UL MU MIMO. The C-BF field is configured to indicate whether the multi-AP candidate set with which the STA requests to be associated supports C-BF. The J-TX for single user field is configured to indicate whether the multi-AP candidate set with which the STA requests to be associated supports performing joint transmission for a same user. The J-TX for multiple-user field is configured to indicate whether the multi-AP candidate set with which the STA requests to be associated supports performing joint transmission for multiple users. The J-TX with diversity field is configured to indicate whether the multi-AP candidate set with which the STA requests to be associated supports joint transmission of diversity type. The J-TX with multiplexing field is configured to indicate whether the multi-AP candidate set with which the STA requests to be associated supports joint transmission of multiplexing type. The full bandwidth J-TX field is configured to indicate whether the multi-AP candidate set with which the STA requests to be associated supports joint transmission in full bandwidth. The partial bandwidth J-TX field is configured to indicate whether the multi-AP candidate set with which the STA requests to be associated supports joint transmission in partial bandwidth. The detect and discard field is configured to indicate whether the multi-AP candidate set with which the STA requests to be associated supports receiving and demodulating other users' data/frames and then discarding in a C-UL-MU MIMO mode, to obtain useful data/frames. The mitigate as interference field is configured to indicate whether the multi-AP candidate set with which the STA requests to be associated supports treating other users' data as interference directly, and receiving and demodulating a target user's data/frame directly in the C-UL-MU MIMO mode.

In some embodiments, in case the multi-AP scheme field does not include the UL C-OFDMA field and the DL C-OFDMA field, by default the multi-AP candidate set with which the STA requests to be associated supports UL C-OFDMA and DL C-OFDMA.

In some embodiments, in case a value of the J-TX for single user field indicates that the multi-AP candidate set with which the STA requests to be associated does not support performing joint transmission for a same user,
the multi-AP scheme field does not include the J-TX for multiple-user field, or a value of the J-TX for multiple-user field is configured to indicate that the multi-AP candidate set with which the STA requests to be associated does not support performing joint transmission for multiple users; and/or
the multi-AP scheme field does not include the J-TX with diversity field, or a value of the J-TX with diversity field is configured to indicate that the multi-AP candidate set with which the STA requests to be associated does not support joint transmission of diversity type; and/or
the multi-AP scheme field does not include the J-TX with multiplexing field, or a value of the J-TX with multiplexing field is configured to indicate that the multi-AP candidate set with which the STA requests to be associated does not support joint transmission of multiplexing type; and/or
the multi-AP scheme field does not include the full bandwidth J-TX field, or a value of the full bandwidth J-TX field is configured to indicate that the multi-AP candidate set with which the STA requests to be associated does not support joint transmission in full bandwidth; and/or
the multi-AP scheme field does not include the partial bandwidth J-TX field, or a value of the partial bandwidth J-TX field is configured to indicate that the multi-AP candidate set with which the STA requests to be associated does not support joint transmission in partial bandwidth.

In some embodiments, in case a value of the J-TX for single user field indicates that the multi-AP candidate set with which the STA requests to be associated supports performing joint transmission for a same user, the multi-AP scheme field does not include the J-TX with diversity field and the full bandwidth J-TX field.

In some embodiments, by default the multi-AP candidate set with which the STA requests to be associated supports joint transmission of diversity type.

Alternatively or additionally, by default the multi-AP candidate set with which the STA requests to be associated supports joint transmission in full bandwidth.

In some embodiments, the multi-AP scheme field includes at least one of a coordinated orthogonal frequency division multiple access (C-OFDMA) support field, a coordinated spatial reuse (C-SR) support field, a coordinated beamforming (C-BF) support field, a joint transmission (J-TX) support field, and a coordinated uplink multiple-user multiple input multiple output (C-UL MU MIMO) support field.

Alternatively, the multi-AP scheme field includes at least one of the C-SR support field, the C-BF support field, the J-TX support field, and the C-UL MU MIMO support field.

The C-OFDMA support field is configured to indicate whether the multi-AP candidate set with which the STA requests to be associated supports C-OFDMA. The C-SR support field is configured to indicate whether the multi-AP candidate set with which the STA requests to be associated supports C-SR. The C-BF support field is configured to indicate whether the multi-AP candidate set with which the STA requests to be associated supports C-BF. The J-TX support field is configured to indicate whether the multi-AP candidate set with which the STA requests to be associated supports J-TX. The C-UL MU MIMO support field is configured to indicate whether the multi-AP candidate set with which the STA requests to be associated supports C-UL MU MIMO.

In some embodiments, in case the multi-AP scheme field does not include the C-OFDMA support field, by default the multi-AP candidate set with which the STA requests to be associated supports uplink (UL) C-OFDMA and downlink (DL) C-OFDMA.

In some embodiments, an AP information field of the multiple AP information fields includes at least one of a BSS ID field, an AP ID field, and an AP role field.

The BSS ID field is configured to indicate a BSS ID of an AP indicated by the AP information field. The AP ID field is configured to indicate an ID of the AP indicated by the AP information field. The AP role field is configured to indicate a multi-AP coordination role supported by the AP indicated by the AP information field.

In some embodiments, the AP ID field is set directly by a master AP (MAP) or the coordinator, or determined by an order of the AP in the multi-AP candidate set as indicated by the AP information field.

In some embodiments, the AP role field includes at least one of a coordinating AP role field, a coordinated AP role field, a sharing AP role field, and a shared AP role field.

In a channel sounding phase, a coordinating AP indicated by the coordinating AP role field initiates channel sounding, and an AP indicated by the coordinated AP role field takes part in the channel sounding. In a preparation phase and/or a transmission phase, an AP indicated by the sharing AP role field shares a transmission opportunity (TXOP) resource thereof to an AP indicated by the shared AP role field, to perform coordination transmission.

In some embodiments, the second communication unit 620 is further configured to send shared information to a second AP. The second AP and the first AP belong to a same legacy SSID, or the second AP and the first AP belong to a same SSID of VBSS. The shared information includes a media access control (MAC) address of the STA and/or multi-AP coordination capability information of the STA.

In some embodiments, the first communication unit 610 is further configured to receive confirmation information sent by the second AP. The confirmation information is configured to indicate whether the second AP accepts an association request of the STA.

In some embodiments, the first AP is a non-coordinator and the second AP is a coordinator.

Alternatively, the first AP is the coordinator and the second AP is the non-coordinator.

In some embodiments, in case the first AP is a coordinator, the shared information is configured to share related information of the STA among the coordinator and other AP(s) corresponding to a multi-AP candidate set with which the STA requests to be associated.

In some embodiments, in case the first AP is a coordinator and f a group temporal key (GTK) and/or a pairwise transient key (PTK) between the STA and other AP(s) corresponding to a multi-AP candidate set with which the STA requests to be associated is generated by corresponding AP, the shared information further includes coordinator key holder ID information. The coordinator key holder ID information is configured for the second AP to acquire a group master key (GMK) and/or a PMK of the coordinator. A GTK and/or the PMK of the coordinator is configured for the second AP to generate a GMK and/or a PMK of the second AP. The second AP and the STA communicate with each other based on a GTK and/or a PTK generated by the GMK and/or the PMK of the second AP.

In some embodiments, the shared information is sent through an association info share frame. The association info share frame including an association info share field. The association info share field includes at least one of a STA MAC address field, a multi-AP coordination capability of STA field, an SSID field, a VAID field, a coordinator key holder ID field, and a fast BSS transition element (FTE) field.

The STA MAC address field is configured to indicate the MAC address of the STA. The multi-AP coordination capability of STA field is configured to indicate the information on the multi-AP coordination capability of the STA. The SSID field is configured to indicate the SSID(s) of VBSS(s) with which the STA requests to be associated in multiple SSID(s) of VBSS(s). The VAID field is configured to indicate a VAID allocated, in VBSS(s) with which the STA requests to be associated, by a coordinator to the STA. The coordinator key holder ID field is configured to indicate coordinator key holder ID information. A parameter field included in the FTE field is configured to indicate the coordinator key holder ID information.

The multiple SSIDs of VBSSs refer to VBSSs set up between the second AP and the coordinator.

In some embodiments, the confirmation information is sent through an association info confirm frame. The association info confirm frame includes an association confirming field.

The association confirming field includes at least one of an association confirm code field, a VAID field, a coordinator key holder ID field, and a fast BSS transition element (FTE) field.

The association confirm code field is configured to indicate whether the second AP accepts the association request of the STA. The VAID field is configured to indicate a VAID allocated, in VBSS(s) with which the STA requests to be associated, by a coordinator to the STA. The coordinator key holder ID field is configured to indicate coordinator key holder ID information. A parameter field included in the FTE field is configured to indicate the coordinator key holder ID information.

In some embodiments, in case the first AP is a non-coordinator and the second AP is a coordinator, the coordinator key holder ID information is configured for the first AP to acquire a group master key (GMK) and/or a pairwise master key (PMK) of the coordinator. The GMK and/or the PMK of the coordinator is configured for the first AP to generate a GMK and/or a PMK of the first AP. The first AP and the STA communicate with each other based on a a group temporal key (GTK) and/or a pairwise transient key (PTK) generated by the GMK and/or the PMK of the first AP.

In some embodiments, in case the first AP is a non-coordinator and the second AP is a coordinator, related information of the STA included in the shared information is shared by the second AP with other AP(s) corresponding to a multi-AP candidate set with which the STA requests to be associated.

In some embodiments, the confirmation information is sent through an acknowledgement (ACK) frame. The ACK frame is configured to indicate that the second AP accepts the association request of the STA.

In some embodiments, the second communication unit 620 is specifically configured to send the shared information to the second AP after the first AP has received the association request frame sent by the STA and before the first AP sends the association response frame to the STA.

Alternatively, the second communication unit is specifically configured to send the shared information to the second AP after the first AP has sent the association response frame to the STA.

In some embodiments, the shared information is transmitted in a wired transmission manner.

Alternatively or additionally, the confirmation is transmitted in a wired transmission manner.

In some embodiments, in case the first AP is a coordinator and that media access control (MAC) layer framing is implemented by the coordinator, the first AP does not have to share related information of the STA with other AP(s) corresponding to a multi-AP candidate set with which the STA requests to be associated.

In some embodiments, the AP 600 further includes a processing unit.

The processing unit 630 is configured to directly set up, between the first AP and the STA, a pairwise master key (PMK) and/or a group master key (GMK), and a pairwise transient key (PTK) and/or a group temporal key (GTK).

In some embodiments, the second communication unit 620 is further configured to send a trigger frame to other AP(s) corresponding to the multi-AP candidate set with which the STA requests to be associated.

A transmission mode and a resource designated in the trigger frame are configured for corresponding AP to send data shared by the first AP to the STA.

In some embodiments, the STA requests, to the first AP, to be associated with a multi-AP candidate set after the STA has been associated with the first AP, or, the STA requests, to the first AP, to be associated with a multi-AP candidate set while the STA is requesting to be associated with the first AP.

In some embodiments, a receiving address (RA) field of the association request frame is configured to indicate a basic service set identifier (BSSID) of an AP with which the STA requests to be associated, or, a receiving address (RA) field of the association request frame is configured to indicate a media access control (MAC) address of the AP with which the STA requests to be associated.

In some embodiments, in case the first AP is a coordinator, the first AP directly shares association information of the STA with other AP(s) corresponding to a multi-AP candidate set with which the STA requests to be associated.

Alternatively, in case the first AP is a non-coordinator, the first AP shares the association information of the STA with coordinator(s) corresponding to the multi-AP candidate set with which the STA requests to be associated. The association information of the STA is shared, by the coordinator(s) corresponding to the multi-AP candidate set with which the STA requests to be associated, with the other AP(s) corresponding to the multi-AP candidate set with which the STA requests to be associated.

In some embodiments, a foregoing communication unit is a communication interface or a transceiver, or an input/output interface of a system on chip (SOC) or a communication chip. A foregoing processing unit may be one or more processors.

Note that the AP 600 according to the embodiments of the disclosure may correspond to the first AP in the method embodiments of the disclosure. A foregoing operation and/or function and any other operations and/or functions of a unit in the AP 600 are configured to implement a corresponding flow of the first AP in the method 300 as shown in FIG. 19 to FIG. 37, which is not repeated here for brevity.

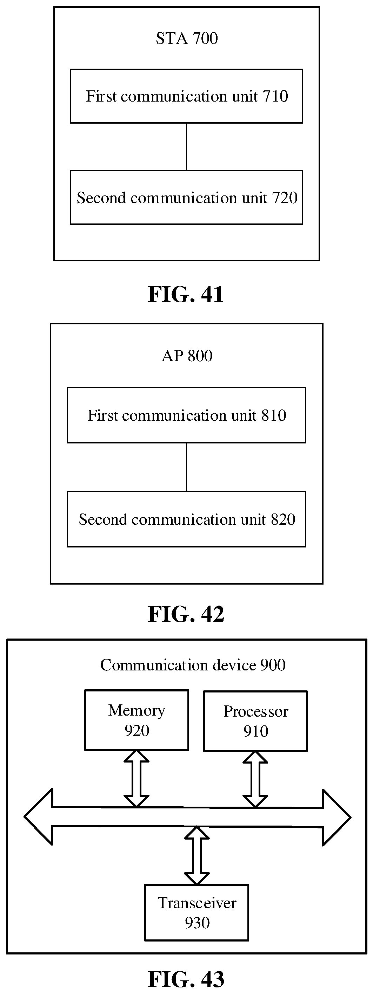

FIG. 41 is a block diagram of a STA 700 according to embodiments of the disclosure. As shown in FIG. 41, the station (STA) 700 includes a first communication unit and a second communication unit.

The first communication unit 710 is configured to send, to a first access point (AP), an association request frame. The association request frame is configured to request association with the first AP. The association request frame includes at least one piece of indication information. The at least one piece of indication information is configured to indicate at least one of: an service set identifier (SSID) of at least one virtual basic service set (VBSS) with which the STA requests to be associated, and at least one legacy SSID with which the STA requests to be associated. The legacy SSID is a string. The string is used to identify infrastructure basic services set (BSSs) that comprise an extended service set (ESS) or the string is used to identify a non-infrastructure BSS.

The second communication unit 720 is configured to receive an association response frame sent by the first AP. The association response frame at least includes association identifier (AID) information corresponding to legacy SSID(s) with which the STA requests to be associated and/or virtual AID (VAID) information corresponding to SSID(s) of VBSS(s) with which the STA requests to be associated.

In some embodiments, the association request frame further includes multi-AP coordination capability information of the STA.

In some embodiments, the association request frame includes at least one of a first SSID field, a second SSID field, an SSID list field, and a multi-AP coordination capability of STA field.

The first SSID field is configured to indicate one legacy SSID with which the STA requests to be associated. The second SSID field is configured to indicate one SSID of VBSS with which the STA requests to be associated. The SSID list field is configured to request multiple SSIDs. The multiple SSIDs include legacy SSID(s) and/or a SSID(s) of VBSS(s). The multi-AP coordination capability of STA field is configured to indicate the multi-AP coordination capability information of the STA.

In some embodiments, the association request frame includes at least one of an SSID field, a selected multi-AP candidate set field, and a multi-AP coordination capability of STA field.

The SSID field is configured to indicate one legacy SSID with which the STA requests to be associated.

The selected multi-AP candidate set field is configured to indicate related information of at least one multi-AP candidate set with which the STA requests to be associated.

The multi-AP coordination capability of STA field is configured to indicate the multi-AP coordination capability information of the STA.

In some embodiments, the selected multi-AP candidate set field includes a number of candidate sets field and at least one candidate set information field.

The number of candidate sets field is configured to indicate a number of multi-AP candidate sets with which the STA requests to be associated.

An n-th candidate set information field of the at least one candidate set information field is configured to indicate related information of an n-th multi-AP candidate set with which the STA requests to be associated. n is a positive integer.

In some embodiments, a candidate set information field of the at least one candidate set information field includes a candidate set identifier (ID) field or a VBSS ID field.

The candidate set ID field is configured to indicate an ID of a multi-AP candidate set corresponding to a current candidate set information field. The VBSS ID field is configured to indicate a VBSS ID of the multi-AP candidate set corresponding to the current candidate set information field.

In some embodiments, the selected multi-AP candidate set field further includes a request to associate with candidate sets field.

The request to associate with candidate sets field is used to indicate that the STA requests to be associated with a related multi-AP candidate set, or, the request to associate with candidate sets field is used to indicate that the STA requests not to be associated with a related multi-AP candidate set.

In some embodiments, the multi-AP coordination capability of STA field includes a STA priority field and a multi-AP scheme support field.

The STA priority field is configured to indicate priority information of the STA in taking part in a multi-AP transmission or reception mechanism. The multi-AP scheme support field is configured to indicate a multi-AP coordination mode supported by the STA.

In some embodiments, the multi-AP scheme support field includes at least one of a joint coordinated spatial reuse (C-SR) field, a coordinated beamforming (C-BF) field, a coordinated uplink multiple-user multiple input multiple output (C-UL MU MIMO) field, and a joint transmission (J-TX) field.

Alternatively, the multi-AP scheme support field includes at least one of the C-SR field or the C-UL MU MIMO field.

The C-SR field is configured to indicate whether the STA supports C-SR. The C-BF field is configured to indicate whether the STA supports C-BF. The C-UL MU MIMO field is configured to indicate whether the STA supports C-UL MU MIMO. The J-TX field is configured to indicate whether the STA supports J-TX.

In some embodiments, in case the multi-AP scheme support field does not include the C-BF field, the multi-AP coordination capability of STA field implies that the STA supports C-BF.

Alternatively or additionally, in case the multi-AP scheme support field does not include the J-TX field, the multi-AP coordination capability of STA field implies that the STA supports J-TX field.

In some embodiments, the multi-AP coordination capability of STA field itself implies that the STA supports uplink (UL) coordinated orthogonal frequency division multiple access (C-OFDMA) and downlink (DL) C-OFDMA.

In some embodiments, the association response frame further includes coordinator key holder identifier (ID) information and key generation method information. The coordinator key holder ID information is configured to generate a pairwise transient key (PTK) and a pairwise master key (PMK) between the STA and the coordinator.

In some embodiments, the association response frame includes at least one of a status code field, an AID field, a VAID field, a key generation method field, a fast BSS transition element (FTE) field, a multi-AP candidate set information field, and a robust security network element (RSNE) field.

The status code field is configured to indicate whether the STA is successfully associated with the requested legacy SSID(s) and/or SSID(s) of VBSS(s).

The AID field is configured to indicate an AID allocated by an AP to the STA in a BSS. The VAID field is configured to indicate a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, the association response frame includes at least one of a status code field, an AID field, a key generation method field, a fast BSS transition element (FTE) field, a multi-AP candidate set information field, and a robust security network element (RSNE) field.

The status code field is configured to indicate whether the STA is successfully associated with the requested legacy SSID(s) and/or SSID(s) of VBSS(s).

The AID field is configured to indicate an AID allocated by an AP to the STA in a BSS. The AID field further indicates a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, the association response frame includes at least one of a status code field, a first AID field, a second AID field, a key generation method field, a fast BSS transition element (FTE) field, a multi-AP candidate set information field, and a robust security network element (RSNE) field.

The status code field is configured to indicate whether the STA is successfully associated with the requested legacy SSID(s) and/or SSID(s) of VBSS(s) with which the STA requests to be associated.

The first AID field is configured to indicate an AID allocated by an AP to the STA in a BSS. The second AID field is configured to indicate a VAID allocated by the AP to the STA in a VBSS. The key generation method field is configured to indicate the key generation method information. A parameter field included in the FTE field is configured to indicate the coordinator key holder ID information. The multi-AP candidate set information field is configured to indicate related information of a multi-AP candidate set with which the STA requests to be associated. The RSNE field is configured to instruct the STA to set up, directly with the coordinator, a PMK and/or a group master key (GMK), and, a PTK and/or a group temporal key (GTK).

In some embodiments, a success indicated by the status code field represents that the STA is successfully associated with the legacy SSID(s) and SSID(s) of VBSS(s). Alternatively or additionally, a VBSS failure indicated by the status code field represents that the STA fails to be associated with the SSID(s) of VBSS(s). Alternatively or additionally, a failure indicated by the status code field represents that the STA fails to be associated with the legacy SSID.

In some embodiments, in case the status code field indicates that the STA fails to be associated with the legacy SSID(s), the STA needs to reinitiate an association request to associate with corresponding legacy SSID(s) and SSID(s) of VBSS(s).

Alternatively or additionally, in case the status code field indicates that the STA fails to be associated with the SSID(s) of VBSS(s), the STA needs to reinitiate an association request to associate with corresponding SSID(s) of VBSS(s).

In some embodiments, the multi-AP candidate set information field includes a candidate set information field.

The candidate set information field includes at least one of a VBSS ID field, a candidate set ID field, a sounding method field, a multi-AP scheme field, a number of APs field, and multiple AP information fields.

Alternatively, the candidate set information field includes at least one of the VBSS ID field, the candidate set ID field, a joint sounding support field, the multi-AP scheme field, the number of APs field, and the multiple AP information fields.

The VBSS ID field is configured to indicate a VBSS ID of the multi-AP candidate set with which the STA requests to be associated. The candidate set ID field is configured to indicate an ID of the multi-AP candidate set with which the STA requests to be associated. The sounding method field is configured to indicate a channel sounding method supported by the multi-AP candidate set with which the STA requests to be associated. The multi-AP scheme field is configured to indicate a multi-AP coordination mode supported by the multi-AP candidate set with which the STA requests to be associated. The number of APs field is configured to indicate a number of member APs included in the multi-AP candidate set with which the STA requests to be associated. An m-th AP information field of the multiple AP information fields is configured to indicate related information of an m-th member AP of the multi-AP candidate set with which the STA requests to be associated. The joint sounding support field is configured to indicate whether the multi-AP candidate set with which the STA requests to be associated supports multiple APs to perform channel sounding simultaneously and synchronously.

In some embodiments, in case the candidate set information field includes the joint sounding support field, by default the multi-AP candidate set with which the STA requests to be associated supports the multiple Aps to perform channel sounding sequentially.

In some embodiments, the sounding method field includes at least one of a sequential sounding field and a joint sounding field.

Alternatively, the sounding method field includes just the joint sounding field.

The sequential sounding field is configured to indicate whether the multi-AP candidate set with which the STA requests to be associated supports multiple APs to perform channel sounding sequentially. The joint sounding field is configured to indicate whether the multi-AP candidate set with which the STA requests to be associated supports multiple APs to perform channel sounding simultaneously and synchronously.

In some embodiments, in case the sounding method field does not include the sequential sounding field, by default the multi-AP candidate set with which the STA requests to be associated supports multiple APs to perform channel sounding sequentially by default.

In some embodiments, the multi-AP scheme field includes at least one of an uplink (UL) coordinated orthogonal frequency division multiple access (C-OFDMA) field, a downlink (DL) C-OFDMA field, a joint coordinated spatial reuse (C-SR) and C-OFDMA field, a joint C-SR and coordinated beamforming (C-BF) field, a joint C-SR and joint transmission (J-TX) field, a joint C-SR and coordinated uplink multiple-user multiple input multiple output (C-UL MU MIMO) field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field.

Alternatively, the multi-AP scheme field includes at least one of the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field.

The UL C-OFDMA field is configured to indicate whether the multi-AP candidate set with which the STA requests to be associated supports UL C-OFDMA. The DL C-OFDMA field is configured to indicate whether the multi-AP candidate set with which the STA requests to be associated supports DL C-OFDMA. The joint C-SR and C-OFDMA field is configured to indicate whether the multi-AP candidate set with which the STA requests to be associated supports simultaneous and joint use of C-SR and C-OFDMA. The joint C-SR and C-BF field is configured to indicate whether the multi-AP candidate set with which the STA requests to be associated supports simultaneous and joint use of C-SR and C-BF. The joint C-SR and J-TX field is configured to indicate whether the multi-AP candidate set with which the STA requests to be associated supports simultaneous and joint use of C-SR and J-TX. The joint C-SR and C-UL MU MIMO field is configured to indicate whether the multi-AP candidate set with which the STA requests to be associated supports simultaneous and joint use of C-SR and C-UL MU MIMO. The C-BF field is configured to indicate whether the multi-AP candidate set with which the STA requests to be associated supports C-BF. The J-TX for single user field is configured to indicate whether the multi-AP candidate set with which the STA requests to be associated supports performing joint transmission for a same user. The J-TX for multiple-user field is configured to indicate whether the multi-AP candidate set with which the STA requests to be associated supports performing joint transmission for multiple users. The J-TX with diversity field is configured to indicate whether the multi-AP candidate set with which the STA requests to be associated supports joint transmission of diversity type. The J-TX with multiplexing field is configured to indicate whether the multi-AP candidate set with which the STA requests to be associated supports joint transmission of multiplexing type. The full bandwidth J-TX field is configured to indicate whether the multi-AP candidate set with which the STA requests to be associated supports joint transmission in full bandwidth. The partial bandwidth J-TX field is configured to indicate whether the multi-AP candidate set with which the STA requests to be associated supports joint transmission in partial bandwidth. The detect and discard field is configured to indicate whether the multi-AP candidate set with which the STA requests to be associated supports receiving and demodulating other users' data/frames and then discarding in a C-UL-MU MIMO mode, to obtain useful data/frames. The mitigate as interference field is configured to indicate whether the multi-AP candidate set with which the STA requests to be associated supports treating other users' data as interference directly, and receiving and demodulating a target user's data/frame directly in the C-UL-MU MIMO mode.

In some embodiments, in case the multi-AP scheme field does not include the UL C-OFDMA field and the DL C-OFDMA field, by default the multi-AP candidate set with which the STA requests to be associated supports UL C-OFDMA and DL C-OFDMA.

In some embodiments, in case a value of the J-TX for single user field indicates that the multi-AP candidate set with which the STA requests to be associated does not support performing joint transmission for a same user,
the multi-AP scheme field does not include the J-TX for multiple-user field, or a value of the J-TX for multiple-user field indicates that the multi-AP candidate set with which the STA requests to be associated does not support performing joint transmission for multiple users; and/or
the multi-AP scheme field does not include the J-TX with diversity field, or a value of the J-TX with diversity field indicates that the multi-AP candidate set with which the STA requests to be associated does not support joint transmission of diversity type; and/or
the multi-AP scheme field does not include the J-TX with multiplexing field, or a value of the J-TX with multiplexing field indicates that the multi-AP candidate set with which the STA requests to be associated does not support joint transmission of multiplexing type; and/or
the multi-AP scheme field does not include the full bandwidth J-TX field, or a value of the full bandwidth J-TX field indicates that the multi-AP candidate set with which the STA requests to be associated does not support joint transmission in full bandwidth; and/or
the multi-AP scheme field does not include the partial bandwidth J-TX field, or a value of the partial bandwidth J-TX field indicates that the multi-AP candidate set with which the STA requests to be associated does not support joint transmission in partial bandwidth.

In some embodiments, in case a value of the J-TX for single user field indicates that the multi-AP candidate set with which the STA requests to be associated supports performing joint transmission for a same user, the multi-AP scheme field does not include the J-TX with diversity field and the full bandwidth J-TX field.

In some embodiments, by default the multi-AP candidate set with which the STA requests to be associated supports joint transmission of diversity type.

Alternatively or additionally, by default the multi-AP candidate set with which the STA requests to be associated supports joint transmission in full bandwidth.

In some embodiments, the multi-AP scheme field includes at least one of a coordinated orthogonal frequency division multiple access (C-OFDMA) support field, a coordinated spatial reuse (C-SR) support field, a coordinated beamforming (C-BF) support field, a joint transmission (J-TX) support field, and a coordinated uplink multiple-user multiple input multiple output (C-UL MU MIMO) support field.

Alternatively, the multi-AP scheme field includes at least one of the C-SR support field, the C-BF support field, the J-TX support field, and the C-UL MU MIMO support field.

The C-OFDMA support field is configured to indicate whether the multi-AP candidate set with which the STA requests to be associated supports C-OFDMA. The C-SR support field is configured to indicate whether the multi-AP candidate set with which the STA requests to be associated supports C-SR. The C-BF support field is configured to indicate whether the multi-AP candidate set with which the STA requests to be associated supports C-BF. The J-TX support field is configured to indicate whether the multi-AP candidate set with which the STA requests to be associated supports J-TX. The C-UL MU MIMO support field is configured to indicate whether the multi-AP candidate set with which the STA requests to be associated supports C-UL MU MIMO.

In some embodiments, in case the multi-AP scheme field does not include the C-OFDMA support field, by default the multi-AP candidate set with which the STA requests to be associated supports uplink (UL) C-OFDMA and downlink (DL) C-OFDMA.

In some embodiments, an AP information field of the multiple AP information fields includes at least one of a BSS ID field, an AP ID field, and an AP role field.

The BSS ID field is configured to indicate a BSS ID of an AP indicated by the AP information field. The AP ID field is configured to indicate an ID of the AP indicated by the AP information field. The AP role field is configured to indicate a multi-AP coordination role supported by the AP indicated by the AP information field.

In some embodiments, the AP ID field is set directly by a master AP (MAP) or the coordinator, or the AP ID field is determined by an order of the AP in the multi-AP candidate set as indicated by the AP information field.

In some embodiments, the AP role field includes at least one of a coordinating AP role field, a coordinated AP role field, a sharing AP role field, and a shared AP role field.

In a channel sounding phase, a coordinating AP indicated by the coordinating AP role field initiates channel sounding, and an AP indicated by the coordinated AP role field participates in the channel sounding. In a preparation phase and/or a transmission phase, an AP indicated by the sharing AP role field shares a transmission opportunity (TXOP) resource thereof to an AP indicated by the shared AP role field, to perform coordination transmission.

In some embodiments, in case the first AP is a coordinator and that media access control (MAC) layer framing is implemented by the coordinator, the first AP does not have to share related information of the STA with other AP(s) corresponding to a multi-AP candidate set with which the STA requests to be associated.

In some embodiments, a pairwise transient key (PTK) and/or a group temporal key (GTK), and, a pairwise master key (PMK) and/or a group master key (GMK), between the first AP and the STA, are set up directly by the first AP.

In some embodiments, the STA requests, to the first AP, to be associated with a multi-AP candidate set after the STA has been associated with the first AP, or, the STA requests, to the first AP, to be associated with a multi-AP candidate set while the STA is requesting to be associated with the first AP.

In some embodiments, a receiving address (RA) field of the association request frame is configured to indicate a basic service set identifier (BSSID) of an AP with which the STA requests to be associated, or, a receiving address (RA) field of the association request frame is used to indicate a media access control (MAC) address of the AP with which the STA requests to be associated.

In some embodiments, in case the first AP is a coordinator, association information of the STA is shared directly by the first AP with other AP(s) corresponding to a multi-AP candidate set with which the STA requests to be associated.

Alternatively, in case the first AP is a non-coordinator, the association information of the STA is shared by the first AP with coordinator(s) corresponding to the multi-AP candidate set with which the STA requests to be associated, and then is shared, by the coordinator(s) corresponding to the multi-AP candidate set with which the STA requests to be associated, with the other AP(s) corresponding to the multi-AP candidate set with which the STA requests to be associated.

In some embodiments, a foregoing communication unit is a communication interface or a transceiver, or an input/output interface of a system on chip (SOC) or a communication chip.

Note that the STA 700 according to the embodiments of the disclosure may correspond to the STA in the method embodiments of the disclosure. A foregoing operation and/or function and any other operations and/or functions of a unit in the STA 700 are configured to implement a corresponding flow of the STA in the method 300 as shown in FIG. 19 to FIG. 37, which is not repeated here for brevity.

FIG. 42 is a block diagram of an AP 800 according to embodiments of the disclosure. The access point (AP) 800 is a second AP. As shown in FIG. 42, the AP 800 includes a first communication unit and a second communication unit.

The first communication unit 810 is configured to receive shared information sent by a first AP. The second AP and the first AP belong to a same legacy service set identifier (SSID), or the second AP and the first AP belong to a same SSID of virtual basic service set (VBSS); the shared information including a media access control (MAC) address of a station (STA) and/or multi-AP coordination capability information of the STA. The legacy SSID is a string. The string is used to identify infrastructure basic service sets (BSSs) that comprise an extended service set (ESS) or the string is used to identify a non-infrastructure BSS.

The second communication unit 820 is configured to send, to the first AP, confirmation information. The confirmation information is used to indicate whether the second AP accepts an association request of the STA.

In some embodiments, the first AP is a non-coordinator and the second AP is a coordinator.

Alternatively, the first AP is a coordinator and the second AP is a non-coordinator.

In some embodiments, in case the first AP is a coordinator, the shared information is configured to share related information of the STA among the coordinator and other AP(s) corresponding to a multi-AP candidate set with which the STA requests to be associated.

In some embodiments, in case the first AP is a coordinator and that a group temporal key (GTK) and/or a pairwise transient key (PTK) between the STA and other AP(s) corresponding to a multi-AP candidate set with which the STA requests to be associated is generated by corresponding AP, the shared information further includes coordinator key holder ID information,

The coordinator key holder ID information is configured for the second AP to acquire a group master key (GMK) and/or a PMK of the coordinator. A GTK and/or the PMK of the coordinator is configured for the second AP to generate a GMK and/or a PMK of the second AP. The second AP and the STA communicate with each other based on a GTK and/or a PTK generated by the GMK and/or the PMK of the second AP.

In some embodiments, the shared information is sent through an association info share frame. The association info share frame includes an association info share field. The association info share field includes at least one of a STA MAC address field, a multi-AP coordination capability of STA field, an SSID field, a VAID field, a coordinator key holder ID field, and a fast BSS transition element (FTE) field.

The STA MAC address field is configured to indicate the MAC address of the STA. The multi-AP coordination capability of STA field is configured to indicate the multi-AP coordination capability information of the STA. The SSID field is configured to indicate the SSID(s) of VBSS(s) with which the STA requests to be associated in multiple SSIDs of VBSSs. The VAID field is configured to indicate VAID(s) allocated, in a VBSS with which the STA requests to be associated, by a coordinator to the STA. The coordinator key holder ID field is configured to indicate coordinator key holder ID information. A parameter field included in the FTE field is configured to indicate the coordinator key holder ID information.

The multiple SSIDs of VBSSs refer to VBSSs set up between the second AP and the coordinator.

In some embodiments, the confirmation information is sent through an association info confirm frame. The association info confirm frame includes an association confirming field.

The association confirming field includes at least one of an association confirm code field, a VAID field, a coordinator key holder ID field, and a fast BSS transition element (FTE) field.

The association confirm code field is configured to indicate whether the second AP accepts the association request of the STA. The VAID field is configured to indicate a VAID allocated, in a VBSS with which the STA requests to be associated, by a coordinator to the STA. The coordinator key holder ID field is configured to indicate coordinator key holder ID information. A parameter field included in the FTE field is configured to indicate the coordinator key holder ID information.

In some embodiments, in case the first AP is a non-coordinator and the second AP is a coordinator, the coordinator key holder ID information is configured for the first AP to acquire a group master key (GMK) and/or a pairwise master key (PMK) of the coordinator. The GMK and/or the PMK of the coordinator is configured for the first AP to generate a GMK and/or a PMK of the first AP. The first AP and the STA communicate with each other based on a group temporal key (GTK) and/or a pairwise transient key (PTK) generated by the GMK and/or the PMK of the first AP.

In some embodiments, in case the first AP is a non-coordinator and the second AP is a coordinator, related information of the STA included in the shared information is shared by the second AP with other AP(s) corresponding to a multi-AP candidate set with which the STA requests to be associated.

In some embodiments, the confirmation information is sent through an acknowledgement (ACK) frame. The ACK frame is configured to indicate that the second AP accepts the association request of the STA.

In some embodiments, the shared information is sent after the first AP has received the association request frame sent by the STA and before the first AP sends the association response frame to the STA.

Alternatively, the shared information is sent after the first AP has sent the association response frame to the STA.

In some embodiments, the shared information is transmitted in a wired transmission manner. Alternatively or additionally, the confirmation information is transmitted in a wired transmission manner.

In some embodiments, the first communication unit 810 is further configured to receive a trigger frame sent by the first AP. The second AP is an AP corresponding to a multi-AP candidate set with which the STA requests to be associated.

The second communication unit 820 is further configured to send data shared by the first AP to the STA according to a transmission mode and a resource designated in the trigger frame.

In some embodiments, in case the first AP is a coordinator, association information of the STA is shared directly by the first AP with other AP(s) corresponding to a multi-AP candidate set with which the STA requests to be associated.

Alternatively, in case the first AP is a non-coordinator, the association information of the STA is shared by the first AP with coordinator(s) corresponding to the multi-AP candidate set with which the STA requests to be associated. The association information of the STA is shared, by the coordinator(s) corresponding to the multi-AP candidate set with which the STA requests to be associated, with the other AP(s) corresponding to the multi-AP candidate set with which the STA requests to be associated.

In some embodiments, a foregoing communication unit may be a communication interface or a transceiver, or an input/output interface of a system on chip (SOC) or a communication chip.

Note that the AP 800 according to the embodiments of the disclosure may correspond to the second AP in the method embodiments of the disclosure. A foregoing operation and/or function and any other operations and/or functions of a unit in the AP 800 are configured to implement a corresponding flow of the second AP in the method 300 as shown in FIG. 19 to FIG. 37, which is not repeated here for brevity.

FIG. 43 is a diagram of a structure of a communication device 900 according to embodiments of the disclosure. As shown in FIG. 43, the communication device 900 includes a processor 910. The processor 910 may call and run a computer program from a memory to implement a method according to embodiments of the disclosure.

In some embodiments, as shown in FIG. 43, the communication device 900 may further include a memory 920. The processor 910 may call and run a computer program from the memory 920 to implement a method according to embodiments of the disclosure.

The memory 920 may be a separate device separate from the processor 910, or may be integrated in the processor 910.

In some embodiments, as shown in FIG. 43, the communication device 900 may further include a transceiver 930. The processor 910 may control communication by the transceiver 930 with another device. Specifically, the transceiver may transmit information or data to the other device, or receive information or data transmitted by the other device.

The transceiver 930 may include a transmitter and a receiver. The transceiver 930 may further include one or more antennas.

In some embodiments, the communication device 900 may be an AP according to embodiments of the disclosure, and the communication device 900 may implement a corresponding flow implemented by the AP in a method according to embodiments of the disclosure, which is not repeated here for brevity.

In some embodiments, the communication device 900 may be a STA according to embodiments of the disclosure, and the communication device 900 may implement a corresponding flow implemented by the STA in a method according to embodiments of the disclosure, which is not repeated here for brevity.

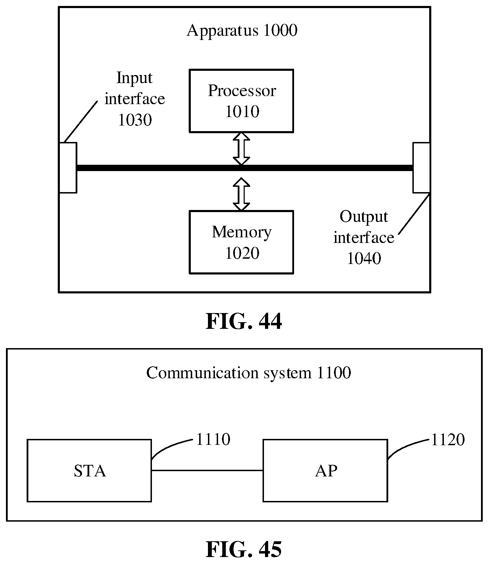

FIG. 44 is a diagram of a structure of an apparatus according to embodiments of the disclosure. As shown in FIG. 44, the apparatus 1000 may include a processor 1010. The processor 1010 may call and run a computer program from a memory to implement a method according to embodiments of the disclosure.

In some embodiments, as shown in FIG. 44, the apparatus 1000 may further include a memory 1020. The processor 1010 may call and run a computer program from the memory 1020 to implement a method according to embodiments of the disclosure.

The memory 1020 may be a separate device separate from the processor 1010, or may be integrated in the processor 1010.

In some embodiments, the apparatus 1000 may further include an input interface 1030. The processor 1010 may control communication by the input interface 1030 with another device or chip. Specifically, the input interface may receive information or data transmitted by the other device or chip.

In some embodiments, the apparatus 1000 may further include an output interface 1040. The processor 1010 may control communication by the output interface 1040 with another device or chip. Specifically the output interface may transmit information or data to the other device or chip.

In some embodiments, the apparatus may apply to an AP according to embodiments of the disclosure, and the apparatus may implement a corresponding flow implemented by the AP in a method according to embodiments of the disclosure, which is not repeated here for brevity.

In some embodiments, the apparatus may apply to a STA according to embodiments of the disclosure, and the apparatus may implement a corresponding flow implemented by the STA in a method according to embodiments of the disclosure, which is not repeated here for brevity.

In some embodiments, an apparatus according to embodiments of the disclosure may also be a chip, such as a system-level chip, a system chip, a chip system, a SOC chip, etc.

FIG. 45 is a block diagram of a communication system 1100 according to embodiments of the disclosure. As shown in FIG. 45, the communication system 1100 includes a STA 1110 and an AP 1120.

The STA 1110 may be configured to implement a corresponding function implemented by a STA in a method herein, and the AP 1120 may be configured to implement a corresponding function implemented by an AP in a method herein, which is not repeated here for brevity.

Note that a processor according to embodiments of the disclosure may be an integrated circuit chip capable of signal processing. In implementation, an operation of the method embodiments may be carried out via an integrated logic circuit of hardware in the processor or instructions in form of software. The processor may be a general-purpose processor, a digital signal processor (DSP), an application specific integrated circuit (ASIC), a field programmable gate array (FPGA), or another programmable logic device, a discrete gate, or a transistor logic device, a discrete hardware component, etc. The processor may implement or execute various methods, operations, and logical block diagrams according to embodiments of the disclosure. A general-purpose processor may be a microprocessor or any conventional processor, etc. An operation of the method disclosed in embodiments of the disclosure may be directly embodied as being carried out by a hardware decoding processor, or by a combination of hardware and software modules in the decoding processor. A software module may be located in a mature storage medium in the art, such as a RAM, a flash memory, a ROM, a PROM, an electrically rewritable programmable memory, a register, etc. The storage medium may be located in the memory. The processor may read information in the memory, and combine it with hardware of the processor to perform an operation of a method herein.

Note that the memory in embodiments of the disclosure may be volatile and/or non-volatile memory. The non-volatile memory may be a read-only memory (ROM), a programmable ROM (PROM), an erasable PROM (EPROM), an electrically EPROM (EEPROM), or flash memory. The volatile memory may be a random access memory (RAM), which is used as an external cache. By way of illustrative instead of restrictive description, many forms of RAM are available, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a direct rambus RAM (DR RAM). Note that the memory of the system and method described in the disclosure is intended to include, but is not limited to, these and any other suitable types of memory.

Note that the memory is described illustratively rather than restrictively. For example, a memory according to embodiments of the disclosure may also be a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), a direct rambus RAM (DRRAM), etc. That is, the memory 402 according to embodiments of the disclosure is intended to include, but is not limited to, these and any other suitable types of memory.

Embodiments of the present disclosure also provide a computer-readable storage medium configured to store a computer program.

In some embodiments, the computer-readable storage medium may apply to an AP in embodiments of the disclosure, and the computer program may allow a computer to execute a corresponding flow implemented by the AP in a method according to embodiments of the disclosure, which is not repeated here for brevity.

In some embodiments, the computer-readable storage medium may apply to a STA in embodiments of the disclosure, and the computer program may allow a computer to execute a corresponding flow implemented by the STA in a method according to embodiments of the disclosure, which is not repeated here for brevity.

Embodiments of the present disclosure also provide a computer program product including computer program instructions.

In some embodiments, the computer program product may apply to an AP in embodiments of the disclosure, and the computer program instructions may allow a computer to execute a corresponding flow implemented by the AP in a method according to embodiments of the disclosure, which is not repeated here for brevity.

In some embodiments, the computer program product may apply to a STA in embodiments of the disclosure, and the computer program instructions may allow a computer to execute a corresponding flow implemented by the STA in a method according to embodiments of the disclosure, which is not repeated here for brevity.

Embodiments of the present disclosure also provide a computer program.

In some embodiments, the computer program may apply to an AP in embodiments of the disclosure. When being run on a computer, the computer program may allow the computer to execute a corresponding flow implemented by the AP in a method according to embodiments of the disclosure, which is not repeated here for brevity.

In some embodiments, the computer program may apply to a STA in embodiments of the disclosure. When being run on a computer, the computer program may allow the computer to execute a corresponding flow implemented by the STA in a method according to embodiments of the disclosure, which is not repeated here for brevity.

A person having ordinary skill in the art may realize that a combination of illustrative units as well as illustrative algorithm operations according to embodiments of the disclosure may be implemented by electronic hardware or a combination of electronic hardware and computer software. Whether such a function is implemented by hardware or by software may depend on a specific application of a technical solution as well as a design constraint. Depending on a specific application, a person having ordinary skill in the art may implement a described function using different methods. Such implementation however should not be deemed going beyond a scope of a technical solution of the present disclosure.

A person having ordinary skill in the art will clearly understand that, for convenience and conciseness of description, reference may be made to a corresponding process in a foregoing method embodiment for a detailed working process of a system, an apparatus, a unit, etc., described above, which is not repeated here.

In a number of embodiments provided in the disclosure, it should be understood that a method, an apparatus, a system, etc., as disclosed, may be implemented in other ways. For example, a described apparatus embodiment is merely illustrative. For example, division of units is merely logic function division and there may be another division in actual implementation. For example, parts or components can be combined, or integrated into another system, or some features/characteristics may be omitted or skipped. Furthermore, the coupling, or direct coupling or communicational connection illustrated or discussed herein may be implemented through indirect coupling or communicational connection among some interfaces, apparatuses, or parts, and may be electrical, mechanical, or of another form.

The units described as separate components may or may not be physically separated. Components shown as units may be or may not be physical units. They may be located in one place, or distributed on multiple network units. Some or all of the units may be selected to achieve the purpose of a solution of the embodiments as needed.

In addition, functional units in embodiments of the present disclosure may be integrated in one processing part, or exist as separate physical units respectively. Alternatively, two or more units may be integrated in one unit.

When implemented in form of a software functional unit and sold or used as an independent product, the function may be stored in a computer-readable storage medium. Based on such an understanding, the essential part or a part contributing to prior art of the technical solution of the present disclosure or part of the technical solution may appear in form of a software product. The software product is stored in a storage medium, and includes a number of instructions for allowing computer device (such as a personal computer, a server, network device, etc.) to execute all or part of a method in embodiments of the present disclosure. The storage medium includes various media that may store program codes, such as a U disk, a mobile hard disk, Read-Only Memory (ROM), Random Access Memory (RAM), a magnetic disk, a CD, etc.

What described are but embodiments of the present disclosure and are not intended to limit the scope of the present disclosure. Any modification, equivalent replacement, and/or the like made within the technical scope of the present disclosure, as may occur to a person having ordinary skill in the art, shall be included in the scope of the present disclosure. The scope of the present disclosure thus should be determined by the claims.

## Claims

1. A method for wireless communication, comprising:
receiving (S220), by a station, STA, first information sent by an access point, AP,
wherein the first information comprises information of a multi-AP candidate set to which the AP belongs,
wherein the information of the multi-AP candidate set comprises at least one of following: at least one legacy service set identifier, SSID, to which the AP belongs, an SSID of at least one virtual basic service set, VBSS, to which the AP belongs, a sending period of information corresponding to the SSID of at least one VBSS, and information corresponding to a VBSS where the AP is located,
wherein the legacy SSID is a string, the string being used to identify infrastructure basic service sets, BSSs, that comprise an extended service set, ESS, or the string being used to identify a non-infrastructure BSS,
wherein the first information is sent through a first frame,
wherein the first frame comprises at least one of following: a first SSID field, W virtual SSID, VSSID, field(s), a VSSID interval field, and a multi-AP candidate set information field,
wherein the first SSID field is used to indicate the at least one legacy SSID to which the AP belongs, the W VSSID field(s) is used to respectively indicate SSID(s) of W VBSS(s) to which the AP belongs, the VSSID interval field is used to indicate the sending period of the information corresponding to the SSID of at least one VBSS, and the multi-AP candidate set information field is used to indicate the information corresponding to the VBSS where the AP is located, wherein W is a positive integer,
wherein the multi-AP candidate set information field comprises at least one candidate set information field and a number of candidate sets field,
wherein the number of candidate sets field is used to indicate a number of multi-AP candidate sets where the AP is located, and the number of candidate sets field is used to indicate a value of W, wherein an n-th candidate set information field of the at least one candidate set information field is used to indicate related information of an n-th multi-AP candidate set where the AP is located, wherein n is a positive integer,
**characterized in that** candidate set information field(s) of the at least one candidate set information field comprise at least one of following: a candidate set ID field, a multi-AP sounding method support field, a multi-AP scheme support field, a number of APs field, or multiple AP information fields, or
wherein the candidate set information field(s) of the at least one candidate set information field comprises at least one of following: the candidate set ID field, a multi-AP joint sounding support field, the multi-AP scheme support field, the number of APs field, and the multiple AP information fields,
wherein the candidate set ID field is used to indicate an ID of the multi-AP candidate set corresponding to the current candidate set information field, the multi-AP sounding method support field is used to indicate a channel sounding method supported by the multi-AP candidate set corresponding to the current candidate set information field, the multi-AP scheme support field is used to indicate a multi-AP coordination mode supported by the multi-AP candidate set corresponding to current the candidate set information field, the number of APs field is used to indicate a number of member APs comprised in the multi-AP candidate set corresponding to the current candidate set information field, an m-th AP information field of the multiple AP information fields is used to indicate related information of an m-th member AP of the multi-AP candidate set corresponding to the current candidate set information field, and the multi-AP joint sounding support field is used to indicate whether the multi-AP candidate set corresponding to the current candidate set information field supports multiple APs to perform channel sounding simultaneously and synchronously, wherein m is a positive integer.

2. The method of claim 1, wherein before receiving, by the STA, the first information, the method further comprises:
sending, by the STA, second information to the AP, wherein the second information is used to request the multi-AP candidate set information, wherein the second information is sent through a probe request frame,
wherein the probe request frame comprises at least one of an SSID field and an SSID list field,
wherein a first value of a length field corresponding to the SSID field is used to request a first SSID, the first SSID being a legacy SSID or the first SSID being an SSID of VBSS; and a second value of the length field corresponding to the SSID field is used to request multiple SSIDs, the multiple SSIDs being all legacy SSIDs where the AP is located, or the multiple SSIDs being SSIDs of all VBSSs where the AP is located,
wherein the SSID list field is used to request at least one SSID, the at least one SSID comprising legacy SSID(s) and/or SSID(s) of VBSS(s).

3. The method of claim 2, wherein the probe request frame further comprises a multi-AP candidate set info request field, and the multi-AP candidate set info request field comprises an extra SSID indicator field,
wherein the extra SSID indicator field is used to instruct the AP to return, to the STA, SSIDs of VBSSs and all legacy SSIDs where the AP is located; or, the extra SSID indicator field is used to instruct the AP to return, to the STA, SSIDs of all VBSSs where the AP is located, and to not return any legacy SSID to the STA.

4. The method of claim 1, wherein the multi-AP scheme support field comprises at least one of following: an uplink, UL, coordinated orthogonal frequency division multiple access , C-OFDMA, field, a downlink, DL, C-OFDMA field, a joint coordinated spatial reuse, C-SR, and C-OFDMA field, a joint C-SR and coordinated beamforming, C-BF, field, a joint C-SR and joint transmission, J-TX, field, a joint C-SR and coordinated uplink multiple-user multiple input multiple output, C-UL MU MIMO, field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field; or
the multi-AP scheme support field comprises at least one of following: the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field,
wherein the UL C-OFDMA field is used to indicate whether the multi-AP candidate set corresponding to the current candidate set information field supports UL C-OFDMA, the DL C-OFDMA field is used to indicate whether the multi-AP candidate set corresponding to the current candidate set information field supports DL C-OFDMA, the joint C-SR and C-OFDMA field is used to indicate whether the multi-AP candidate set corresponding to the current candidate set information field supports simultaneous and joint use of C-SR and C-OFDMA, the joint C-SR and C-BF field is used to indicate whether the multi-AP candidate set corresponding to the current candidate set information field supports simultaneous and joint use of C-SR and C-BF, the joint C-SR and J-TX field is used to indicate whether the multi-AP candidate set corresponding to the current candidate set information field supports simultaneous and joint use of C-SR and J-TX, the joint C-SR and C-UL MU MIMO field is used to indicate whether the multi-AP candidate set corresponding to the current candidate set information field supports simultaneous and joint use of C-SR and C-UL MU MIMO, the C-BF field is used to indicate whether the multi-AP candidate set corresponding to the current candidate set information field supports C-BF, the J-TX for single user field is used to indicate whether the multi-AP candidate set corresponding to the current candidate set information field supports performing joint transmission for a same user, the J-TX for multiple-user field is used to indicate whether the multi-AP candidate set corresponding to the current candidate set information field supports performing joint transmission for multiple users, the J-TX with diversity field is used to indicate whether the multi-AP candidate set corresponding to the current candidate set information field supports joint transmission of diversity type, the J-TX with multiplexing field is used to indicate whether the multi-AP candidate set corresponding to the candidate set information field supports joint transmission of multiplexing type, the full bandwidth J-TX field is used to indicate whether the multi-AP candidate set corresponding to the current candidate set information field supports joint transmission in full bandwidth, the partial bandwidth J-TX field is used to indicate whether the multi-AP candidate set corresponding to the current candidate set information field supports joint transmission in partial bandwidth, the detect and discard field is used to indicate whether the multi-AP candidate set corresponding to the current candidate set information field supports receiving and demodulating other users' data/frames and then discarding in a C-UL-MU MIMO mode, to obtain useful data/frames, and the mitigate as interference field is used to indicate whether the multi-AP candidate set corresponding to the current candidate set information field supports treating other users' data as interference directly, and receiving and demodulating a target user's data/frame directly in the C-UL-MU MIMO mode.

5. The method of claim 4, wherein in case that the multi-AP scheme support field does not comprise the UL C-OFDMA field and the DL C-OFDMA field, the multi-AP candidate set corresponding to the current candidate set information field supports UL C-OFDMA and DL C-OFDMA by default.

6. A method for wireless communication, comprising:
sending (S210), by an access point, AP, first information to a station, STA,
wherein the first information comprises information of a multi-AP candidate set to which the AP belongs,
wherein the information of the multi-AP candidate set comprises at least one of following: at least one legacy service set identifier, SSID, to which the AP belongs, an SSID of at least one virtual basic service set, VBSS, to which the AP belongs, a sending period of information corresponding the SSID of at least one VBSS, and information corresponding to a VBSS where the AP is located,
wherein the legacy SSID is a string, the string being used to identify infrastructure basic service sets, BSSs, that comprise an extended service set, ESS, or the string being used to identify a non-infrastructure BSS,
wherein the first information is sent through a first frame,
wherein the first frame comprises at least one of following: a first SSID field, W virtual SSID, VSSID, field(s), a VSSID interval field, and a multi-AP candidate set information field,
wherein the first SSID field is used to indicate the at least one legacy SSID to which the AP belongs, the W VSSID field(s) is used to respectively indicate SSID(s) of W VBSS(s) to which the AP belongs, the VSSID interval field is used to indicate the sending period of the information corresponding to the SSID of at least one VBSS, and the multi-AP candidate set information field is used to indicate the information corresponding to the VBSS where the AP is located, wherein W is a positive integer,
wherein the multi-AP candidate set information field comprises at least one candidate set information field and a number of candidate sets field,
wherein the number of candidate sets field is used to indicate a number of multi-AP candidate sets where the AP is located, and the number of candidate sets field is used to indicate a value of W, wherein an n-th candidate set information field of the at least one candidate set information field is used to indicate related information of an n-th multi-AP candidate set where the AP is located, wherein n is a positive integer,
**characterized in that** candidate set information field(s) of the at least one candidate set information field comprise at least one of following: a candidate set ID field, a multi-AP sounding method support field, a multi-AP scheme support field, a number of APs field, or multiple AP information fields, or
wherein the candidate set information field(s) of the at least one candidate set information field comprises at least one of following: the candidate set ID field, a multi-AP joint sounding support field, the multi-AP scheme support field, the number of APs field, and the multiple AP information fields,
wherein the candidate set ID field is used to indicate an ID of the multi-AP candidate set corresponding to the current candidate set information field, the multi-AP sounding method support field is used to indicate a channel sounding method supported by the multi-AP candidate set corresponding to the current candidate set information field, the multi-AP scheme support field is used to indicate a multi-AP coordination mode supported by the multi-AP candidate set corresponding to current the candidate set information field, the number of APs field is used to indicate a number of member APs comprised in the multi-AP candidate set corresponding to the current candidate set information field, an m-th AP information field of the multiple AP information fields is used to indicate related information of an m-th member AP of the multi-AP candidate set corresponding to the current candidate set information field, and the multi-AP joint sounding support field is used to indicate whether the multi-AP candidate set corresponding to the current candidate set information field supports multiple APs to perform channel sounding simultaneously and synchronously, wherein m is a positive integer.

7. The method of claim 6, wherein before receiving, by the STA, the first information, the method further comprises:
receiving, by the AP, second information sent by the STA, wherein the second information is used to request the multi-AP candidate set information, wherein the second information is sent through a probe request frame,
wherein the probe request frame comprises at least one of an SSID field and an SSID list field,
wherein a first value of a length field corresponding to the SSID field is used to request a first SSID, the first SSID being a legacy SSID or the first SSID being an SSID of VBSS; and a second value of the length field corresponding to the SSID field is used to request multiple SSIDs, the multiple SSIDs being all legacy SSIDs where the AP is located, or the multiple SSIDs being SSIDs of all VBSSs where the AP is located,
wherein the SSID list field is used to request at least one SSID, the at least one SSID comprising legacy SSID(s) and/or SSID(s) of VBSS(s).

8. The method of claim 7, wherein the probe request frame further comprises a multi-AP candidate set info request field, and the multi-AP candidate set info request field comprises an extra SSID indicator field,
wherein the extra SSID indicator field is used to instruct the AP to return, to the STA, SSIDs of VBSSs and all legacy SSIDs where the AP is located; or, the extra SSID indicator field is used to instruct the AP to return, to the STA, SSIDs of all VBSSs where the AP is located, and to not return any legacy SSID to the STA.

9. The method of claim 6, further comprising:
receiving, by the AP, an association request frame sent by the STA, the association request frame is used to request association with the AP, wherein the association request frame comprises at least one piece of indication information, the at least one piece of indication information is used to indicate at least one of: an SSID of at least one VBSS with which the STA requests to be associated, and at least one legacy SSID with which the STA requests to be associated; wherein the legacy SSID is a string, the string being used to identify infrastructure basic service sets, BSSs, that comprise an extended service set, ESS, or the string being used to identify a non-infrastructure BSS; and
sending, by the AP, an association response frame to the STA, wherein the association response frame at least comprises association identifier, AID, information corresponding to legacy SSID(s) with which the STA requests to be associated and/or virtual AID, VAID, information corresponding to SSID(s) of VBSS(s) with which the STA requests to be associated.

10. The method of claim 9, wherein the association response frame further comprises coordinator key holder identifier, ID, information and key generation method information, wherein the coordinator key holder ID information is configured to generate a pairwise transient key, PTK, and a pairwise master key, PMK, between the STA and the coordinator.

11. The method of claim 9, further comprising:
sending, by the AP, shared information to a second AP, wherein the second AP and the AP belong to a same legacy SSID, or the second AP and the AP belong to a same SSID of VBSS, the shared information comprising a media access control, MAC, address of the STA and/or multi-AP coordination capability information of the STA; and
receiving, by the AP, confirmation information sent by the second AP, wherein the confirmation information is used to indicate whether the second AP accepts an association request of the STA.

12. The method of claim 6, wherein the multi-AP scheme support field comprises at least one of following: an uplink, UL, coordinated orthogonal frequency division multiple access, C-OFDMA, field, a downlink, DL, C-OFDMA field, a joint coordinated spatial reuse, C-SR, and C-OFDMA field, a joint C-SR and coordinated beamforming, C-BF, field, a joint C-SR and joint transmission, J-TX, field, a joint C-SR and coordinated uplink multiple-user multiple input multiple output, C-UL MU MIMO, field, a C-BF field, a J-TX for single user field, a J-TX for multiple-user field, a J-TX with diversity field, a J-TX with multiplexing field, a full bandwidth J-TX field, a partial bandwidth J-TX field, a detect and discard field, and a mitigate as interference field; or
the multi-AP scheme support field comprises at least one of following: the joint C-SR and C-OFDMA field, the joint C-SR and C-BF field, the joint C-SR and J-TX field, the joint C-SR and C-UL MU MIMO field, the C-BF field, the J-TX for single user field, the J-TX for multiple-user field, the J-TX with diversity field, the J-TX with multiplexing field, the full bandwidth J-TX field, the partial bandwidth J-TX field, the detect and discard field, and the mitigate as interference field,
wherein the UL C-OFDMA field is used to indicate whether the multi-AP candidate set corresponding to the current candidate set information field supports UL C-OFDMA, the DL C-OFDMA field is used to indicate whether the multi-AP candidate set corresponding to the current candidate set information field supports DL C-OFDMA, the joint C-SR and C-OFDMA field is used to indicate whether the multi-AP candidate set corresponding to the current candidate set information field supports simultaneous and joint use of C-SR and C-OFDMA, the joint C-SR and C-BF field is used to indicate whether the multi-AP candidate set corresponding to the current candidate set information field supports simultaneous and joint use of C-SR and C-BF, the joint C-SR and J-TX field is used to indicate whether the multi-AP candidate set corresponding to the current candidate set information field supports simultaneous and joint use of C-SR and J-TX, the joint C-SR and C-UL MU MIMO field is used to indicate whether the multi-AP candidate set corresponding to the current candidate set information field supports simultaneous and joint use of C-SR and C-UL MU MIMO, the C-BF field is used to indicate whether the multi-AP candidate set corresponding to the current candidate set information field supports C-BF, the J-TX for single user field is used to indicate whether the multi-AP candidate set corresponding to the current candidate set information field supports performing joint transmission for a same user, the J-TX for multiple-user field is used to indicate whether the multi-AP candidate set corresponding to the current candidate set information field supports performing joint transmission for multiple users, the J-TX with diversity field is used to indicate whether the multi-AP candidate set corresponding to the current candidate set information field supports joint transmission of diversity type, the J-TX with multiplexing field is used to indicate whether the multi-AP candidate set corresponding to the candidate set information field supports joint transmission of multiplexing type, the full bandwidth J-TX field is used to indicate whether the multi-AP candidate set corresponding to the current candidate set information field supports joint transmission in full bandwidth, the partial bandwidth J-TX field is used to indicate whether the multi-AP candidate set corresponding to the current candidate set information field supports joint transmission in partial bandwidth, the detect and discard field is used to indicate whether the multi-AP candidate set corresponding to the current candidate set information field supports receiving and demodulating other users' data/frames and then discarding in a C-UL-MU MIMO mode, to obtain useful data/frames, and the mitigate as interference field is used to indicate whether the multi-AP candidate set corresponding to the current candidate set information field supports treating other users' data as interference directly, and receiving and demodulating a target user's data/frame directly in the C-UL-MU MIMO mode.

13. The method of claim 12, wherein in case that the multi-AP scheme support field does not comprise the UL C-OFDMA field and the DL C-OFDMA field, the multi-AP candidate set corresponding to the current candidate set information field supports UL C-OFDMA and DL C-OFDMA by default.

14. A station, STA, comprising a processor and a memory, wherein the memory is configured to store a computer program, and the processor is configured to call and run the computer program stored in the memory to implement the method of any one of claims 1 to 5.

15. An access point, AP, comprising a processor and a memory, wherein the memory is configured to store a computer program, and the processor is configured to call and run the computer program stored in the memory to implement the method of any one of claims 6 to 13.

## Patentansprüche

1. Verfahren zur drahtlosen Kommunikation, umfassend: Empfangen (S220), durch eine Station bzw. STA von ersten Informationen, die durch einen Zugangspunkt bzw. AP gesendet werden,
wobei die ersten Informationen Informationen eines Mehrfach-AP-Kandidatensatzes, zu dem der AP gehört, umfassen,
wobei die Informationen des Mehrfach-AP-Kandidatensatzes mindestens eines der Folgenden umfassen: mindestens eine Legacy-Dienstsatzkennung bzw. SSID, zu der der AP gehört, eine SSID mindestens eines virtuellen Basisdienstsatzes bzw. VBSS, zu dem der AP gehört, eine Sendeperiode von Informationen, die der SSID mindestens eines VBSS entsprechen, und Informationen, die einem VBSS am Standort des AP entsprechen,
wobei die Legacy-SSID eine Kette ist, wobei die Kette verwendet wird, um Infrastruktur-Basisdienstsätze bzw. BSSs zu identifizieren, die einen erweiterten Dienstsatz bzw. ESS umfassen, oder die Kette verwendet wird, um einen Nicht-Infrastruktur-BSS zu identifizieren,
wobei die ersten Informationen durch einen ersten Frame gesendet werden,
wobei der erste Frame mindestens eines der Folgenden umfasst: ein erstes SSID-Feld, W Feld(er) virtueller SSID bzw. VSSID, ein VSSID-Intervallfeld und ein Mehrfach-AP-Kandidatensatz-Informationsfeld,
wobei das erste SSID-Feld verwendet wird, um die mindestens eine Legacy-SSID anzugeben, zu der der AP gehört, das bzw. die W VSSID-Feld(er) verwendet werden, um jeweils SSID(s) von W VBSS(s) anzugeben, zu denen der AP gehört, das VSSID-Intervallfeld verwendet wird, um die Sendeperiode der Informationen, die der SSID mindestens eines VBSS entsprechen, anzugeben, und das Mehrfach-AP-Kandidatensatz-Informationsfeld verwendet wird, um die Informationen, die dem VBSS am Standort des AP entsprechen, anzugeben, wobei W eine positive ganze Zahl ist,
wobei das Mehrfach-AP-Kandidatensatz-Informationsfeld mindestens ein Kandidatensatz-Informationsfeld und ein Kandidatensatzanzahlfeld umfasst,
wobei das Kandidatensatzanzahlfeld verwendet wird, um eine Anzahl von Mehrfach-AP-Kandidatensätzen am Standort des AP anzugeben, und das Kandidatensatzanzahlfeld verwendet wird, um einen Wert von W anzugeben, wobei ein n-tes Kandidatensatz-Informationsfeld des mindestens einen Kandidatensatz-Informationsfelds verwendet wird, um zugehörige Informationen eines n-ten Mehrfach-AP-Kandidatensatzes am Standort des AP anzugeben, wobei n eine positive ganze Zahl ist,
**dadurch gekennzeichnet, dass** ein oder mehrere Kandidatensatz-Informationsfeld(er) des mindestens einen Kandidatensatz-Informationsfelds mindestens eines der Folgenden umfassen: ein Kandidatensatz-ID-Feld, ein Mehrfach-AP-Sondierungsverfahren-Unterstützungsfeld,
ein Mehrfach-AP-Schema-Unterstützungsfeld, ein AP-Anzahlfeld oder mehrere AP-Informationsfelder, oder
wobei das eine oder die mehreren Kandidatensatz-Informationsfeld(er) des mindestens einen Kandidatensatz-Informationsfelds mindestens eines der Folgenden umfassen: das Kandidatensatz-ID-Feld, ein Mehrfach-AP-Gemeinsamsondierungs-Unterstützungsfeld,
das Mehrfach-AP-Schema-Unterstützungsfeld, das AP-Anzahlfeld und die mehreren AP-Informationsfelder,
wobei das Kandidatensatz-ID-Feld verwendet wird, um eine ID des Mehrfach-AP-Kandidatensatzes, der dem aktuellen Kandidatensatz-Informationsfeld entspricht, anzugeben, das Mehrfach-AP-Sondierungsverfahren-Unterstützungsfeld verwendet wird, um ein durch den Mehrfach-AP-Kandidatensatz, der dem aktuellen Kandidatensatz-Informationsfeld entspricht, unterstütztes Kanalsondierungsverfahren anzugeben, das Mehrfach-AP-Schema-Unterstützungsfeld verwendet wird, um einen durch den Mehrfach-AP-Kandidatensatz, der dem aktuellen Kandidatensatz-Informationsfeld entspricht, unterstützten Mehrfach-AP-Koordinationsmodus anzugeben, das AP-Anzahlfeld verwendet wird, um eine Anzahl teilnehmender APs anzugeben, die in dem Mehrfach-AP-Kandidatensatz, der dem aktuellen Kandidatensatz-Informationsfeld entspricht, enthalten sind, ein m-tes AP-Informationsfeld der mehreren AP-Informationsfelder verwendet wird, um zugehörige Informationen eines m-ten teilnehmenden AP des Mehrfach-AP-Kandidatensatzes, der dem aktuellen Kandidatensatz-Informationsfeld entspricht, anzugeben, und das Mehrfach-AP-Gemeinsamsondierungs-Unterstützungsfeld verwendet wird, um anzugeben, ob der Mehrfach-AP-Kandidatensatz, der dem aktuellen Kandidatensatz-Informationsfeld entspricht, mehrere APs zur gleichzeitigen und synchronen Durchführung von Kanalsondierung unterstützt, wobei m eine positive ganze Zahl ist.

2. Verfahren nach Anspruch 1, wobei das Verfahren vor dem Empfangen, durch die STA, der ersten Informationen, ferner Folgendes umfasst:
Senden, durch die STA, von zweiten Informationen an den AP, wobei die zweiten Informationen verwendet werden, um die Mehrfach-AP-Kandidatensatzinformationen anzufordern, wobei die zweiten Informationen durch einen Sondierungsanforderungsframe gesendet werden,
wobei der Sondierungsanforderungsframe ein SSID-Feld und/oder ein SSID-Listenfeld umfasst,
wobei ein erster Wert eines Längenfelds, das dem SSID-Feld entspricht, verwendet wird, um eine erste SSID anzufordern, wobei die erste SSID eine Legacy-SSID ist oder die erste SSID eine SSID eines VBSS ist; und ein zweiter Wert des Längenfelds, das dem SSID-Feld entspricht, verwendet wird, um mehrere SSIDs anzufordern, wobei die mehreren SSIDs alle Legacy-SSIDs am Standort des AP sind oder die mehreren SSIDs SSIDs aller VBSSs am Standort des AP sind,
wobei das SSID-Listenfeld verwendet wird, um mindestens eine SSID anzufordern, wobei die mindestens eine SSID Legacy-SSID(s) und/oder SSID(s) von VBSS(s) umfasst.

3. Verfahren nach Anspruch 2, wobei der Sondierungsanforderungsframe ferner ein Mehrfach-AP-Kandidatensatz-Infoanforderungsfeld umfasst und das Mehrfach-AP-Kandidatensatz-Infoanforderungsfeld ein zusätzliches SSID-Indikatorfeld umfasst,
wobei das zusätzliche SSID-Indikatorfeld verwendet wird, um den AP dazu anzuweisen, SSIDs von VBSSs und alle Legacy-SSIDs am Standort des AP an die STA zurückzugeben; oder das zusätzliche SSID-Indikatorfeld verwendet wird, um den AP dazu anzuweisen, SSIDs aller VBSSs am Standort des AP an die STA zurückzugeben und keine Legacy-SSID an die STA zurückzugeben.

4. Verfahren nach Anspruch 1, wobei das Mehrfach-AP-Schema-Unterstützungsfeld mindestens eines der Folgenden umfasst: ein Uplink- bzw. UL-Koordinierter-Orthogonalfrequenzteilungsmehrfachzugriff- bzw. C-OFDMA-Feld, ein Downlink- bzw. DL-C-OFDMA-Feld, ein gemeinsames Koordinierte-Räumliche-Wiederverwendung- bzw. C-SR- und C-OFDMA-Feld, ein gemeinsames C-SR- und Koordiniertes-Beamforming- bzw. C-BF-Feld, ein gemeinsames C-SR- und Gemeinsamübertragungs- bzw. J-TX-Feld, ein gemeinsames C-SR- und Koordinierter-Uplink-Mehrfachnutzer-Mehrfacheingabe-Mehrfachausgabe- bzw. C-UL-MU-MIMO-Feld, ein C-BF-Feld, ein J-TX-für-Einzelnutzer-Feld, ein J-TX-für-Mehrfachnutzer-Feld, ein J-TX-mit-Diversität-Feld, ein J-TX-mit-Multiplexing-Feld, ein Vollbandbreiten-J-TX-Feld, ein Teilbandbreiten-J-TX-Feld, ein Detektieren- und-Verwerfen-Feld und ein Mitigieren-als-Interferenz-Feld; oder
das Mehrfach-AP-Schema-Unterstützungsfeld mindestens eines der Folgenden umfasst: das gemeinsame C-SR- und C-OFDMA-Feld, das gemeinsame C-SR- und C-BF-Feld, das gemeinsame C-SR- und J-TX-Feld, das gemeinsame C-SR- und C-UL-MU-MIMO-Feld, das C-BF-Feld, das J-TX-für-Einzelnutzer-Feld, das J-TX-für-Mehrfachnutzer-Feld, das J-TX-mit-Diversität-Feld, das J-TX-mit-Multiplexing-Feld, das Vollbandbreiten-J-TX-Feld, das Teilbandbreiten-J-TX-Feld, das Detektieren-und-Verwerfen-Feld und das Mitigieren-als-Interferenz-Feld, wobei das UL-C-OFDMA-Feld verwendet wird, um anzugeben, ob der Mehrfach-AP-Kandidatensatz, der dem aktuellen Kandidatensatz-Informationsfeld entspricht, UL-C-OFDMA unterstützt, das DL-C-OFDMA-Feld verwendet wird, um anzugeben, ob der Mehrfach-AP-Kandidatensatz, der dem aktuellen Kandidatensatz-Informationsfeld entspricht, DL-C-OFDMA unterstützt, das gemeinsame C-SR- und C-OFDMA-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-OFDMA unterstützt, das gemeinsame C-SR- und C-BF-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-BF unterstützt, das gemeinsame C-SR- und J-TX-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und J-TX unterstützt, das gemeinsame C-SR- und C-UL-MU-MIMO-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-UL-MU-MIMO unterstützt, das C-BF-Feld verwendet wird, um anzugeben, ob der Mehrfach-AP-Kandidatensatz, der dem aktuellen Kandidatensatz-Informationsfeld entspricht, C-BF unterstützt, das J-TX-für-Einzelnutzer-Feld verwendet wird, um anzugeben, ob der Mehrfach-AP-Kandidatensatz, der dem aktuellen Kandidatensatz-Informationsfeld entspricht, die Durchführung einer gemeinsamen Übertragung für einen gleichen Nutzer unterstützt, das J-TX-für-Mehrfachnutzer-Feld verwendet wird, um anzugeben, ob der Mehrfach-AP-Kandidatensatz, der dem aktuellen Kandidatensatz-Informationsfeld entspricht, die Durchführung einer gemeinsamen Übertragung für mehrere Nutzer unterstützt, das J-TX-mit-Diversität-Feld verwendet wird, um anzugeben, ob der Mehrfach-AP-Kandidatensatz, der dem aktuellen Kandidatensatz-Informationsfeld entspricht, eine gemeinsame Übertragung eines Diversitätstyps unterstützt, das J-TX-mit-Multiplexing-Feld verwendet wird, um anzugeben, ob der Mehrfach-AP-Kandidatensatz, der dem aktuellen Kandidatensatz-Informationsfeld entspricht, eine gemeinsame Übertragung eines Multiplexing-Typs unterstützt, das Vollbandbreiten-J-TX-Feld verwendet wird, um anzugeben, ob der Mehrfach-AP-Kandidatensatz, der dem aktuellen Kandidatensatz-Informationsfeld entspricht, eine gemeinsame Übertragung in voller Bandbreite unterstützt, das Teilbandbreiten-J-TX-Feld verwendet wird, um anzugeben, ob der Mehrfach-AP-Kandidatensatz, der dem aktuellen Kandidatensatz-Informationsfeld entspricht, eine gemeinsame Übertragung in Teilbandbreite unterstützt, das Detektieren-und-Verwerfen-Feld verwendet wird, um anzugeben, ob der Mehrfach-AP-Kandidatensatz, der dem aktuellen Kandidatensatz-Informationsfeld entspricht, das Empfangen und Demodulieren von Daten/Frames anderer Nutzer und dann das Verwerfen in einem C-UL-MU-MIMO-Modus, um nützliche Daten/Frames zu erhalten, unterstützt, und das Mitigieren-als-Interferenz-Feld verwendet wird, um anzugeben, ob der Mehrfach-AP-Kandidatensatz, der dem aktuellen Kandidatensatz-Informationsfeld entspricht, das direkte Behandeln von Daten anderer Nutzer als Interferenz und das direkte Empfangen und Demodulieren von Daten/eines Frames eines Zielnutzers im C-UL-MU-MIMO-Modus unterstützt.

5. Verfahren nach Anspruch 4, wobei in einem Fall, in dem das Mehrfach-AP-Schema-Unterstützungsfeld das UL-C-OFDMA-Feld und das DL-C-OFDMA-Feld nicht umfasst, der Mehrfach-AP-Kandidatensatz, der dem aktuellen Kandidatensatz-Informationsfeld entspricht, automatisch UL-C-OFDMA und DL-C-OFDMA unterstützt.

6. Verfahren zur drahtlosen Kommunikation, umfassend: Senden (S210), durch einen Zugangspunkt bzw. AP, von ersten Informationen an eine Station bzw. STA,
wobei die ersten Informationen Informationen eines Mehrfach-AP-Kandidatensatzes, zu dem der AP gehört, umfassen,
wobei die Informationen des Mehrfach-AP-Kandidatensatzes mindestens eines der Folgenden umfasst: mindestens eine Legacy-Dienstsatzkennung bzw. SSID, zu der der AP gehört, eine SSID mindestens eines virtuellen Basisdienstsatzes bzw. VBSS, zu dem der AP gehört, eine Sendeperiode von Informationen, die der SSID mindestens eines VBSS entsprechen, und Informationen, die einem VBSS am Standort des AP entsprechen,
wobei die Legacy-SSID eine Kette ist, wobei die Kette verwendet wird, um Infrastruktur-Basisdienstsätze bzw. BSSs zu identifizieren, die einen erweiterten Dienstsatz bzw. ESS umfassen, oder die Kette verwendet wird, um einen Nicht-Infrastruktur-BSS zu identifizieren,
wobei die ersten Informationen durch einen ersten Frame gesendet werden,
wobei der erste Frame mindestens eines der Folgenden umfasst: ein erstes SSID-Feld, W Feld(er) virtueller SSID bzw. VSSID, ein VSSID-Intervallfeld und ein Mehrfach-AP-Kandidatensatz-Informationsfeld,
wobei das erste SSID-Feld verwendet wird, um die mindestens eine Legacy-SSID anzugeben, zu der der AP gehört, das bzw. die W VSSID-Feld(er) verwendet werden, um jeweils SSID(s) von W VBSS(s) anzugeben, zu denen der AP gehört, das VSSID-Intervallfeld verwendet wird, um die Sendeperiode der Informationen, die der SSID mindestens eines VBSS entsprechen, anzugeben, und das Mehrfach-AP-Kandidatensatz-Informationsfeld verwendet wird, um die Informationen, die dem VBSS am Standort des AP entsprechen, anzugeben, wobei W eine positive ganze Zahl ist,
wobei das Mehrfach-AP-Kandidatensatz-Informationsfeld mindestens ein Kandidatensatz-Informationsfeld und ein Kandidatensatzanzahlfeld umfasst,
wobei das Kandidatensatzanzahlfeld verwendet wird, um eine Anzahl von Mehrfach-AP-Kandidatensätzen am Standort des AP anzugeben, und das Kandidatensatzanzahlfeld verwendet wird, um einen Wert von W anzugeben, wobei ein n-tes Kandidatensatz-Informationsfeld des mindestens einen Kandidatensatz-Informationsfelds verwendet wird, um zugehörige Informationen eines n-ten Mehrfach-AP-Kandidatensatzes am Standort des AP anzugeben, wobei n eine positive ganze Zahl ist,
**dadurch gekennzeichnet, dass** ein oder mehrere Kandidatensatz-Informationsfeld(er) des mindestens einen Kandidatensatz-Informationsfelds mindestens eines der Folgenden umfassen: ein Kandidatensatz-ID-Feld, ein Mehrfach-AP-Sondierungsverfahren-Unterstützungsfeld,
ein Mehrfach-AP-Schema-Unterstützungsfeld, ein AP-Anzahlfeld oder mehrere AP-Informationsfelder, oder
wobei das eine oder die mehreren Kandidatensatz-Informationsfeld(er) des mindestens einen Kandidatensatz-Informationsfelds mindestens eines der Folgenden umfassen: das Kandidatensatz-ID-Feld, ein Mehrfach-AP-Gemeinsamsondierungs-Unterstützungsfeld,
das Mehrfach-AP-Schema-Unterstützungsfeld, das AP-Anzahlfeld und die mehreren AP-Informationsfelder,
wobei das Kandidatensatz-ID-Feld verwendet wird, um eine ID des Mehrfach-AP-Kandidatensatzes, der dem aktuellen Kandidatensatz-Informationsfeld entspricht, anzugeben, das Mehrfach-AP-Sondierungsverfahren-Unterstützungsfeld verwendet wird, um ein durch den Mehrfach-AP-Kandidatensatz, der dem aktuellen Kandidatensatz-Informationsfeld entspricht, unterstütztes Kanalsondierungsverfahren anzugeben, das Mehrfach-AP-Schema-Unterstützungsfeld verwendet wird, um einen durch den Mehrfach-AP-Kandidatensatz, der dem aktuellen Kandidatensatz-Informationsfeld entspricht, unterstützten Mehrfach-AP-Koordinationsmodus anzugeben, das AP-Anzahlfeld verwendet wird, um eine Anzahl teilnehmender APs anzugeben, die in dem Mehrfach-AP-Kandidatensatz, der dem aktuellen Kandidatensatz-Informationsfeld entspricht, enthalten sind, ein m-tes AP-Informationsfeld der mehreren AP-Informationsfelder verwendet wird, um zugehörige Informationen eines m-ten teilnehmenden AP des Mehrfach-AP-Kandidatensatzes, der dem aktuellen Kandidatensatz-Informationsfeld entspricht, anzugeben, und das Mehrfach-AP-Gemeinsamsondierungs-Unterstützungsfeld verwendet wird, um anzugeben, ob der Mehrfach-AP-Kandidatensatz, der dem aktuellen Kandidatensatz-Informationsfeld entspricht, mehrere APs zur gleichzeitigen und synchronen Durchführung von Kanalsondierung unterstützt, wobei m eine positive ganze Zahl ist.

7. Verfahren nach Anspruch 6, wobei das Verfahren vor dem Empfangen, durch die STA, der ersten Informationen, ferner Folgendes umfasst:
Empfangen, durch den AP, von zweiten Informationen, die durch die STA gesendet werden, wobei die zweiten Informationen verwendet werden, um die Mehrfach-AP-Kandidatensatzinformationen anzufordern, wobei die zweiten Informationen durch einen Sondierungsanforderungsframe gesendet werden,
wobei der Sondierungsanforderungsframe ein SSID-Feld und/oder ein SSID-Listenfeld umfasst,
wobei ein erster Wert eines Längenfelds, das dem SSID-Feld entspricht, verwendet wird, um eine erste SSID anzufordern, wobei die erste SSID eine Legacy-SSID ist oder die erste SSID eine SSID eines VBSS ist; und ein zweiter Wert des Längenfelds, das dem SSID-Feld entspricht, verwendet wird, um mehrere SSIDs anzufordern, wobei die mehreren SSIDs alle Legacy-SSIDs am Standort des AP sind oder die mehreren SSIDs SSIDs aller VBSSs am Standort des AP sind,
wobei das SSID-Listenfeld verwendet wird, um mindestens eine SSID anzufordern, wobei die mindestens eine SSID Legacy-SSID(s) und/oder SSID(s) von VBSS(s) umfasst.

8. Verfahren nach Anspruch 7, wobei der Sondierungsanforderungsframe ferner ein Mehrfach-AP-Kandidatensatz-Infoanforderungsfeld umfasst und das Mehrfach-AP-Kandidatensatz-Infoanforderungsfeld ein zusätzliches SSID-Indikatorfeld umfasst,
wobei das zusätzliche SSID-Indikatorfeld verwendet wird, um den AP dazu anzuweisen, SSIDs von VBSSs und alle Legacy-SSIDs am Standort des AP an die STA zurückzugeben; oder das zusätzliche SSID-Indikatorfeld verwendet wird, um den AP dazu anzuweisen, SSIDs aller VBSSs am Standort des AP an die STA zurückzugeben und keine Legacy-SSID an die STA zurückzugeben.

9. Verfahren nach Anspruch 6, ferner umfassend:
Empfangen, durch den AP, eines Verknüpfungsanforderungsframes, der durch die STA gesendet wird, wobei der Verknüpfungsanforderungsframe verwendet wird, um eine Verknüpfung mit dem AP anzufordern, wobei der Verknüpfungsanforderungsframe mindestens ein Element von Angabeinformationen umfasst, das mindestens eine Element von Angabeinformationen verwendet wird, um mindestens eines der Folgenden anzugeben: eine SSID mindestens eines VBSS, mit dem die STA eine Verknüpfung anfordert, und mindestens eine Legacy-SSID, mit der die STA eine Verknüpfung anfordert; wobei die Legacy-SSID eine Kette ist, wobei die Kette verwendet wird, um Infrastruktur-Basisdienstsätze, BSSs, zu identifizieren, die einen erweiterten Dienstsatz, ESS, umfassen, oder die Kette verwendet wird, um einen Nicht-Infrastruktur-BSS zu identifizieren; und
Senden, durch den AP, eines Verknüpfungsantwortframes an die STA, wobei der Verknüpfungsantwortframe mindestens Verknüpfungskennungs- bzw. AID-Informationen umfasst, die Legacy-SSID(s), mit denen die STA eine Verknüpfung anfordert, entsprechen, und/oder Virtuell-AID- bzw. VAID-Informationen, die SSID(s) von VBSS(s), mit denen die STA eine Verknüpfung anfordert, entsprechen, umfasst.

10. Verfahren nach Anspruch 9, wobei der Verknüpfungsantwortframe ferner Koordinator-Schlüsselhalter-Kennungs- bzw. ID-Informationen und Schlüsselerzeugungsverfahrensinformationen umfasst, wobei die Koordinator-Schlüsselhalter-ID-Informationen verwendet werden, um einen paarweisen transienten Schlüssel, PTK, und einen paarweisen Master-Schlüssel, PMK, zwischen der STA und dem Koordinator zu erzeugen.

11. Verfahren nach Anspruch 9, ferner umfassend:
Senden, durch den AP, von gemeinsam genutzten Informationen an einen zweiten AP, wobei der zweite AP und der AP zu einer gleichen Legacy-SSID gehören oder der zweite AP und der AP zu einer gleichen SSID eines VBSS gehören, wobei die gemeinsam genutzten Informationen eine Medienzugriffssteuerungs- bzw. MAC-Adresse der STA und/oder Mehrfach-AP-Koordinationsfähigkeitsinformationen der STA umfassen; und
Empfangen, durch den AP, von Bestätigungsinformationen, die durch den zweiten AP gesendet werden, wobei die Bestätigungsinformationen verwendet werden, um anzugeben, ob der zweite AP eine Verknüpfungsanforderung der STA akzeptiert.

12. Verfahren nach Anspruch 6, wobei das Mehrfach-AP-Schema-Unterstützungsfeld mindestens eines der Folgenden umfasst: ein Uplink- bzw. UL-Koordinierter-Orthogonalfrequenzteilungsmehrfachzugriff- bzw. C-OFDMA-Feld, ein Downlink- bzw. DL-C-OFDMA-Feld, ein gemeinsames Koordinierte-Räumliche-Wiederverwendung- bzw. C-SR- und C-OFDMA-Feld, ein gemeinsames C-SR- und Koordiniertes-Beamforming- bzw. C-BF-Feld, ein gemeinsames C-SR- und Gemeinsamübertragungs- bzw. J-TX-Feld, ein gemeinsames C-SR- und Koordinierter-Uplink-Mehrfachnutzer-Mehrfacheingabe-Mehrfachausgabe- bzw. C-UL-MU-MIMO-Feld, ein C-BF-Feld, ein J-TX-für-Einzelnutzer-Feld, ein J-TX-für-Mehrfachnutzer-Feld, ein J-TX-mit-Diversität-Feld, ein J-TX-mit-Multiplexing-Feld, ein Vollbandbreiten-J-TX-Feld, ein Teilbandbreiten-J-TX-Feld, ein Detektieren- und-Verwerfen-Feld und ein Mitigieren-als-Interferenz-Feld; oder
das Mehrfach-AP-Schema-Unterstützungsfeld mindestens eines der Folgenden umfasst: das gemeinsame C-SR- und C-OFDMA-Feld, das gemeinsame C-SR- und C-BF-Feld, das gemeinsame C-SR- und J-TX-Feld, das gemeinsame C-SR- und C-UL-MU-MIMO-Feld, das C-BF-Feld, das J-TX-für-Einzelnutzer-Feld, das J-TX-für-Mehrfachnutzer-Feld, das J-TX-mit-Diversität-Feld, das J-TX-mit-Multiplexing-Feld, das Vollbandbreiten-J-TX-Feld, das Teilbandbreiten-J-TX-Feld, das Detektieren-und-Verwerfen-Feld und das Mitigieren-als-Interferenz-Feld, wobei das UL-C-OFDMA-Feld verwendet wird, um anzugeben, ob der Mehrfach-AP-Kandidatensatz, der dem aktuellen Kandidatensatz-Informationsfeld entspricht, UL-C-OFDMA unterstützt, das DL-C-OFDMA-Feld verwendet wird, um anzugeben, ob der Mehrfach-AP-Kandidatensatz, der dem aktuellen Kandidatensatz-Informationsfeld entspricht, DL-C-OFDMA unterstützt, das gemeinsame C-SR- und C-OFDMA-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-OFDMA unterstützt, das gemeinsame C-SR- und C-BF-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-BF unterstützt, das gemeinsame C-SR- und J-TX-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und J-TX unterstützt, das gemeinsame C-SR- und C-UL-MU-MIMO-Feld verwendet wird, um anzugeben, ob der Mehrfach-AP-Kandidatensatz, der dem aktuellen Kandidatensatz-Informationsfeld entspricht, eine gleichzeitige und gemeinsame Verwendung von C-SR und C-UL-MU-MIMO unterstützt, das C-BF-Feld verwendet wird, um anzugeben, ob der Mehrfach-AP-Kandidatensatz, der dem aktuellen Kandidatensatz-Informationsfeld entspricht, C-BF unterstützt, das J-TX-für-Einzelnutzer-Feld verwendet wird, um anzugeben, ob der Mehrfach-AP-Kandidatensatz, der dem aktuellen Kandidatensatz-Informationsfeld entspricht, die Durchführung einer gemeinsamen Übertragung für einen gleichen Nutzer unterstützt, das J-TX-für-Mehrfachnutzer-Feld verwendet wird, um anzugeben, ob der Mehrfach-AP-Kandidatensatz, der dem aktuellen Kandidatensatz-Informationsfeld entspricht, die Durchführung einer gemeinsamen Übertragung für mehrere Nutzer unterstützt, das J-TX-mit-Diversität-Feld verwendet wird, um anzugeben, ob der Mehrfach-AP-Kandidatensatz, der dem aktuellen Kandidatensatz-Informationsfeld entspricht, eine gemeinsame Übertragung eines Diversitätstyps unterstützt, das J-TX-mit-Multiplexing-Feld verwendet wird, um anzugeben, ob der Mehrfach-AP-Kandidatensatz, der dem aktuellen Kandidatensatz-Informationsfeld entspricht, eine gemeinsame Übertragung eines Multiplexing-Typs unterstützt, das Vollbandbreiten-J-TX-Feld verwendet wird, um anzugeben, ob der Mehrfach-AP-Kandidatensatz, der dem aktuellen Kandidatensatz-Informationsfeld entspricht, eine gemeinsame Übertragung in voller Bandbreite unterstützt, das Teilbandbreiten-J-TX-Feld verwendet wird, um anzugeben, ob der Mehrfach-AP-Kandidatensatz, der dem aktuellen Kandidatensatz-Informationsfeld entspricht, eine gemeinsame Übertragung in Teilbandbreite unterstützt, das Detektieren-und-Verwerfen-Feld verwendet wird, um anzugeben, ob der Mehrfach-AP-Kandidatensatz, der dem aktuellen Kandidatensatz-Informationsfeld entspricht, das Empfangen und Demodulieren von Daten/Frames anderer Nutzer und dann das Verwerfen in einem C-UL-MU-MIMO-Modus, um nützliche Daten/Frames zu erhalten, unterstützt, und das Mitigieren-als-Interferenz-Feld verwendet wird, um anzugeben, ob der Mehrfach-AP-Kandidatensatz, der dem aktuellen Kandidatensatz-Informationsfeld entspricht, das direkte Behandeln von Daten anderer Nutzer als Interferenz und das direkte Empfangen und Demodulieren von Daten/eines Frames eines Zielnutzers im C-UL-MU-MIMO-Modus unterstützt.

13. Verfahren nach Anspruch 12, wobei in einem Fall, in dem das Mehrfach-AP-Schema-Unterstützungsfeld das UL-C-OFDMA-Feld und das DL-C-OFDMA-Feld nicht umfasst, der Mehrfach-AP-Kandidatensatz, der dem aktuellen Kandidatensatz-Informationsfeld entspricht, automatisch UL-C-OFDMA und DL-C-OFDMA unterstützt.

14. Station bzw. STA, umfassend einen Prozessor und einen Speicher, wobei der Speicher dazu ausgelegt ist, ein Computerprogramm zu speichern, und der Prozessor dazu ausgelegt ist, das in dem Speicher gespeicherte Computerprogramm aufzurufen und auszuführen, um das Verfahren nach einem der Ansprüche 1 bis 5 zu implementieren.

15. Zugangspunkt bzw. AP, umfassend einen Prozessor und einen Speicher, wobei der Speicher dazu ausgelegt ist, ein Computerprogramm zu speichern, und der Prozessor dazu ausgelegt ist, das in dem Speicher gespeicherte Computerprogramm aufzurufen und auszuführen, um das Verfahren nach einem der Ansprüche 6 bis 13 zu implementieren.

## Revendications

1. Procédé de communication sans fil, comprenant :
la réception (S220), par une station, STA, de premières informations envoyées par un point d'accès, AP,
les premières informations comprenant des informations d'un ensemble candidat multi-AP auquel l'AP appartient, les informations de l'ensemble candidat multi-AP comprenant au moins l'un des éléments suivants : au moins un identifiant d'ensemble de services hérité, SSID, auquel l'AP appartient, un SSID d'au moins un ensemble de services de base virtuel, VBSS, auquel l'AP appartient, une période d'envoi d'informations correspondant au SSID d'au moins un VBSS, et des informations correspondant à un VBSS où l'AP est situé,
le SSID hérité étant une chaîne de caractères, la chaîne de caractères étant utilisée pour identifier des ensembles de services de base d'infrastructure, BSS, qui comprennent un ensemble de services étendu, ESS, ou la chaîne de caractères étant utilisée pour identifier un BSS non-infrastructure,
les premières informations étant envoyées par l'intermédiaire d'une première trame,
la première trame comprenant au moins l'un des éléments suivants : un premier champ SSID, W champ(s) d'identifiant SSID virtuel, VSSID, un champ d'intervalle VSSID, et un champ d'informations d'ensemble candidat multi-AP,
le premier champ SSID étant utilisé pour indiquer l'au moins un SSID hérité auquel l'AP appartient, le ou les W champ(s) VSSID étant utilisé(s) pour indiquer respectivement le ou les SSID de W VBSS auquel l'AP appartient, le champ d'intervalle VSSID étant utilisé pour indiquer la période d'envoi des informations correspondant au SSID d'au moins un VBSS, et le champ d'informations d'ensemble candidat multi-AP étant utilisé pour indiquer les informations correspondant au VBSS où l'AP est situé, W étant un entier positif,
le champ d'informations d'ensemble candidat multi-AP comprenant au moins un champ d'informations d'ensemble candidat et un champ de nombre d'ensembles candidats,
le champ de nombre d'ensembles candidats étant utilisé pour indiquer un nombre d'ensembles candidats multi-AP où l'AP est situé, et le champ de nombre d'ensembles candidats étant utilisé pour indiquer une valeur de W, un n-ième champ d'informations d'ensemble candidat de l'au moins un champ d'informations d'ensemble candidat étant utilisé pour indiquer des informations relatives d'un n-ième ensemble candidat multi-AP où l'AP est situé, n étant un entier positif,
**caractérisé en ce que** le ou les champ(s) d'informations d'ensemble candidat de l'au moins un champ d'informations d'ensemble candidat comprend ou comprennent au moins l'un des éléments suivants : un champ d'ID d'ensemble candidat, un champ de support de procédé de sondage multi-AP, un champ de support de schéma multi-AP, un champ de nombre d'AP, ou de multiples champs d'informations d'AP, ou
le ou les champ(s) d'informations d'ensemble candidat de l'au moins un champ d'informations d'ensemble candidat comprend ou comprennent au moins l'un des éléments suivants : le champ d'ID d'ensemble candidat, un champ de support de sondage conjoint multi-AP, le champ de support de schéma multi-AP, le champ de nombre d'AP, et les multiples champs d'informations d'AP,
le champ d'ID d'ensemble candidat étant utilisé pour indiquer un ID de l'ensemble candidat multi-AP correspondant au champ d'informations d'ensemble candidat actuel, le champ de support de procédé de sondage multi-AP étant utilisé pour indiquer un procédé de sondage de canal pris en charge par l'ensemble candidat multi-AP correspondant au champ d'informations d'ensemble candidat actuel, le champ de support de schéma multi-AP étant utilisé pour indiquer un mode de coordination multi-AP pris en charge par l'ensemble candidat multi-AP correspondant au champ d'informations d'ensemble candidat actuel, le champ de nombre d'AP étant utilisé pour indiquer un nombre d'AP membres compris dans l'ensemble candidat multi-AP correspondant au champ d'informations d'ensemble candidat actuel, un m-ième champ d'informations d'AP des multiples champs d'informations d'AP étant utilisé pour indiquer des informations relatives d'un m-ième AP membre de l'ensemble candidat multi-AP correspondant au champ d'informations d'ensemble candidat actuel, et le champ de support de sondage conjoint multi-AP étant utilisé pour indiquer si l'ensemble candidat multi-AP correspondant au champ d'informations d'ensemble candidat actuel prend en charge de multiples AP pour effectuer un sondage de canal simultanément et de manière synchrone, m étant un entier positif.

2. Procédé selon la revendication 1, avant la réception, par la STA, des premières informations, le procédé comprenant en outre :
l'envoi, par la STA, de secondes informations à l'AP, les secondes informations étant utilisées pour demander les informations d'ensemble candidat multi-AP, les secondes informations étant envoyées par l'intermédiaire d'une trame de requête de sonde,
la trame de requête de sonde comprenant au moins l'un parmi un champ SSID et un champ de liste SSID,
une première valeur d'un champ de longueur correspondant au champ SSID étant utilisée pour demander un premier SSID, le premier SSID étant un SSID hérité ou le premier SSID étant un SSID de VBSS ; et une seconde valeur du champ de longueur correspondant au champ SSID étant utilisée pour demander de multiples SSID, les multiples SSID étant tous les SSID hérités où l'AP est situé, ou les multiples SSID étant des SSID de tous les VBSS où l'AP est situé,
le champ de liste SSID étant utilisé pour demander au moins un SSID, l'au moins un SSID comprenant le ou les SSID hérité(s) et/ou le ou les SSID de VBSS.

3. Procédé selon la revendication 2, la trame de requête de sonde comprenant en outre un champ de demande d'informations d'ensemble candidat multi-AP, et le champ de demande d'informations d'ensemble candidat multi-AP comprenant un champ d'indicateur de SSID supplémentaire, le champ d'indicateur de SSID supplémentaire étant utilisé pour ordonner à l'AP de renvoyer, à la STA, des SSID de VBSS et tous les SSID hérités où l'AP est situé ; ou le champ d'indicateur de SSID supplémentaire étant utilisé pour ordonner à l'AP de renvoyer, à la STA, des SSID de tous les VBSS où l'AP est situé, et de ne renvoyer aucun SSID hérité à la STA.

4. Procédé selon la revendication 1, le champ de support de schéma multi-AP comprenant au moins l'un des éléments suivants : un champ d'accès multiple par répartition orthogonale de la fréquence coordonné de liaison montante, UL, C-OFDMA, un champ C-OFDMA de liaison descendante, DL, un champ de réutilisation spatiale coordonnée conjointe, C-SR, et C-OFDMA, un champ C-SR conjoint et formation de faisceaux coordonnée, C-BF, un champ C-SR conjoint et transmission conjointe, J-TX, un champ C-SR conjoint et entrées multiples sorties multiples multi-utilisateurs de liaison montante coordonnées, C-UL MU MIMO, un champ C-BF, un champ J-TX pour utilisateur unique, un champ J-TX pour multi-utilisateurs, un champ J-TX avec diversité, un champ J-TX avec multiplexage, un champ J-TX de pleine bande passante, un champ J-TX de bande passante partielle, un champ de détection et rejet, et un champ d'atténuation en tant qu'interférence ; ou
le champ de support de schéma multi-AP comprenant au moins l'un des éléments suivants : le champ C-SR conjoint et C-OFDMA, le champ C-SR conjoint et C-BF, le champ C-SR conjoint et J-TX, le champ C-SR conjoint et C-UL MU MIMO, le champ C-BF, le champ J-TX pour utilisateur unique, le champ J-TX pour multi-utilisateurs, le champ J-TX avec diversité, le champ J-TX avec multiplexage, le champ J-TX de pleine bande passante, le champ J-TX de bande passante partielle, le champ de détection et rejet, et le champ d'atténuation en tant qu'interférence,
le champ UL C-OFDMA étant utilisé pour indiquer si l'ensemble candidat multi-AP correspondant au champ d'informations d'ensemble candidat actuel prend en charge UL C-OFDMA, le champ DL C-OFDMA étant utilisé pour indiquer si l'ensemble candidat multi-AP correspondant au champ d'informations d'ensemble candidat actuel prend en charge DL C-OFDMA, le champ C-SR conjoint et C-OFDMA étant utilisé pour indiquer si l'ensemble candidat multi-AP correspondant au champ d'informations d'ensemble candidat actuel prend en charge l'utilisation simultanée et conjointe de C-SR et C-OFDMA, le champ C-SR conjoint et C-BF étant utilisé pour indiquer si l'ensemble candidat multi-AP correspondant au champ d'informations d'ensemble candidat actuel prend en charge l'utilisation simultanée et conjointe de C-SR et C-BF, le champ C-SR conjoint et J-TX étant utilisé pour indiquer si l'ensemble candidat multi-AP correspondant au champ d'informations d'ensemble candidat actuel prend en charge l'utilisation simultanée et conjointe de C-SR et J-TX, le champ C-SR conjoint et C-UL MU MIMO étant utilisé pour indiquer si l'ensemble candidat multi-AP correspondant au champ d'informations d'ensemble candidat actuel prend en charge l'utilisation simultanée et conjointe de C-SR et C-UL MU MIMO, le champ C-BF étant utilisé pour indiquer si l'ensemble candidat multi-AP correspondant au champ d'informations d'ensemble candidat actuel prend en charge C-BF, le champ J-TX pour utilisateur unique étant utilisé pour indiquer si l'ensemble candidat multi-AP correspondant au champ d'informations d'ensemble candidat actuel prend en charge l'exécution d'une transmission conjointe pour un même utilisateur, le champ J-TX pour multi-utilisateurs étant utilisé pour indiquer si l'ensemble candidat multi-AP correspondant au champ d'informations d'ensemble candidat actuel prend en charge l'exécution d'une transmission conjointe pour de multiples utilisateurs, le champ J-TX avec diversité étant utilisé pour indiquer si l'ensemble candidat multi-AP correspondant au champ d'informations d'ensemble candidat actuel prend en charge une transmission conjointe de type diversité, le champ J-TX avec multiplexage étant utilisé pour indiquer si l'ensemble candidat multi-AP correspondant au champ d'informations d'ensemble candidat actuel prend en charge une transmission conjointe de type multiplexage, le champ J-TX de pleine bande passante étant utilisé pour indiquer si l'ensemble candidat multi-AP correspondant au champ d'informations d'ensemble candidat actuel prend en charge une transmission conjointe en pleine bande passante, le champ J-TX de bande passante partielle étant utilisé pour indiquer si l'ensemble candidat multi-AP correspondant au champ d'informations d'ensemble candidat actuel prend en charge une transmission conjointe en bande passante partielle, le champ de détection et rejet étant utilisé pour indiquer si l'ensemble candidat multi-AP correspondant au champ d'informations d'ensemble candidat actuel prend en charge la réception et la démodulation de données/trames d'autres utilisateurs puis le rejet dans un mode C-UL-MU MIMO, pour obtenir des données/trames utiles, et le champ d'atténuation en tant qu'interférence étant utilisé pour indiquer si l'ensemble candidat multi-AP correspondant au champ d'informations d'ensemble candidat actuel prend en charge le traitement des données d'autres utilisateurs en tant qu'interférence directement, et la réception et la démodulation de données/trame d'un utilisateur cible directement dans le mode C-UL-MU MIMO.

5. Procédé selon la revendication 4, dans le cas où le champ de support de schéma multi-AP ne comprend pas le champ UL C-OFDMA et le champ DL C-OFDMA, l'ensemble candidat multi-AP correspondant au champ d'informations d'ensemble candidat actuel prenant en charge UL C-OFDMA et DL C-OFDMA par défaut.

6. Procédé de communication sans fil, comprenant :
l'envoi (S210), par un point d'accès, AP, de premières informations à une station, STA,
les premières informations comprenant des informations d'un ensemble candidat multi-AP auquel l'AP appartient, les informations de l'ensemble candidat multi-AP comprenant au moins l'un des éléments suivants : au moins un identifiant d'ensemble de services hérité, SSID, auquel l'AP appartient, un SSID d'au moins un ensemble de services de base virtuel, VBSS, auquel l'AP appartient, une période d'envoi d'informations correspondant au SSID d'au moins un VBSS, et des informations correspondant à un VBSS où l'AP est situé,
le SSID hérité étant une chaîne de caractères, la chaîne de caractères étant utilisée pour identifier des ensembles de services de base d'infrastructure, BSS, qui comprennent un ensemble de services étendu, ESS, ou la chaîne de caractères étant utilisée pour identifier un BSS non-infrastructure,
les premières informations étant envoyées par l'intermédiaire d'une première trame,
la première trame comprenant au moins l'un des éléments suivants : un premier champ SSID, W champ(s) d'identifiant SSID virtuel, VSSID, un champ d'intervalle VSSID, et un champ d'informations d'ensemble candidat multi-AP,
le premier champ SSID étant utilisé pour indiquer l'au moins un SSID hérité auquel l'AP appartient, le ou les W champ(s) VSSID étant utilisé(s) pour indiquer respectivement le ou les SSID de W VBSS auquel l'AP appartient, le champ d'intervalle VSSID étant utilisé pour indiquer la période d'envoi des informations correspondant au SSID d'au moins un VBSS, et le champ d'informations d'ensemble candidat multi-AP étant utilisé pour indiquer les informations correspondant au VBSS où l'AP est situé, W étant un entier positif,
le champ d'informations d'ensemble candidat multi-AP comprenant au moins un champ d'informations d'ensemble candidat et un champ de nombre d'ensembles candidats,
le champ de nombre d'ensembles candidats étant utilisé pour indiquer un nombre d'ensembles candidats multi-AP où l'AP est situé, et le champ de nombre d'ensembles candidats étant utilisé pour indiquer une valeur de W, un n-ième champ d'informations d'ensemble candidat de l'au moins un champ d'informations d'ensemble candidat étant utilisé pour indiquer des informations relatives d'un n-ième ensemble candidat multi-AP où l'AP est situé, n étant un entier positif,
**caractérisé en ce que** le ou les champ(s) d'informations d'ensemble candidat de l'au moins un champ d'informations d'ensemble candidat comprend ou comprennent au moins l'un des éléments suivants : un champ d'ID d'ensemble candidat, un champ de support de procédé de sondage multi-AP, un champ de support de schéma multi-AP, un champ de nombre d'AP, ou de multiples champs d'informations d'AP, ou
le ou les champ(s) d'informations d'ensemble candidat de l'au moins un champ d'informations d'ensemble candidat comprend ou comprennent au moins l'un des éléments suivants : le champ d'ID d'ensemble candidat, un champ de support de sondage conjoint multi-AP, le champ de support de schéma multi-AP, le champ de nombre d'AP, et les multiples champs d'informations d'AP,
le champ d'ID d'ensemble candidat étant utilisé pour indiquer un ID de l'ensemble candidat multi-AP correspondant au champ d'informations d'ensemble candidat actuel, le champ de support de procédé de sondage multi-AP étant utilisé pour indiquer un procédé de sondage de canal pris en charge par l'ensemble candidat multi-AP correspondant au champ d'informations d'ensemble candidat actuel, le champ de support de schéma multi-AP étant utilisé pour indiquer un mode de coordination multi-AP pris en charge par l'ensemble candidat multi-AP correspondant au champ d'informations d'ensemble candidat actuel, le champ de nombre d'AP étant utilisé pour indiquer un nombre d'AP membres compris dans l'ensemble candidat multi-AP correspondant au champ d'informations d'ensemble candidat actuel, un m-ième champ d'informations d'AP des multiples champs d'informations d'AP étant utilisé pour indiquer des informations relatives d'un m-ième AP membre de l'ensemble candidat multi-AP correspondant au champ d'informations d'ensemble candidat actuel, et le champ de support de sondage conjoint multi-AP étant utilisé pour indiquer si l'ensemble candidat multi-AP correspondant au champ d'informations d'ensemble candidat actuel prend en charge de multiples AP pour effectuer un sondage de canal simultanément et de manière synchrone, m étant un entier positif.

7. Procédé selon la revendication 6, avant la réception, par la STA, des premières informations, le procédé comprenant en outre :
la réception, par l'AP, de secondes informations envoyées par la STA, les secondes informations étant utilisées pour demander les informations d'ensemble candidat multi-AP, les secondes informations étant envoyées par l'intermédiaire d'une trame de requête de sonde,
la trame de requête de sonde comprenant au moins l'un parmi un champ SSID et un champ de liste SSID,
une première valeur d'un champ de longueur correspondant au champ SSID étant utilisée pour demander un premier SSID, le premier SSID étant un SSID hérité ou le premier SSID étant un SSID de VBSS ; et une seconde valeur du champ de longueur correspondant au champ SSID étant utilisée pour demander de multiples SSID, les multiples SSID étant tous les SSID hérités où l'AP est situé, ou les multiples SSID étant des SSID de tous les VBSS où l'AP est situé,
le champ de liste SSID étant utilisé pour demander au moins un SSID, l'au moins un SSID comprenant le ou les SSID hérité(s) et/ou le ou les SSID de VBSS.

8. Procédé selon la revendication 7, la trame de requête de sonde comprenant en outre un champ de demande d'informations d'ensemble candidat multi-AP, et le champ de demande d'informations d'ensemble candidat multi-AP comprenant un champ d'indicateur de SSID supplémentaire, le champ d'indicateur de SSID supplémentaire étant utilisé pour ordonner à l'AP de renvoyer, à la STA, des SSID de VBSS et tous les SSID hérités où l'AP est situé ; ou le champ d'indicateur de SSID supplémentaire étant utilisé pour ordonner à l'AP de renvoyer, à la STA, des SSID de tous les VBSS où l'AP est situé, et de ne renvoyer aucun SSID hérité à la STA.

9. Procédé selon la revendication 6, comprenant en outre :
la réception, par l'AP, d'une trame de requête d'association envoyée par la STA, la trame de requête d'association étant utilisée pour demander une association avec l'AP, la trame de requête d'association comprenant au moins une information d'indication, l'au moins une information d'indication étant utilisée pour indiquer au moins l'un parmi : un SSID d'au moins un VBSS avec lequel la STA demande à être associée, et au moins un SSID hérité avec lequel la STA demande à être associée ; le SSID hérité étant une chaîne de caractères, la chaîne de caractères étant utilisée pour identifier des ensembles de services de base d'infrastructure, BSS, qui comprennent un ensemble de services étendu, ESS, ou la chaîne de caractères étant utilisée pour identifier un BSS non-infrastructure ; et
l'envoi, par l'AP, d'une trame de réponse d'association à la STA, la trame de réponse d'association comprenant au moins des informations d'identifiant d'association, AID, correspondant au ou aux SSID hérité(s) avec lequel ou lesquels la STA demande à être associée et/ou des informations d'AID virtuel, VAID, correspondant au ou aux SSID de VBSS avec lequel ou lesquels la STA demande à être associée.

10. Procédé selon la revendication 9, la trame de réponse d'association comprenant en outre des informations d'identifiant, ID, de détenteur de clé de coordinateur et des informations de procédé de génération de clé, les informations d'ID de détenteur de clé de coordinateur étant configurées pour générer une clé transitoire par paire, PTK, et une clé maître par paire, PMK, entre la STA et le coordinateur.

11. Procédé selon la revendication 9, comprenant en outre :
l'envoi, par l'AP, d'informations partagées à un second AP, le second AP et l'AP appartenant à un même SSID hérité, ou le second AP et l'AP appartenant à un même SSID de VBSS, les informations partagées comprenant une adresse de commande d'accès au support, MAC, de la STA et/ou des informations de capacité de coordination multi-AP de la STA ; et
la réception, par l'AP, d'informations de confirmation envoyées par le second AP, les informations de confirmation étant utilisées pour indiquer si le second AP accepte une demande d'association de la STA.

12. Procédé selon la revendication 6, le champ de support de schéma multi-AP comprenant au moins l'un des éléments suivants : un champ d'accès multiple par répartition orthogonale de la fréquence coordonné de liaison montante, UL, C-OFDMA, un champ C-OFDMA de liaison descendante, DL, un champ de réutilisation spatiale coordonnée conjointe, C-SR, et C-OFDMA, un champ C-SR conjoint et formation de faisceaux coordonnée, C-BF, un champ C-SR conjoint et transmission conjointe, J-TX, un champ C-SR conjoint et entrées multiples sorties multiples multi-utilisateurs de liaison montante coordonnées, C-UL MU MIMO, un champ C-BF, un champ J-TX pour utilisateur unique, un champ J-TX pour multi-utilisateurs, un champ J-TX avec diversité, un champ J-TX avec multiplexage, un champ J-TX de pleine bande passante, un champ J-TX de bande passante partielle, un champ de détection et rejet, et un champ d'atténuation en tant qu'interférence ; ou
le champ de support de schéma multi-AP comprenant au moins l'un des éléments suivants : le champ C-SR conjoint et C-OFDMA, le champ C-SR conjoint et C-BF, le champ C-SR conjoint et J-TX, le champ C-SR conjoint et C-UL MU MIMO, le champ C-BF, le champ J-TX pour utilisateur unique, le champ J-TX pour multi-utilisateurs, le champ J-TX avec diversité, le champ J-TX avec multiplexage, le champ J-TX de pleine bande passante, le champ J-TX de bande passante partielle, le champ de détection et rejet, et le champ d'atténuation en tant qu'interférence,
le champ UL C-OFDMA étant utilisé pour indiquer si l'ensemble candidat multi-AP correspondant au champ d'informations d'ensemble candidat actuel prend en charge UL C-OFDMA, le champ DL C-OFDMA étant utilisé pour indiquer si l'ensemble candidat multi-AP correspondant au champ d'informations d'ensemble candidat actuel prend en charge DL C-OFDMA, le champ C-SR conjoint et C-OFDMA étant utilisé pour indiquer si l'ensemble candidat multi-AP correspondant au champ d'informations d'ensemble candidat actuel prend en charge l'utilisation simultanée et conjointe de C-SR et C-OFDMA, le champ C-SR conjoint et C-BF étant utilisé pour indiquer si l'ensemble candidat multi-AP correspondant au champ d'informations d'ensemble candidat actuel prend en charge l'utilisation simultanée et conjointe de C-SR et C-BF, le champ C-SR conjoint et J-TX étant utilisé pour indiquer si l'ensemble candidat multi-AP correspondant au champ d'informations d'ensemble candidat actuel prend en charge l'utilisation simultanée et conjointe de C-SR et J-TX, le champ C-SR conjoint et C-UL MU MIMO étant utilisé pour indiquer si l'ensemble candidat multi-AP correspondant au champ d'informations d'ensemble candidat actuel prend en charge l'utilisation simultanée et conjointe de C-SR et C-UL MU MIMO, le champ C-BF étant utilisé pour indiquer si l'ensemble candidat multi-AP correspondant au champ d'informations d'ensemble candidat actuel prend en charge C-BF, le champ J-TX pour utilisateur unique étant utilisé pour indiquer si l'ensemble candidat multi-AP correspondant au champ d'informations d'ensemble candidat actuel prend en charge l'exécution d'une transmission conjointe pour un même utilisateur, le champ J-TX pour multi-utilisateurs étant utilisé pour indiquer si l'ensemble candidat multi-AP correspondant au champ d'informations d'ensemble candidat actuel prend en charge l'exécution d'une transmission conjointe pour de multiples utilisateurs, le champ J-TX avec diversité étant utilisé pour indiquer si l'ensemble candidat multi-AP correspondant au champ d'informations d'ensemble candidat actuel prend en charge une transmission conjointe de type diversité, le champ J-TX avec multiplexage étant utilisé pour indiquer si l'ensemble candidat multi-AP correspondant au champ d'informations d'ensemble candidat actuel prend en charge une transmission conjointe de type multiplexage, le champ J-TX de pleine bande passante étant utilisé pour indiquer si l'ensemble candidat multi-AP correspondant au champ d'informations d'ensemble candidat actuel prend en charge une transmission conjointe en pleine bande passante, le champ J-TX de bande passante partielle étant utilisé pour indiquer si l'ensemble candidat multi-AP correspondant au champ d'informations d'ensemble candidat actuel prend en charge une transmission conjointe en bande passante partielle, le champ de détection et rejet étant utilisé pour indiquer si l'ensemble candidat multi-AP correspondant au champ d'informations d'ensemble candidat actuel prend en charge la réception et la démodulation de données/trames d'autres utilisateurs puis le rejet dans un mode C-UL-MU MIMO, pour obtenir des données/trames utiles, et le champ d'atténuation en tant qu'interférence étant utilisé pour indiquer si l'ensemble candidat multi-AP correspondant au champ d'informations d'ensemble candidat actuel prend en charge le traitement des données d'autres utilisateurs en tant qu'interférence directement, et la réception et la démodulation de données/trame d'un utilisateur cible directement dans le mode C-UL-MU MIMO.

13. Procédé selon la revendication 12, dans le cas où le champ de support de schéma multi-AP ne comprend pas le champ UL C-OFDMA et le champ DL C-OFDMA, l'ensemble candidat multi-AP correspondant au champ d'informations d'ensemble candidat actuel prenant en charge UL C-OFDMA et DL C-OFDMA par défaut.

14. Station, STA, comprenant un processeur et une mémoire, la mémoire étant configurée pour stocker un programme informatique, et le processeur étant configuré pour appeler et exécuter le programme informatique stocké dans la mémoire pour mettre en œuvre le procédé selon l'une quelconque des revendications 1 à 5.

15. Point d'accès, AP, comprenant un processeur et une mémoire, la mémoire étant configurée pour stocker un programme informatique, et le processeur étant configuré pour appeler et exécuter le programme informatique stocké dans la mémoire pour mettre en œuvre le procédé selon l'une quelconque des revendications 6 à 13.
